# EUROPÄISCHE PATENTSCHRIFT

(11) **EP 2 672 753 B1**
(45) Veröffentlichungstag und Bekanntmachung des Hinweises auf die Patenterteilung: **01.05.2019**
(21) Anmeldenummer: 13002796.4
(22) Anmeldetag: 29.05.2013
(51) Int. Cl.: H04W 36/00, H04W 36/32

(54) **Verfahren zum Betrieb eines mobilen Endgerätes in einem zellulären Kommunikationsnetz sowie ein mobiles Endgerät, eine Einrichtung eines Kommunikationsnetzes und ein System zur Ausführung des Verfahrens**
Method for operating a mobile terminal in a cellular communication network as well as a mobile end terminal, a device of a communication network and system for implementing the said method
Procédé de fonctionnement d'un terminal mobile dans un réseau de communication cellulaire et terminal mobile, dispositif d'un réseau de communication et système destiné à réaliser le procédé

(30) Priorität: 06.06.2012 DE 102012011243
(43) Veröffentlichungstag der Anmeldung: 11.12.2013
(73) Patentinhaber: Vodafone Holding GmbH, 40549 Düsseldorf (DE)
(72) Erfinder: Hellmann, Christoph, 41462 Neuss (DE)
(74) Vertreter: Ring & Weisbrodt

(56) Entgegenhaltungen:
- US-A1- 2009 017 823
- US-A1- 2011 053 596
- US-A1- 2011 171 960

## Beschreibung

Die vorliegende Erfindung betrifft ein Verfahren zum Betrieb eines in wenigstens einem Kommunikationsnetz betreibbaren mobilen Endgerätes für einen Verbindungswechsel in einem Kommunikationsnetz, wobei Funkzellen eines ersten Typs und Funkzellen eines zweiten Typs von dem wenigstens einen Kommunikationsnetz ausgebildet werden. In Ausführungsbeispielen der vorliegenden Erfindung können in Funkzellen des ersten Typs Sprach- und/oder Datenübertragungen gemäß eines ersten Übertragungsprotokolls durchführbar sein, und in Funkzellen des zweiten Typs können in Sprach- und/oder Datenübertragungen gemäß eines zweiten Übertragungsprotokolls durchführbar sein. In weiteren Ausführungsbeispielen der vorliegenden Erfindung können die Funkzellen des ersten Typs von einem ersten Kommunikationsnetzbetreiber, zum Beispiel einem ersten Mobilfunknetzbetreiber, betrieben werden und Sprach- und/oder Datenübertragungen gemäß eines ersten oder zweiten Übertragungsprotokolls durchführbar sein. Die Funkzellen des zweiten Typs können von einem zweiten Kommunikationsnetzbetreiber, zum Beispiel einem zweiten Mobilfunknetzbetreiber, betrieben werden. In diesen Ausführungsbeispielen können die Sprach- und/oder Datenübertragungen jedoch gemäß demselben ersten oder zweiten Übertragungsprotokoll wie in den Funkzellen des ersten Typs durchführbar sein.

Ausführungsbeispiele der vorliegenden Erfindung betreffen unter anderem auch ein Verfahren zum Betrieb eines mobilen Endgerätes in einem Kommunikationsnetz, wie zum Beispiel einem zellulären Mobilfunknetz, mit Funkzellen eines ersten Typs, zum Beispiel gemäß einem ersten Mobilfunkstandard, und Funkzellen eines zweiten Typs, zum Beispiel gemäß einem zweiten Mobilfunkstandard. Das mobile Endgerät kann für einen Betrieb sowohl gemäß dem ersten Mobilfunkstandard als auch gemäß dem zweiten Mobilfunkstandard ausgebildet sein, und das mobile Endgerät kann sich ferner in dem Versorgungsbereich einer Funkzelle gemäß dem ersten Mobilfunkstandard und dem Versorgungsbereich wenigstens einer weiteren Funkzelle gemäß dem zweiten Mobilfunkstandard befinden. Das mobile Endgerät nutzt die Funkzelle gemäß dem ersten Mobilfunkstandard für eine Datenverbindung und die Signalqualität macht in Bezug auf die genutzte Funkzelle gemäß dem ersten Mobilfunkstandard während der bestehenden Datenverbindung einen Verbindungswechsel in eine andere Funkzelle erforderlich. Die Terminologie "erster Mobilfunkstandard" und "zweiter Mobilfunkstandard" wird vorliegend für eine einfachere Lesbarkeit verwendet und soll zum Ausdruck bringen, dass es sich um zwei Mobilfunkstandards handelt, nämlich um einen Mobilfunkstandard und einen weiteren, sich von dem vorgenannten Mobilfunkstandard unterscheidenden Mobilfunkstandard. Eine Rangfolge soll durch die Terminologie "erster" und "zweiter" nicht festgelegt werden. Insbesondere soll die Terminologie "erster Mobilfunkstandard" nicht darauf hinweisen, dass es sich um einen gegenüber dem "zweiten Mobilfunkstandard" älteren Mobilfunkstandard handelt.

Vorgenannte Verfahren zum Betrieb eines mobilen Endgerätes in einem zellulären Mobilfunknetz sind im Stand der Technik bekannt. Da Nutzer von mobilen Endgeräten, wie zum Beispiel Mobilfunktelefonen, auch während einer bestehenden Kommunikationsverbindung ihren Standort bzw. ihren Aufenthaltsort ändern können, kann es während einer Verbindung vorkommen, dass sich der Nutzer mit seinem mobilen Endgerät aus dem Versorgungsbereich bzw. dem Empfangsbereich der Funkzelle bewegt, welche das mobile Endgerät für die aktuell bestehende Verbindung nutzt. Dabei kann die Signalqualität hinsichtlich des mit dem mobilen Endgerät empfangbaren Signalpegels der Funkzelle abnehmen. Bei der Verbindung kann es sich um eine Datenverbindung handeln, bei der Datenpakete, wie sie zum Beispiel zum Aufbau von Internetseiten, Bildern, Videos usw. versendet werden, uni- oder bidirektional übertragen werden. In derartigen Situationen muss ein Wechsel in eine Funkzelle mit einer besseren Signalqualität vollzogen werden. Ein solcher Wechsel von einer Funkzelle in eine andere wird auch als Handover oder Handoff bezeichnet. Das mobile Endgerät misst während einer bestehenden Kommunikationsverbindung üblicherweise die Signalstärke sowohl der Funkzelle, welche es für die Kommunikationsverbindung nutzt, als auch die Signalstärke weiterer im Empfangsbereich des mobilen Endgerätes befindlicher Funkzellen, wobei die Ergebnisse der Messungen dem Mobilfunknetz mitgeteilt werden, welches insbesondere anhand dieser Ergebnisse entscheidet, wann eine andere Funkzelle besser für die Weiterführung der Kommunikationsverbindung geeignet ist und einen entsprechenden Wechsel in diese Funkzelle veranlasst.

Ist an einem Standort grundsätzlich ein Betrieb eines mobilen Endgerätes sowohl gemäß einem ersten Mobilfunkstandard, wie z. B. UMTS (UMTS: Universal Mobile Telecommunications System), als auch gemäß einem zweiten Mobilfunkstandard, wie z. B. GSM (GSM: Global System for Mobile Communications) möglich, und ist das mobile Endgerät, wie insbesondere bei in Europa vertriebenen Mobilfunktelefonen heutzutage üblich, sowohl für einen Betrieb gemäß dem ersten Mobilfunkstandard als auch für einen Betrieb gemäß dem zweiten Mobilfunkstandard ausgebildet, so tritt häufig der Fall ein, dass ein Verbindungswechsel von einer Funkzelle gemäß dem ersten Mobilfunkstandard zu einer Funkzelle gemäß dem zweiten Mobilfunkstandard vollzogen wird. Ein solcher Wechsel wird auch als Intersystem-Handover bezeichnet. Der Fall eines Wechsels von einer Funkzelle gemäß einem ersten Mobilfunkstandard zu einer Funkzelle gemäß einem zweiten Mobilfunkstandard während einer bestehenden Kommunikationsverbindung tritt insbesondere dann auf, wenn das mobile Endgerät sich in dem Versorgungsbereich einer Funkzelle, das heißt einer einzigen Funkzelle, gemäß dem ersten Mobilfunkstandard und dem Versorgungsbereich wenigstens einer weiteren Funkzelle gemäß dem zweiten Mobilfunkstandard befindet und das mobile Endgerät die Funkzelle gemäß dem ersten Mobilfunkstandard für die Kommunikationsverbindung nutzt, wobei die Signalqualität in Bezug auf die genutzte Funkzelle gemäß dem ersten Mobilfunkstandard während der bestehenden Kommunikationsverbindung einen Verbindungswechsel in eine andere Funkzelle erforderlich macht. Dies kann beispielsweise der Fall sein, weil der Nutzer sich aus dem Versorgungsbereich der Funkzelle gemäß dem ersten Mobilfunkstandard bewegt oder weil sich die Größe der Funkzelle mit einer zunehmender Auslastung verringert (sogenannte "Zellatmung" oder auch "cell breathing"), was insbesondere bei Funkzellen von UMTS-Mobilfunknetzen auftreten kann. Da sich das mobile Endgerät gemäß den genannten Voraussetzungen nicht in dem Versorgungsbereich einer weiteren Funkzelle gemäß dem ersten Mobilfunkstandard befindet wohl aber in dem Versorgungsbereich einer weiteren Funkzelle gemäß dem zweiten Mobilfunkstandard, wird das Mobilfunknetz einen Wechsel von der Funkzelle gemäß dem ersten Mobilfunkstandard in die Funkzelle gemäß dem zweiten Mobilfunkstandard veranlassen, sodass nach dem erfolgten Wechsel ein Betrieb des mobilen Endgerätes in der Funkzelle gemäß dem zweiten Mobilfunkstandard möglich ist.

Ein solcher Wechsel von einer Funkzelle des ersten Typs zu einer Funkzelle des zweiten Typs während einer bestehenden Kommunikationsverbindung kann aber mitunter nachteilig sein. Dies wird nachfolgend beispielhaft anhand eines Wechsels von einer Funkzelle des ersten Typs, zum Beispiel gemäß einem UMTS-Mobilfunkstandard, zu einer Funkzelle eines zweiten Typs, zum Beispiel eines GSM-Mobilfunkstandards, erläutert. Unabhängig davon können die beschriebenen Nachteile, wenn auch mitunter in abgewandelter Form, grundsätzlich bei einem Wechsel von einer Funkzelle eines ersten Typs zu einer Funkzelle eines zweiten Typs auftreten. Bei den Funkzellen des ersten oder zweiten Typs kann es sich zum Beispiel auch um WLAN-, Hot-Spots-Funkzellen handeln. Die Funkzellen des ersten oder zweiten Typs können auch mobile Funkzellen gemäß der bekannten Mobilfunkstandards, wie zum Beispiel UMTS oder GSM und insbesondere auch gemäß eines LTE-Mobilfunkstandards (LTE: Long Term Evolution), eines CDMA2000-Mobilfunkstandards (CDMA: Code Division Multiple Access) oder eines sonstigen Mobilfunkstandards sein.

Nachteilig bei einem Wechsel von einer Funkzelle, beispielsweise gemäß einem UMTS-Mobilfunkstandard, zu einer Funkzelle gemäß einem GSM-Mobilfunkstandard während einer bestehenden Datenverbindung ist insbesondere die Verzögerung bei der Datenübertragung, die mit einem solchen Wechsel verbunden ist. Nutzt das mobile Endgerät zunächst eine Funkzelle im UMTS-Mobilfunknetz für eine Datenübertragung, wobei eine abnehmende Signalqualität in Bezug auf die genutzte Funkzelle einen Wechsel in eine andere Funkzelle erforderlich macht, die Signalqualität einer benachbarten Funkzelle des UMTS-Mobilfunknetzes aber noch nicht eine solche Güte aufweist, beziehungsweise der Signalpegel der Nachbarzelle noch nicht so stark ist, dass ein entsprechendes Signal der Nachbarzelle mittels des mobilen Endgerätes empfangbar ist, oder zumindest nicht so stark ist, dass es mittels des mobilen Endgerätes nutzbar ist, so wird ein Umschalten des mobilen Endgerätes zu einem GSM/GPRS-Betrieb (GPRS: General Packet Radio Service) und ein entsprechender Wechsel von der Funkzelle gemäß dem UMTS-Mobilfunkstandard zu der Funkzelle gemäß dem GSM-Mobilfunkstandard, also ein Intersystem-Handover, initiiert. Dies führt zu einem Abbruch der Datenverbindung in dem UMTS-Mobilfunknetz, welche nach vollzogenem Wechsel in die Funkzelle gemäß dem GSM-Standard wieder aufgebaut wird. Dieser Wechsel von UMTS zu GSM/GPRS zieht regelmäßig eine Unterbrechung der Datenverbindung von etwa 15 bis 20 Sekunden nach sich. Bei einem Wiedereintritt in den Versorgungsbereich einer Funkzelle des UMTS-Mobilfunknetzes, der oftmals bereits wenige Sekunden nach dem Austritt aus dem Versorgungsbereich einer Funkzelle des UMTS-Mobilfunknetzes erfolgt, wird dann ein erneuter Wechsel von der Funkzelle des GSM-Mobilfunknetzes zu einer Funkzelle gemäß dem UMTS-Mobilfunkstandard vollzogen, welcher üblicherweise innerhalb eines Zeitintervalls von 4 bis 7 Sekunden erfolgt, in welchem die Datenverbindung wiederum unterbrochen ist. Insgesamt ist die Datenverbindung somit für eine zeitliche Dauer von etwa 20 bis 30 Sekunden unterbrochen. Diese Unterbrechungsdauer sowie die gegenüber dem UMTS-Mobilfunkstandard langsamere Datenverbindung unter Nutzung des General Packet Radio Service im GSM-Mobilfunknetz führen zu einer nutzerseitig deutlich wahrnehmbaren und als äußerst störend empfundenen Verzögerung in Bezug auf die Datenübertragung.

Die US 2011/0171960 A1 offenbart Verfahren zur Verwaltung von vertikalen Handovern in einem drahtlosen Kommunikationsnetzwerk, umfassend die Analyse der Nutzung von Wireless-Geräten, um Nutzungsmuster zu ermitteln, welche Orte und Zeiten umfassen können, an denen das Wireless-Gerät typischerweise auf das Netzwerk zugreift. Das Netzwerk kann dabei Punkte in den Nutzungsmustern erkennen, an denen die Signalqualitätsparameter typischerweise reduziert werden. Solche Verringerungen der Signalqualitätsparameter können zu ineffiziente vertikalen Handovern führen. Das Netzwerk kann solche negativen Auswirkungen verringern, indem es den Ping-Pong-Effekt reduziert, Verbindungen zwischen drahtlosen Geräten und Netzwerkknoten auswählt oder einem Benutzer des drahtlosen Geräts anzeigt, dass Verzögerungen und/oder Datenverluste auftreten können.

Die US 2011/0053596 A1 offenbart Verfahren, welche den Übergang zwischen einer Femtozelle und einer umgebenden Makrozelle ermöglichen, wobei eine Domäne der umgebenden Makrozelle ermittelt und eine bevorzugte Domäne für die Kommunikation mit einem Benutzergerät ausgewählt wird, die teilweise auf der ermittelten Domäne basiert. Darüber hinaus kann eine bevorzugte Domänenauswahlkomponente verwendet werden, um die bevorzugte Domäne zu bestimmen, welche zum Teil auf verschiedenen Faktoren basiert, einschließlich der Wahrscheinlichkeit, dass eine Übergabe stattfindet, der geografischen Lage von Femtozelle und/oder Benutzergerät, der Bewegung von Benutzergerät, der bisherigen Kommunikation, den Präferenzen und/oder Richtlinien von Benutzern und/oder Dienstanbietern, Serviceanforderungen, Verhaltensmustern des Benutzergerätes usw.

Die US 2009/0017823 A1 offenbart eine Technik zur Nutzung einer Multi-Radio Management Resource (MRRM)-Komponente eines drahtlosen Multi-Radio Kommunikationssystems zur Steuerung des Handovers eines mobilen Endgeräts zwischen verschiedenen Funkzugangstechnologien (RAT). Dabei werden alle geeigneten RATs mit Versorgungsgebieten, die den Standort eines mobilen Terminals abdecken, identifiziert. Der Leistungsgewinn, welcher durch eine Übergabe an eine der anderen RATs erzielt werden kann, wird dann vom MRRM auf Basis verschiedener Leistungsgewinn-Faktoren bestimmt und Handoverkosten, welche durch das Handover entstehen, werden ebenfalls
explizit berechnet. Anschließend wird ein kostenbereinigter Gewinn durch das MRRM auf Basis des Leistungsgewinns und der Handoverkosten ermittelt, wobei ein Handover vom MRRM nur dann ausgelöst wird, wenn der kostenbereinigte Gewinn eine Mindestschwelle überschreitet.

Vor diesem Hintergrund liegt der vorliegenden Erfindung die Aufgabe zugrunde, ein eingangs genanntes Verfahren zum Betrieb eines in wenigstens einem Kommunikationsnetz betreibbaren mobilen Endgerätes für einen Verbindungswechsel in einem Kommunikationsnetz mit Funkzellen, wie zum Beispiel in einem zellulären Mobilfunknetz, zu verbessern. Dabei kann eine Verkürzung einer Verzögerung eines Datentransfers, insbesondere bei einem schnell erfolgenden Wiedereintritt in den Versorgungsbereich einer gleichartigen Funkzelle des Kommunikationsnetzes erreicht werden.

Zur technischen Lösung dieser Aufgabe wird mit der vorliegenden Erfindung ein Verfahren zum Betrieb eines in wenigstens einem Kommunikationsnetz betreibbaren mobilen Endgerätes für einen Verbindungswechsel in einem Kommunikationsnetz, wobei Funkzellen eines ersten Typs und Funkzellen eines zweiten Typs von wenigstens einem Kommunikationsnetz ausgebildet werden, wobei es sich bei den Funkzellen des ersten und des zweiten Typs um Funkzellen gemäß dem GSM-, UMTS-, CDMA2000-, LTE-Mobilfunkstandard, um WLAN- oder Hot-Spot-Funkzellen handelt, mit folgenden Schritten vorgeschlagen:
- Auswerten einer Information bezüglich des Aufenthaltsortes des mobilen Endgerätes in einem Versorgungsbereich einer Funkzelle des ersten Typs hinsichtlich eines innerhalb eines vordefinierten Zeitintervalls zu erwartenden Eintritts des mobilen Endgerätes in den Versorgungsbereich einer Funkzelle des ersten Typs, wobei das Auswerten teilweise seitens des mobilen Endgerätes und teilweise seitens des Kommunikationsnetzes erfolgt; und
- Unterdrücken eines Verbindungswechsels des mobilen Endgerätes in eine Funkzelle des zweiten Typs, falls, basierend auf dem Ergebnis der Auswertung, der Eintritt des mobilen Endgerätes in den Versorgungsbereich der Funkzelle des ersten Typs innerhalb des vordefinierten Zeitintervalls zu erwarten ist, wobei das Unterdrücken seitens des mobilen Endgerätes oder seitens einer Einrichtung des Kommunikationsnetzes erfolgt, wobei die Zeitdauer des vordefinierten Zeitintervalls geringer ist, als das für einen Verbindungswechsel von einer Funkzelle des ersten Typs zu einer Funkzelle des zweiten Typs benötigte Zeitintervall.

So kann ein mobiles Endgerät gemäß der vorliegenden Erfindung eine Datenverbindung über ein WLAN als Funkzelle eines ersten Typs nutzen. Als Funkzelle eines zweiten Typs kann dabei eine Funkzelle eines UMTS-Mobilfunknetzes zur Verfügung stehen. Erfindungsgemäß ist vorgesehen, dass bei Nichtverfügbarkeit der WLAN-Funkzelle, insbesondere aufgrund eines Austritts aus dem Versorgungsbereich, ein Verbindungswechsel in die UMTS-Funkzelle basierend auf einer prognostizierenden Auswertung unterdrückt wird, falls das Ergebnis der Auswertung den Eintritt des
mobilen Endgerätes in den Versorgungsbereich einer WLAN-Funkzelle innerhalb eines vordefinierten Zeitintervalls erwarten lässt.

Vorteilhafterweise wird die Unterdrückung des Verbindungswechsels in eine andere Funkzelle seitens des mobilen Endgerätes initiiert. Vorzugsweise wird insbesondere das Unterdrücken eines Wechsels in eine Funkzelle des zweiten Typs seitens des mobilen Endgerätes initiiert. Vorteilhafterweise sind kommunikationsnetzseitige Änderungen, insbesondere hinsichtlich durchzuführender Hand-over, nicht erforderlich. Im Rahmen der Initiierung des Verbindungswechsels ist in einer Ausgestaltungsvariante des Verfahrens vorgesehen, dass das mobile Endgerät, insbesondere unter Berücksichtigung der Ergebnisse der erfindungsgemäßen Auswertung, eine Mitteilung an das Kommunikationsnetz sendet, wobei der Empfang der Mitteilung seitens des Kommunikationsnetzes das Kommunikationsnetz veranlasst, einen Wechsel von einer Funkzelle des ersten Typs in eine Funkzelle des zweiten Typs nicht durchzuführen bzw. zu initiieren.

Eine weitere vorteilhafte Ausgestaltung der Erfindung sieht vor, dass das vordefinierte Zeitintervall einstell- und/oder anpassbar ist, vorzugsweise seitens des Kommunikationsnetzes und/oder seitens des mobilen Endgerätes. Vorteilhafterweise liegt die Zeitdauer des vordefinierten Zeitintervalls zwischen 10 und 30 Sekunden, zwischen 5 und 40 Sekunden oder zwischen 1 und 60 Sekunden. Vorzugsweise ist das vordefinierte Zeitintervall so bestimmt, dass dieses Zeitintervall kürzer ist, als das für einen Verbindungswechsel von einer Funkzelle des ersten Typs zu einer Funkzelle des zweiten Typs erforderliche bzw. benötigte Zeitintervall.

Gemäß einer weiteren vorteilhaften Ausgestaltung des erfindungsgemäßen Verfahrens wird im Rahmen der Auswertung ein Wahrscheinlichkeitswert für den Eintritt in den Versorgungsbereich einer Funkzelle des ersten Typs bestimmt, der bestimmte Wahrscheinlichkeitswert einem Vergleich mit einem vordefinierten Grenzwert unterzogen und bei Überschreiten des Grenzwertes ein Verbindungswechsel in eine Funkzelle des zweiten Typs unterdrückt, damit das mobile Endgerät innerhalb des vordefinierten Zeitintervalls eine Verbindung zu einer Funkzelle des ersten Typs aufbauen kann. Vorteilhafterweise ist der Grenzwert einstell- und/oder anpassbar, vorzugsweise seitens des Kommunikationsnetzbetreibers.

Vorteilhafterweis erfolgt die Unterdrückung eines Verbindungswechsels in einer Funkzelle des zweiten Typs für ein vordefiniertes weiteres Zeitintervall. Dieses Zeitintervall ist vorteilhafterweise ebenfalls einstellbar vorzugsweise für eine Zeitdauer zwischen 1 und 90 Sekunden.

Erfindungsgemäß ist vorzugsweise vorgesehen, dass eine Datenverbindung in einer Funkzelle des ersten Typs eine größere Bandbreite bereitstellt, als eine Datenverbindung in einer Funkzelle des zweiten Typs. Daher ist es besonders erstrebenswert, eine Datenverbindung in dem Versorgungsbereich einer Funkzelle des ersten Typs zu nutzen und aufrecht zu halten.

Gemäß einer weiteren vorteilhaften Ausgestaltung der Erfindung wird die erfindungsgemäße Auswertung unter Nutzung von ortsbezogenen Informationen hinsichtlich der Versorgungsbereiche von Funkzellen des ersten Typs durchgeführt, wobei die ortsbezogenen Informationen hinsichtlich der Versorgungsbereiche von Funkzellen des ersten Typs vorzugsweise Informationen hinsichtlich ortsbezogener Zellgrenzen der Funkzellen des ersten Typs umfassen. Vorteilhafterweise werden die ortsbezogenen Informationen hinsichtlich der Versorgungsbereiche von Funkzellen des ersten Typs zumindest teilweise seitens einer Speichereinrichtung des wenigstens einen Kommunikationsnetzes und/oder seitens einer Speichereinrichtung des mobilen Endgerätes bereitgestellt. Gemäß einer weiteren vorteilhaften Weiterbildung der Erfindung werden einem Aufenthaltsbereich eines mobilen Endgerätes zugeordnete Informationen bezüglich eines Eintritts in den Versorgungsbereich einer Funkzelle des ersten Typs seitens des mobilen Endgeräts und/oder seitens des wenigstens einen Kommunikationsnetzes als weitere ortsbezogene Informationen hinsichtlich der Versorgungsbereiche von Funkzellen des ersten Typs erfasst. Vorzugsweise umfassen die erfassten Informationen einem Aufenthaltsbereich zugeordnete Informationen hinsichtlich der Signalqualität einer Funkzelle des ersten Typs.

Gemäß einem weiteren vorteilhaften Aspekt der Erfindung werden die erfassten Informationen den seitens der Speichereinrichtung des wenigstens einen Kommunikationsnetzes und/oder der Speichereinrichtung des mobilen Endgerätes bereitgestellten ortsbezogenen Informationen hinsichtlich der Versorgungsbereiche von Funkzellen des ersten Typs hinzugefügt oder bereits vorhandene ortsbezogene Informationen hinsichtlich des Versorgungsbereichs von Funkzellen des ersten Typs unter Berücksichtigung der erfassten Information angepasst. Vorzugsweise werden Änderungen in Bezug auf ortsbezogene Informationen hinsichtlich der Versorgungsbereiche von Funkzellen des ersten Typs zumindest teilweise automatisch bei der Auswertung und/oder Definition des Zeitintervalls berücksichtigt. Ferner wird vorgeschlagen, dass vorteilhafterweise zumindest die ortsbezogenen Informationen hinsichtlich der Versorgungsbereiche von Funkzellen des ersten Typs zwischen dem wenigstens einen Kommunikationsnetz und dem mobilen Endgerät vorteilhafterweise synchronisiert werden.

Gemäß einer weiteren vorteilhaften Ausgestaltung der Erfindung umfassen die Informationen bezüglich des Aufenthaltsortes des mobilen Endgerätes zumindest Informationen hinsichtlich des aktuellen Aufenthaltsortes des mobilen Endgerätes, hinsichtlich der aktuellen Richtung, in welche das mobile Endgerät seinen Aufenthaltsort ändert, hinsichtlich der aktuellen Geschwindigkeit, mit welcher das mobile Endgerät seinen Aufenthaltsort ändert und/oder zeitlich zurückliegende Informationen hinsichtlich des Aufenthaltsortes, der Richtung und/oder der Geschwindigkeit.

Als besonders vorteilhafte Ausgestaltung der Erfindung ist vorgesehen, dass das Kommunikationsnetz ein Mobilfunknetz ist, die Funkzelle des ersten Typs eine Funkzelle gemäß einem ersten Mobilfunkstandard ist, die Funkzelle des zweiten Typs eine Funkzelle gemäß einem zweiten Mobilfunkstandard ist und das mobile Endgerät für einen Betrieb sowohl gemäß dem ersten Mobilfunkstandard als auch gemäß dem zweiten Mobilfunkstandard ausgebildet ist.

Als besonders bevorzugte Ausgestaltungsvariante der Erfindung wird ein Verfahren zum Betrieb eines mobilen Endgerätes in einem zellulären Mobilfunknetz mit Funkzellen gemäß einem ersten Mobilfunkstandard und Funkzellen gemäß einem zweiten Mobilfunkstandard vorgeschlagen, wobei das mobile Endgerät sich in dem Versorgungsbereich einer Funkzelle gemäß dem ersten Mobilfunkstandard und dem Versorgungsbereich wenigstens einer weiteren Funkzelle gemäß dem zweiten Mobilfunkstandard befindet, das mobile Endgerät die Funkzelle gemäß dem ersten Mobilfunkstandard für eine Datenverbindung nutzt und die Signalqualität in Bezug auf die genutzte Funkzelle gemäß dem ersten Mobilfunkstandard während der bestehenden Datenverbindung einen Verbindungswechsel in eine andere Funkzelle erforderlich macht, welches dadurch gekennzeichnet ist, dass eine prognostizierende Auswertung hinsichtlich eines innerhalb eines vordefinierten Zeitintervalls erfolgenden Wiedereintritts in den Versorgungsbereich einer Funkzelle gemäß dem ersten Mobilfunkstandard durchgeführt wird und bei auf der Auswertung beruhender Feststellung, dass ein Wiedereintritt in den Versorgungsbereich einer Funkzelle gemäß dem ersten Mobilfunkstandard innerhalb des vordefinierten Zeitintervalls erfolgen wird, ein Verbindungswechsel in eine Funkzelle gemäß dem zweiten Mobilfunkstandard unterdrückt wird, damit das mobile Endgerät innerhalb des vordefinierten Zeitintervalls eine Verbindung zu einer Funkzelle gemäß dem ersten Mobilfunkstandard aufbauen kann.

Die vorliegende Erfindung nutzt die Erkenntnis, dass zwischen einem Austritt aus dem Versorgungsbereich einer Funkzelle eines ersten Typs, beispielsweise gemäß einem ersten Mobilfunkstandard, wie insbesondere einem UMTS-Mobilfunkstandard, und dem Wiedereintritt in den Versorgungsbereich einer Funkzelle des ersten Typs oftmals nur wenige Sekunden liegen. Insofern ist eine Datenübertragung unter Nutzung des erfindungsgemäßen Verfahrens insbesondere dann weniger verzögert, wenn das mobile Endgerät sich in nächster Nähe zu dem Versorgungsbereich einer Funkzelle des ersten Typs befindet und die Signalqualität, beispielsweise durch Abschattung des Signals, nur kurzzeitig einen Verbindungswechsel in eine andere Funkzelle, nämlich eine Funkzelle des zweiten Typs, beispielsweise eine Funkzelle gemäß dem zweiten Mobilfunkstandard erforderlich macht. Eine kurze Unterbrechung der Datenverbindung durch einen Signalverlust in dem Mobilfunknetz gemäß dem ersten Mobilfunkstandard und ein nahezu unmittelbar erfolgender Wiedereintritt in den Versorgungsbereich einer Funkzelle gemäß dem ersten Mobilfunkstandard und einer damit verbundenen Wiederaufnahme der Datenverbindung in dem Mobilfunknetz gemäß dem ersten Mobilfunkstandard ist dann, wie sich überraschend gezeigt hat, wesentlich schneller durchgeführt, als der Systemwechsel von dem ersten Mobilfunkstandard zu dem zweiten Mobilfunkstandard in Verbindung mit einer Aufnahme der Datenverbindung in dem Mobilfunknetz gemäß dem zweiten Mobilfunkstandard und einem erneuten Systemwechsel von dem zweiten Mobilfunkstandard zurück zu dem ersten Mobilfunkstandard sowie einer Wiederaufnahme der Datenverbindung in dem Mobilfunknetz gemäß dem ersten Mobilfunkstandard. Dieser positive Effekt lässt sich erkenntnisgemäß besonders vorteilhaft nutzen, wenn, vorteilhafterweise seitens des mobilen Endgerätes, also ein Wechsel von einer Funkzelle gemäß dem ersten Mobilfunkstandard in eine Funkzelle gemäß dem zweiten Mobilfunkstandard unterdrückt, also verhindert wird, sodass ein Wechsel in eine Funkzelle gemäß dem zweiten Mobilfunkstandard nicht erfolgt.

Eine besonders bevorzugte weitere Ausgestaltung der Erfindung sieht vor, dass die Auswertung unter Nutzung von ortsbezogenen Informationen hinsichtlich der Versorgungsbereiche von Funkzellen gemäß dem ersten Mobilfunkstandard und unter Nutzung von Informationen zum bzw. hinsichtlich des Aufenthaltsortes des mobilen Endgerätes durchgeführt wird.

Dies beruht auf der weiteren Erkenntnis, dass eine Entscheidung dahingehend, ob ein Wechsel von einer Funkzelle gemäß einem ersten Mobilfunkstandard in eine Funkzelle gemäß einem zweiten Mobilfunkstandard erfolgen soll oder nicht, und somit in letzterem Fall ein Wechsel in eine Funkzelle gemäß dem zweiten Mobilfunknetz unterdrückt werden soll, besonders vorteilhaft unter Berücksichtigung bzw. Nutzung des aktuellen Aufenthaltsortes, insbesondere eines durch geographische Koordinaten bestimmten Aufenthaltsortes, des mobilen Endgerätes und unter Berücksichtigung beziehungsweise Nutzung von erfassten, ortsbezogenen Daten hinsichtlich des Versorgungsbereiches weiterer Funkzellen gemäß dem ersten Mobilfunkstandard beziehungsweise hinsichtlich der Signalqualität von einer Funkzelle gemäß dem ersten Mobilfunkstandard zugeordneten Signalen getroffen werden kann. Die Nutzung von ortsbezogenen Informationen hinsichtlich der Versorgungsbereiche von Funkzellen gemäß dem ersten Mobilfunkstandard und die Nutzung von Informationen zum bzw. hinsichtlich des Aufenthaltsortes des mobilen Endgerätes ermöglicht es dabei vorteilhafterweise, eine Entscheidung, ob ein Wechsel in eine Funkzelle gemäß einem zweiten Mobilfunkstandard erfolgen oder unterdrückt werden soll, mit hoher Zuverlässigkeit dahingehend zu treffen, dass eine auftretende Verzögerungszeit bei der Datenübertragung minimal ist.

Die vorgenannte Ausgestaltung ist zudem besonders vorteilhaft, da die Signalqualität in Bezug auf die genutzte Funkzelle gemäß dem ersten Mobilfunkstandard während der bestehenden Datenverbindung einen Verbindungswechsel in eine andere Funkzelle oftmals dann erforderlich macht, wenn das mobile Endgerät seinen Aufenthaltsort ändert und sich dabei aus dem Versorgungsbereich einer Funkzelle gemäß dem ersten Mobilfunkstandard bewegt. Die vorliegende Erfindung ist insofern besonders vorteilhaft, wenn ein Nutzer eines entsprechenden mobilen Endgerätes mit Verkehrsmitteln, wie Bahn oder Auto, unterwegs ist, da aufgrund der relativ hohen Reisegeschwindigkeit und der somit schnell zurückgelegten Wegstrecken häufig ein Verbindungswechsel in eine andere Funkzelle erforderlich ist. Das erfindungsgemäße Verfahren ermöglicht es dabei vorteilhafterweise basierend auf Orts-, Bewegungs-, Funkzellenwechsel- und/oder Geodaten als ortsbezogene Informationen hinsichtlich der Versorgungsbereiche von Funkzellen des ersten Typs bzw. gemäß dem ersten Mobilfunkstandard und als Informationen hinsichtlich des Aufenthaltsortes bzw. Informationen zum Aufenthaltsort des mobilen Endgerätes einen zu erwartenden zukünftigen Funkzellenwechsel vorauszubestimmen und einen zu erwartenden Systemwechsel von einer Funkzelle des ersten Typs bzw. gemäß einem ersten Mobilfunkstandard zu einer Funkzelle des zweiten Typs bzw. gemäß einem zweiten Mobilfunkstandard zu unterdrücken, um eine kürzere Unterbrechung einer Datenverbindung beziehungsweise eine kürzere Verzögerung bei einer Datenübertragung während einer bestehenden Datenverbindung zu realisieren.

Erfindungsgemäß umfassen ortsbezogene Informationen hinsichtlich der Versorgungsbereiche von Funkzellen gemäß dem ersten Mobilfunkstandard vorteilhafterweise geographischen Koordinaten und/oder durch geographische Koordinaten definierten Bereichen, beispielsweise Planquadraten, zugeordnete Informationen hinsichtlich der Signalqualität in Bezug auf eine Nutzung einer Funkzelle mittels eines mobilen Endgerätes, insbesondere dahingehend, ob bezogen auf einen Ort eine Nutzung einer Funkzelle gemäß dem ersten Mobilfunkstandard mittels eines mobilen Endgerätes möglich ist. Vorteilhafterweise werden entsprechende Informationen in Abhängigkeit von dem genutzten mobilen Endgerät angepasst, insbesondere um unterschiedlichen Sende- und/oder Empfangsleistungen von unterschiedlichen mobilen Endgeräten Rechnung tragen zu können. Erfindungsgemäß ist zudem vorgesehen, dass die Zuordnung der Informationen hinsichtlich der Signalqualität in Bezug auf eine Nutzung einer Funkzelle mittels eines mobilen Endgerätes ergänzend und/oder alternativ in Bezug auf durch das Mobilfunknetz beziehungsweise durch Komponenten des Mobilfunknetzes, insbesondere Basisstationen des Mobilfunknetzes (Base Transceiver Station (BTS), Node B), definierte Orte erfolgt.

Vorzugsweise erfolgt bei dem erfindungsgemäßen Verfahren die Datenverbindung mittels eines paketorientierten Datendienstes, besonders bevorzugt mittels eines paketorientierten Datendienstes des Mobilfunknetzes. Ein Abbruch der Datenverbindung beispielsweise in dem Mobilfunknetz gemäß dem ersten Mobilfunkstandard bei Unterdrückung eines Verbindungswechsels in eine Funkzelle gemäß dem zweiten Mobilfunkstandard und ein darauf folgender Wiederaufbau der Datenverbindung bei Wiedereintritt in den Versorgungsbereich einer Funkzelle des Mobilfunknetzes gemäß dem ersten Mobilfunkstandard bleibt für den Nutzer dabei vorteilhafterweise nahezu unbemerkt.

Gemäß einer weiteren vorteilhaften Ausgestaltung des erfindungsgemäßen Verfahrens wird im Rahmen der Auswertung ein Wahrscheinlichkeitswert für einen Wiedereintritt in den Versorgungsbereich einer Funkzelle gemäß dem ersten Mobilfunkstandard bestimmt, der bestimmte Wahrscheinlichkeitswert einem Vergleich mit einem vordefinierten Grenzwert unterzogen und bei Überschreiten des Grenzwertes ein Verbindungswechsel in eine Funkzelle gemäß dem zweiten Mobilfunkstandard unterdrückt, damit das mobile Endgerät innerhalb des vordefinierten Zeitintervalls eine Verbindung zu einer Funkzelle gemäß dem ersten Mobilfunkstandard aufbauen kann. Vorteilhafterweise ist der Grenzwert einstell- und/oder anpassbar, vorzugsweise seitens des Mobilfunknetzbetreibers. So ist insbesondere vorgesehen, dass der Mobilfunknetzbetreiber den Grenzwert höher setzen kann, wenn aufgrund von hoher Auslastung der Funkzellen gemäß dem ersten Mobilfunkstandard deren Versorgungsbereich verringert ist.

Eine weitere vorteilhafte Ausgestaltung des erfindungsgemäßen Verfahrens ist dadurch gekennzeichnet, dass die Unterdrückung eines Verbindungswechsels in eine Funkzelle des zweiten Typs bzw. gemäß dem zweiten Mobilfunkstandard für ein vordefiniertes weiteres Zeitintervall erfolgt. Ist bis nach Ablauf dieses vordefinierten weiteren Zeitintervalls entgegen der auf der Auswertung beruhenden Feststellung kein Wiedereintritt in den Versorgungsbereich einer Funkzelle des ersten Typs bzw. gemäß dem ersten Mobilfunkstandard erfolgt, wird vorteilhafterweise ein Wechsel in eine Funkzelle des zweiten Typs bzw. gemäß dem zweiten Mobilfunkstandard ermöglicht, sodass eine Wiederaufnahme der Datenverbindung mittels des mobilen Endgerätes erfolgen kann. Eine solche Ausgestaltung ist besonders vorteilhaft, wenn ein Nutzer eines mobilen Endgerätes mit dem Auto unterwegs ist und sich, beispielsweise aufgrund eines Verkehrsstaus, eine nicht kalkulierte Änderung der Geschwindigkeit, mit welcher das mobile Endgerät seinen Aufenthaltsort ändert, ergibt, sodass ein Wiedereintritt des mobilen Endgerätes in den Versorgungsbereich einer Funkzelle des ersten Typs bzw. gemäß dem ersten Mobilfunkstandard nicht innerhalb des vordefinierten Zeitintervalls erfolgt. Vorteilhafterweise ist das weitere vordefinierte Zeitintervall ebenfalls einstell- und/oder anpassbar, vorzugsweise nutzerseitig und/oder seitens des Mobilfunknetzbetreibers. Gemäß einer bevorzugten Einstellung des weiteren vordefinierten Zeitintervalls entspricht die Länge des weiteren Zeitintervalls, für das eine Unterdrückung eines Verbindungswechsels in eine Funkzelle gemäß dem zweiten Mobilfunkstandard erfolgt, der Länge des Zeitintervalls, innerhalb dessen ein Wiedereintritt in den Versorgungsbereich einer Funkzelle gemäß dem ersten Mobilfunkstandard erfolgen soll. Eine weitere vorteilhafte Ausgestaltung der Erfindung sieht vor, dass vor und/oder bei Ablauf des weiteren vordefinierten Zeitintervalls eine erneute erfindungsgemäße Auswertung durchgeführt wird, und bei auf der Auswertung beruhender Feststellung, dass ein Wiedereintritt in den Versorgungsbereich einer Funkzelle des ersten Typs bzw. gemäß dem ersten Mobilfunkstandard innerhalb des vordefinierten Zeitintervalls, vorzugsweise innerhalb eines Zeitintervalls, das kleiner als das vordefinierte Zeitintervall ist, erfolgen wird, eine erneute Unterdrückung eines Verbindungswechsels in eine Funkzelle des zweiten Typs bzw. gemäß dem zweiten Mobilfunkstandard für das vordefinierte weitere Zeitintervall, vorzugsweise für ein gegenüber dem vordefinierten Zeitintervall kürzeres Zeitintervall, erfolgt.

Eine weitere vorteilhafte Ausgestaltung des erfindungsgemäßen Verfahrens sieht vor, dass während der Unterdrückung des Wechsels in eine Funkzelle des zweiten Typs bzw. gemäß dem zweiten Mobilfunkstandard seitens des mobilen Endgerätes im Hintergrund Maßnahmen zum Wechsel in eine Funkzelle des zweiten Typs bzw. gemäß dem zweiten Mobilfunkstandard durchgeführt werden, sodass bei einem nicht erfolgten Wiedereintritt in den Versorgungsbereich einer Funkzelle des ersten Typs bzw. gemäß dem ersten Mobilfunkstandard ein Wechsel in eine Funkzelle des zweiten Typs bzw. gemäß dem zweiten Mobilfunkstandard unmittelbar erfolgen kann.

Gemäß einer besonders bevorzugten Ausgestaltungsvariante des erfindungsgemäßen Verfahrens stellt eine Datenverbindung gemäß dem ersten Mobilfunkstandard eine größere Bandbreite bereit als eine Datenverbindung gemäß dem zweiten Mobilfunkstandard. Vorzugsweise entspricht der erste Mobilfunkstandard dem UMTS-, LTE- oder CDMA2000-Funknetzstandard. Der zweite Mobilfunkstandard entspricht vorzugsweise dem GSM-Mobilfunkstandard.

Erfindungsgemäß ist vorgesehen, dass das erfindungsgemäße Verfahren zumindest teilweise seitens des mobilen Endgerätes ausgeführt wird beziehungsweise ausführbar ist. Ebenfalls vorgesehen ist, dass das erfindungsgemäße Verfahren zumindest teilweise seitens des Mobilfunknetzes oder seitens wenigstens einer Einrichtung des Mobilfunknetzes ausgeführt wird beziehungsweise ausführbar ist. Insbesondere ist vorgesehen, dass zumindest die erfindungsgemäße Auswertung sowohl seitens des mobilen Endgerätes als auch seitens des Mobilfunknetzes beziehungsweise seitens wenigstens einer Einrichtung des Mobilfunknetzes ausgeführt wird beziehungsweise ausführbar ist.

Entsprechend einer weiteren vorteilhaften Ausgestaltung der Erfindung umfassen die ortsbezogenen Informationen hinsichtlich der Versorgungsbereiche weiterer Funkzellen gemäß dem ersten Mobilfunkstandard Informationen hinsichtlich ortsbezogener Zellgrenzen der Funkzellen gemäß dem ersten Mobilfunkstandard. Die Zellgrenzen definieren dabei die Grenzen des Versorgungsbereiches einer Funkzelle, umfassen also den Bereich, innerhalb dessen eine Nutzung der Funkzelle mittels des mobilen Endgerätes möglich ist. Vorteilhafterweise werden die Zellgrenzen entsprechend der tatsächlichen Nutzbarkeit der Funkzelle mittels eines in einem Mobilfunknetz betreibbaren mobilen Endgerätes angepasst, insbesondere an den äußeren Rändern der Funkzelle, vorzugsweise seitens des Mobilfunknetzes. In einer bevorzugten Ausgestaltung der Erfindung werden die Zellgrenzen der Funkzellen gemäß dem ersten Mobilfunkstandard jeweils für unterschiedliche Typen beziehungsweise unterschiedliche Modelle von mobilen Endgeräten vorzugsweise entsprechend deren Sende- und/oder Empfangsleistung definiert. Eine weitere vorteilhafte Ausgestaltung sieht vor, dass, vorzugsweise seitens des mobilen Endgerätes, zumindest für definierte Aufenthaltsbereiche im Mobilfunknetz die Zellgrenzen individuell für das mobile Endgerät gespeichert sind. Gemäß einer weiteren Ausgestaltungsvariante des erfindungsgemäßen Verfahrens werden die Zellgrenzen, ausgehend von einer die Funkzelle versorgenden Basisstation (RNC, BTS) geometrisch modelliert, vorteilhafterweise mit einer kreisförmigen oder einer wabenförmigen Zellgrenze. Bei einer vereinfachten kreisförmigen Modellierung der Zellgrenzen, wird als Kreismittelpunkt die Position der Basisstation und als Kreisradius die Ausdehnung des Sende-/Empfangsbereich der Funkzelle erfasst.

Eine weitere Ausgestaltung der Erfindung sieht vor, dass die ortsbezogenen Informationen hinsichtlich der Versorgungsbereiche von Funkzellen gemäß dem ersten Mobilfunkstandard zumindest teilweise seitens einer Speichereinrichtung des Mobilfunknetzes und/oder seitens einer Speichereinrichtung des mobilen Endgerätes bereitgestellt werden, z. B. seitens einer Datenbank. Die Informationen werden für eine Bereitstellung seitens des mobilen Endgerätes unter Nutzung eines Kommunikationsdienstes des Mobilfunknetzes von dem Mobilfunknetz an das mobile Endgerät zumindest für ausgewählte Aufenthaltsbereiche im Mobilfunknetz übertragen.

Gemäß einer weiteren Ausgestaltung der vorliegenden Erfindung werden einem Aufenthaltsbereich, vorzugsweise einem durch das Randgebiet eines Versorgungsbereichs einer Funkzelle des ersten Typs bzw. gemäß dem ersten Mobilfunkstandard und/oder einem durch geographische Koordinaten definierten Aufenthaltsbereich, zugeordnete Informationen bezüglich eines Eintritts bzw. Wiedereintritts in den Versorgungsbereich einer Funkzelle des ersten Typs bzw. gemäß dem ersten Mobilfunkstandard seitens des mobilen Endgerätes und/oder seitens des Mobilfunknetzes als weitere ortsbezogene Informationen hinsichtlich der Versorgungsbereiche von Funkzellen des ersten Typs bzw. gemäß dem ersten Mobilfunkstandard erfasst. Die erfassten Informationen werden vorteilhafterweise genutzt, um die definierten Zellgrenzen zu überprüfen beziehungsweise anzupassen. Die erfassten Informationen können dabei als Erfahrungswerte in einer Erfahrungswertedatenbank erfasst werden und zusammen mit den ortsbezogenen Informationen hinsichtlich der Versorgungsbereiche von Funkzellen des ersten Typs bzw. gemäß dem ersten Mobilfunkstandard gespeichert werden. Gemäß einer bevorzugten Ausgestaltung umfassen die erfassten Informationen einem Aufenthaltsbereich zugeordnete Informationen hinsichtlich der Signalqualität einer Funkzelle des ersten Typs bzw. gemäß dem ersten Mobilfunkstandard. Anhand von Aufenthaltsbereichen zugeordneten Signalqualitäten lassen sich vorteilhafterweise Feststellungen hinsichtlich eines Eintritts oder auch Wiedereintritts in den Versorgungsbereich einer Funkzelle des ersten Typs bzw. gemäß dem ersten Mobilfunkstandard verbessern. Insbesondere lassen sich anhand von Aufenthaltsbereichen zugeordneten Signalqualitäten und/oder anhand von Informationen hinsichtlich des Aufenthaltsortes des mobilen Endgerätes zurückzulegende Distanzen bestimmen beziehungsweise prognostizieren, die für einen Eintritt bzw. Wiedereintritt in den Versorgungsbereich einer Funkzelle des ersten Typs bzw. gemäß dem ersten Mobilfunkstandard zu überwinden sind. Unter Berücksichtigung der Geschwindigkeit, mit der sich das mobile Endgerät bewegt, kann im Rahmen der Auswertung dabei vorteilhafterweise bestimmt werden, innerhalb welcher Zeitdauer ein Wiedereintritt in den Versorgungsbereich einer Funkzelle des ersten Typs bzw. gemäß dem ersten Mobilfunkstandard erfolgt beziehungsweise wahrscheinlich ist, und ob diese Zeitdauer innerhalb des vordefinierten Zeitintervalls liegt. Die Geschwindigkeit stellt dabei eine vektorielle Größe da, die einerseits eine Bewegungsrichtung des mobilen Endgerätes als Differenz zwischen zwei Ortsvektoren angibt und andererseits einen Geschwindigkeitsbetrag des sich bewegenden mobilen Endgerätes in die Bewegungsrichtung. Die Geschwindigkeit des mobilen Endgerätes umfasst insofern also auch eine Information zum Aufenthaltsort des mobilen Endgerätes, zum Beispiel in einem Versorgungsbereich einer Funkzelle.

Des Weiteren ist erfindungsgemäß vorgesehen, dass die erfassten Informationen den seitens der Speichereinrichtung des Mobilfunknetzes und/oder der Speichereinrichtung des mobilen Endgerätes bereitgestellten ortsbezogenen Informationen hinsichtlich der Versorgungsbereiche von Funkzellen des ersten Typs bzw. gemäß dem ersten Mobilfunkstandard hinzugefügt werden oder bereits vorhandene ortsbezogene Informationen hinsichtlich des Versorgungsbereichs weiterer Funkzellen des ersten Typs bzw. gemäß dem ersten Mobilfunkstandard unter Berücksichtigung der erfassten Informationen angepasst werden. Vorteilhafterweise werden zudem Änderungen in Bezug auf ortsbezogene Informationen hinsichtlich der Versorgungsbereiche von Funkzellen des ersten Typs bzw. gemäß dem ersten Mobilfunkstandard zumindest teilweise automatisch bei der Auswertung und/oder der Definition des Zeitintervalls, innerhalb dessen ein Eintritt bzw. ein Wiedereintritt in den Versorgungsbereich der Funkzelle des ersten Typs bzw. gemäß dem ersten Mobilfunkstandard erfolgen soll, berücksichtigt. Auf diese Weise ist vorteilhafterweise eine weitere Optimierung hinsichtlich einer Verkürzung der Verzögerungszeiten bei einer Datenübertragung realisierbar. Gemäß einer bevorzugten Ausgestaltung nutzt das erfindungsgemäße Verfahren für diese Optimierung ein sogenanntes selbstlernendes System. In einer . weiteren vorteilhaften Ausgestaltung ist eine Optimierung des erfindungsgemäßen Verfahrens durch automatisches Reporting durch eine Vielzahl von Benutzern ("Cloudreporting") vorgesehen.

Gemäß einer weiteren vorteilhaften Ausgestaltung der Erfindung werden zumindest die ortsbezogenen Informationen hinsichtlich der Versorgungsbereiche von Funkzellen gemäß dem ersten Mobilfunkstandard zwischen dem Mobilfunknetz und dem mobilen Endgerät synchronisiert. Vorteilhafterweise werden die entsprechenden Informationen auf diese Weise aktuell gehalten und sind für eine weitere Verbesserung beziehungsweise Optimierung des Verfahrens nutzbar.

Eine besonders bevorzugte Ausgestaltung der Erfindung sieht vor, dass die Informationen hinsichtlich des Aufenthaltsortes bzw. zum Aufenthaltsort des mobilen Endgerätes zumindest Informationen hinsichtlich des aktuellen Aufenthaltsortes des mobilen Endgerätes, hinsichtlich der aktuellen Richtung, in welche das mobile Endgerät seinen Aufenthaltsort ändert, hinsichtlich der aktuellen Geschwindigkeit, mit welcher das mobile Endgerät seinen Aufenthaltsort ändert, und/oder zeitlich zurückliegende Informationen hinsichtlich des Aufenthaltsortes, der Richtung und/oder der Geschwindigkeit umfassen. Gemäß einer vorteilhaften Ausgestaltung des erfindungsgemäßen Verfahrens werden die Informationen hinsichtlich des Aufenthaltsortes des mobilen Endgerätes unter Nutzung von satellitengestützter Positionsbestimmung, vorzugsweise GPS (GPS: Global Positioning System), mobilfunknetzseitiger Zellortung, einer Kombination von satellitengestützter Positionsbestimmung und mobilfunknetzseitiger Zellortung, vorzugsweise A-GPS (A-GPS: Assisted Global Positioning System), und/oder durch sogenannte WLAN-Scans (WLAN: Wireless Local Area Network) bestimmt. Gemäß einer weiteren vorteilhaften Ausgestaltung der Erfindung werden die Informationen hinsichtlich des Aufenthaltsortes des mobilen Endgerätes mobilfunknetzseitig unter Auswertung der Wechsel der Funkzellen bestimmt. Vorteilhafterweise ist diese Ausgestaltungsvariante der Erfindung auch mit mobilen Endgeräten nutzbar, welche keine Mittel zur Bestimmung des Aufenthaltsortes aufweisen.

Bei einer weiteren vorteilhaften Ausgestaltung des erfindungsgemäßen Verfahrens werden bei der Auswertung Geoinformationen und/oder die Verkehrsinfrastruktur betreffende Informationen berücksichtigt, insbesondere Straßenverläufe, sowie beispielsweise durch Einbahnstraßen vorgegebene Fahrtrichtungen, Bahntrassen, Flüsse und dergleichen Informationen. Vorteilhafterweise sind die Auswertungen hinsichtlich eines erfolgenden Wiedereintritts in den Versorgungsbereich einer Funkzelle des ersten Typs bzw. gemäß dem ersten Mobilfunkstandard innerhalb eines vordefinierten Zeitintervalls weiter verbesserbar, wenn zusätzlich zu den Aufenthaltsinformationen bezüglich des mobilen Endgerätes Geoinformationen und/oder die Verkehrsinfrastruktur betreffende Informationen berücksichtigt werden, da sich, insbesondere unter zusätzlicher Berücksichtigung von Straßenverläufen, verbessert Feststellungen treffen lassen, wie viel Zeit bis zu einem Wiedereintritt in den Versorgungsbereich einer Funkzelle des ersten Typs bzw. gemäß dem ersten Mobilfunkstandard vergehen wird, insbesondere wenn ein weitergehender Straßenverlauf von einer aktuellen Bewegungsrichtung, in die das mobile Endgerät seinen Aufenthaltsort ändert, abweicht. Erfindungsgemäß ist vorteilhafterweise seitens des mobilen Endgerätes eine Berücksichtigung von Geoinformationen und/oder von die Verkehrsinfrastruktur betreffenden Informationen einstellbar, insbesondere aktivierbar beziehungsweise deaktivierbar.

Eine weitere vorteilhafte Ausgestaltung der Erfindung sieht vor, dass zumindest im Rahmen der Auswertung der ortsbezogenen Informationen hinsichtlich der Versorgungsbereiche von Funkzellen gemäß dem ersten Mobilfunkstandard die Sende- und/oder Empfangsleistung des mobilen Endgerätes und/oder die Sende- und/oder Empfangsleistung der Basisstation (Base Transceiver Station, Node-B) von Funkzellen berücksichtigt werden.

Auch wenn bevorzugt vorgesehen ist, dass das mobile Endgerät den Verbindungswechsel in eine andere Funkzelle initiiert, sind zudem Ausführungsvarianten vorgesehen, in denen das Mobilfunknetz, vorzugsweise ein Netzelement des Mobilfunknetzes, insbesondere ein Radio Network Controller (RNC) eines UMTS-Mobilfunknetzes oder ein Base Station Controller (BSC) eines GSM-Mobilfunknetzes, den Verbindungswechsel in eine andere Funkzelle initiiert. Solche Ausführungsvarianten sind insbesondere dann zu bevorzugen, wenn die ortsbezogenen Informationen hinsichtlich der Versorgungsbereiche von Funkzellen gemäß dem ersten Mobilfunkstandard in sehr kurzen Zeitintervallen, insbesondere in Zeitintervallen von wenigen Sekunden bis hin zu Zeitintervallen von einigen Minuten, aktualisiert werden und eine Nutzung der aktuellsten Informationen vorgesehen ist. In diesen Fällen würde nämlich durch die Übertragung von entsprechenden Informationen an das mobile Endgerät der Datenverkehr mitunter stark erhöht. Weiterhin sind Ausführungsvarianten bei denen ein Verbindungswechsel in eine andere Funkzelle von dem Mobilfunknetz beziehungsweise einem Netzelement des Mobilfunknetzes initiiert wird dann vorteilhaft, wenn das erfindungsgemäße Verfahren durch geringfügige Abwandlung seitens eines ersten Mobilfunknetzbetreibers genutzt werden soll, um einen Wechsel von einer Funkzelle, welche von dem ersten Mobilfunknetzbetreiber betrieben wird, in eine Funkzelle, welche von einem zweiten Mobilfunknetzbetreiber betrieben wird, zu unterdrücken, wenn das mobile Endgerät innerhalb eines vordefinierten Zeitintervalls wieder eine Verbindung zu einer Funkzelle, welche von dem ersten Mobilfunknetzbetreiber betrieben wird, aufbauen kann. In einer solchen Ausführungsvariante wäre dann eine Funkzelle gemäß einem ersten Mobilfunkstandard eine von einem ersten Mobilfunknetzbetreiber betriebene Funkzelle und die zweite Funkzelle gemäß einem zweiten Mobilfunkstandard eine von einem zweiten Mobilfunknetzbetreiber betriebene Funkzelle, wobei der erste Mobilfunkstandard und der zweite Mobilfunkstandard identische Mobilfunkstandards sein können. Insofern betrifft die vorliegende Erfindung zudem ein Verfahren zum Betrieb eines mobilen Endgerätes in einem zellulären Mobilfunknetz mit Funkzellen, welche von einem ersten Mobilfunknetzbetreiber betrieben werden und Funkzellen, welche von einem zweiten Mobilfunknetzbetreiber betrieben werden, wobei das mobile Endgerät für einen Betrieb sowohl in den Funkzellen des ersten Mobilfunknetzbetreibers als auch in den Funkzellen des zweiten Mobilfunknetzbetreibers ausgebildet ist, das mobile Endgerät seinen Aufenthaltsort im Mobilfunknetz ändert, das mobile Endgerät sich in dem Versorgungsbereich einer Funkzelle, welche von einem ersten Mobilfunknetzbetreiber betrieben wird, und dem Versorgungsbereich wenigstens einer weiteren Funkzelle, welche von einem zweiten Mobilfunknetzbetreiber betrieben wird, befindet, das mobile Endgerät die Funkzelle, welche von dem ersten Mobilfunknetzbetreiber betrieben wird, für eine Datenverbindung nutzt und die Signalqualität in Bezug auf die genutzte Funkzelle während der bestehenden Datenverbindung einen Verbindungswechsel in eine andere Funkzelle erforderlich macht, welches dadurch gekennzeichnet ist, dass unter Nutzung von ortsbezogenen Informationen hinsichtlich der Versorgungsbereiche weiterer Funkzellen, welche von dem ersten Mobilfunknetzbetreiber betrieben werden, und unter Nutzung von Informationen hinsichtlich des Aufenthaltsortes des mobilen Endgerätes eine Auswertung hinsichtlich eines innerhalb eines vordefinierten Zeitintervalls erfolgenden Wiedereintritts in den Versorgungsbereich einer Funkzelle, welche von dem ersten Mobilfunknetzbetreiber betrieben wird, durchgeführt wird und bei auf der Auswertung beruhender Feststellung, dass ein Wiedereintritt in den Versorgungsbereich einer Funkzelle, welche von dem ersten Mobilfunknetzbetreiber betrieben wird, innerhalb des vordefinierten Zeitintervalls erfolgen wird, ein Verbindungswechsel in eine Funkzelle, welche von dem zweiten Mobilfunknetzbetreiber betrieben wird, unterdrückt wird, damit das mobile Endgerät innerhalb des vordefinierten Zeitintervalls eine Verbindung zu einer Funkzelle, welche von dem ersten Mobilfunknetzbetreiber betrieben wird, aufbauen kann. Vorteilhafte Ausgestaltungsvarianten dieses Verfahrens ergeben sich durch Kombination von mit in der vorliegenden Anmeldung beschriebenen Merkmalen.

Gemäß einem weiteren Aspekt der vorliegenden Erfindung ist ein Computerprogrammprodukt vorgesehen, welches vorzugsweise auf einem in einem Kommunikationsnetz bzw. in einem Mobilfunknetz betreibbaren mobilen Endgerät gespeichert ist, und zur Ausführung wenigstens eines der vorgeschlagenen erfindungsgemäßen Verfahren ausgebildet ist. Vorteilhafterweise ist das Computerprogrammprodukt insbesondere dazu ausgebildet, die Komponenten einer Einrichtung, auf welcher das Computerprogrammprodukt gespeichert ist, derartig zu manipulieren beziehungsweise zu steuern, dass bei einem Betrieb eines mobilen Endgerätes in einem zellulären Mobilfunknetz mit Funkzellen gemäß einem ersten Mobilfunkstandard und Funkzellen gemäß einem zweiten Mobilfunkstandard, wobei das mobile Endgerät für einen Betrieb sowohl gemäß dem ersten Mobilfunkstandard als auch gemäß dem zweiten Mobilfunkstandard ausgebildet ist, das mobile Endgerät seinen Aufenthaltsort im Mobilfunknetz ändert, das mobile Endgerät sich in dem Versorgungsbereich einer Funkzelle gemäß dem ersten Mobilfunkstandard und dem Versorgungsbereich wenigstens einer weiteren Funkzelle gemäß dem zweiten Mobilfunkstandard befindet, das mobile Endgerät die Funkzelle gemäß dem ersten Mobilfunkstandard für eine Datenverbindung nutzt und die Signalqualität in Bezug auf die genutzte Funkzelle gemäß dem ersten Mobilfunkstandard während der bestehenden Datenverbindung einen Verbindungswechsel in eine andere Funkzelle erforderlich macht, eine Auswertung hinsichtlich eines innerhalb eines vordefinierten Zeitintervalls erfolgenden Wiedereintritts eines mobilen Endgerätes in den Versorgungsbereich einer Funkzelle gemäß einem ersten Mobilfunkstandard durchgeführt wird, basierend auf der Auswertung festgestellt wird, in welchem Zeitintervall ein Wiedereintritt des mobilen Endgerätes in den Versorgungsbereich einer Funkzelle gemäß dem ersten Mobilfunkstandard erfolgen wird, das Zeitintervall einem Vergleich mit einem vordefinierten Zeitintervall unterzogen wird, bei Feststellung, dass das Zeitintervall kleiner oder gleich dem vordefinierten Zeitintervall ist, ein Verbindungswechsel des mobilen Endgerätes in eine Funkzelle gemäß dem zweiten Mobilfunkstandard unterdrückt wird und bei Wiedereintritt des mobilen Endgerätes in den Versorgungsbereich einer Funkzelle gemäß dem ersten Mobilfunkstandard innerhalb des vordefinierten Zeitintervalls ein Verbindungsaufbau zu dieser Funkzelle initiiert wird.

Zur Lösung der eingangs genannten Aufgabe wird mit der vorliegenden Erfindung zudem ein mobiles Endgerät zum Betrieb in wenigstens einem Kommunikationsnetz, vorzugsweise einem Mobilfunknetz, wobei Funkzellen eines ersten Typs und Funkzellen eines zweiten Typs von dem wenigstens einen Kommunikationsnetz ausgebildet werden, wobei es sich bei den Funkzellen des ersten und des zweiten Typs um Funkzellen gemäß dem GSM-, UMTS-, CDMA2000-, LTE-Mobilfunkstandard, um WLAN- oder Hot-Spot-Funkzellen handelt, vorgeschlagen, welches eine Auswerteeinrichtung zur Auswertung einer Information bezüglich des Aufenthaltsortes des mobilen Endgerätes in einem Versorgungsbereich einer Funkzelle des ersten Typs hinsichtlich eines innerhalb eines vordefinierten Zeitintervalls zu erwartenden Eintritts des mobilen Endgerätes in den Versorgungsbereich einer Funkzelle des ersten Typs und eine Unterdrückungseinrichtung zum Unterdrücken eines Verbindungswechsels des mobilen Endgerätes in eine Funkzelle des zweiten Typs, falls, basierend auf dem Ergebnis der Auswertung, der Eintritt des mobilen Endgerätes in den Versorgungsbereich der Funkzelle des ersten Typs innerhalb des vordefinierten Zeitintervalls zu erwarten ist, wobei die Zeitdauer des vordefinierten Zeitintervalls geringer ist, als das für einen Verbindungswechsel von einer Funkzelle des ersten Typs zu einer Funkzelle des zweiten Typs benötigte Zeitintervall aufweist. Das Endgerät ist vorteilhafterweise dazu ausgebildet, in einem Mobilfunknetz gemäß einem ersten Mobilfunkstandard und/oder in wenigstens einem weiteren Mobilfunknetz gemäß einem weiteren Mobilfunkstandard betrieben zu werden, insbesondere in einem Mobilfunknetz gemäß einem UMTS-, LTE- und/oder GSM-Funknetzstandard. Ferner ist das mobile Endgerät vorteilhafterweise für den Betrieb in einem WLAN ausgebildet.

Insbesondere ist vorgesehen, dass das mobile Endgerät gemäß einer vorteilhaften Ausgestaltung Mittel zur satellitengestützten Ortsbestimmung und/oder Navigation aufweist, vorzugsweise Mittel zur Nutzung des Global Positioning System (GPS), wie insbesondere einen GPS-Empfänger.

Ferner ist gemäß einer weiteren vorteilhaften Ausgestaltung vorgesehen, dass das mobile Endgerät eine Speichereinrichtung zur Speicherung von ortsbezogenen Informationen hinsichtlich der Versorgungsbereiche von Funkzellen gemäß dem ersten Mobilfunkstandard aufweist, vorzugsweise einen Flashspeicher.

Erfindungsgemäß ist des Weiteren vorgesehen, dass das mobile Endgerät vorteilhafterweise eine Auswerteeinheit aufweist, welche vorteilhafterweise dazu ausgebildet und/oder eingerichtet ist, eine Auswertung hinsichtlich eines innerhalb eines vordefinierten Zeitintervalls erfolgenden Wiedereintritts des mobilen Endgerätes in den Versorgungsbereich einer Funkzelle gemäß einem ersten Mobilfunkstandard
durchzuführen, basierend auf der Auswertung festzustellen, in welchem Zeitintervall ein Wiedereintritt des mobilen Endgerätes in den Versorgungsbereich einer Funkzelle gemäß dem ersten Mobilfunkstandard erfolgen wird, das Zeitintervall einem Vergleich mit einem vordefinierten Zeitintervall zu unterziehen, bei Feststellung, dass das Zeitintervall kleiner oder gleich dem vordefinierten Zeitintervall ist, einen Verbindungswechsel des mobilen Endgerätes in eine Funkzelle gemäß dem zweiten Mobilfunkstandard zu unterdrücken und bei Wiedereintritt des mobilen Endgerätes in den Versorgungsbereich einer Funkzelle gemäß dem ersten Mobilfunkstandard innerhalb des vordefinierten Zeitintervalls einen Verbindungsaufbau zu dieser Funkzelle zu initiieren. Vorzugsweise ist die Auswerteeinheit ein Prozessor. Dieser kann insbesondere zur Steuerung wesentlicher Funktionalitäten des mobilen Endgerätes ausgebildet sein.

Erfindungsgemäß ist vorgesehen, dass das mobile Endgerät insbesondere ein Mobilfunktelefon, vorzugsweise ein Smartphone, oder eine Datenkarte, vorzugsweise ein sogenannter Surf-stick, ist, welches mit Hilfe eines Mobilfunkteilnehmeridentifikationsmoduls, vorzugsweise einer SIM-Karte (SIM: Subscriber Identity Module), eine Kommunikationsverbindung über ein Mobilfunknetz herstellen kann. Erfindungsgemäß kann das mobile Endgerät vorteilhafterweise auch eine Einrichtung sein, welche über eine Schnittstelle mit einer Vorrichtung, welche zur Herstellung einer Kommunikationsverbindung über ein Mobilfunknetz ausgebildet ist, verbunden ist. Eine solche Einrichtung kann, vorzugsweise in Verbindung mit einem Navigationsgerät, vorteilhafterweise seitens eines Kraftfahrzeugs bereitgestellt werden, wobei die Einrichtung vorteilhafterweise über eine Funkschnittstelle, vorzugsweise eine Bluetooth-Schnittstelle, oder einen seriellen Bus, vorzugsweise eine USB-Schnittstelle, mit einem Mobilfunktelefon verbunden ist.

Zur Lösung der eingangs genannten Aufgabe wird mit der vorliegenden Erfindung außerdem eine Einrichtung in einem Kommunikationsnetz, vorzugsweise ein Netzknoten in einem Mobilfunknetz, wobei von dem Kommunikationsnetz bzw. von dem Mobilfunknetz und/oder von wenigstens einem weiteren Kommunikationsnetz Funkzellen eines ersten Typ und Funkzellen eines zweiten Typs ausgebildet werden, wobei es sich bei den Funkzellen des ersten und des zweiten Typs um Funkzellen gemäß dem GSM-, UMTS-, CDMA2000-, LTE-Mobilfunkstandard, um WLAN- oder Hot-Spot-Funkzellen handelt, vorgeschlagen, welcher eine Auswerteeinrichtung zur Auswertung einer Information bezüglich des Aufenthaltsortes des mobilen Endgerätes in einem Versorgungsbereich einer Funkzelle des ersten Typs hinsichtlich eines innerhalb eines vordefinierten Zeitintervalls zu erwartenden Eintritts des mobilen Endgerätes in den Versorgungsbereich einer Funkzelle des ersten Typs und eine Unterdrückungseinrichtung zum Unterdrücken eines Verbindungswechsels des mobilen Endgerätes in eine Funkzelle des zweiten Typs, falls, basierend auf dem Ergebnis der Auswertung, der Eintritt des mobilen Endgerätes in den Versorgungsbereich der Funkzelle des ersten Typs innerhalb des vordefinierten Zeitintervalls zu erwarten ist, wobei die Zeitdauer des vordefinierten Zeitintervalls geringer ist, als das für einen Verbindungswechsel von einer Funkzelle des ersten Typs zu einer Funkzelle des zweiten Typs benötigte Zeitintervall aufweist.

Vorzugsweise ist die Auswerteeinrichtung der Einrichtung dazu ausgebildet und/oder eingerichtet, eine Auswertung hinsichtlich eines innerhalb eines vordefinierten Zeitintervalls erfolgenden Wiedereintritts eines mobilen Endgerätes, vorzugsweise eines erfindungsgemäßen mobilen Endgerätes, in den Versorgungsbereich einer Funkzelle des ersten Typs bzw. gemäß einem ersten Mobilfunkstandard durchzuführen, basierend auf der Auswertung festzustellen, in welchem Zeitintervall ein Wiedereintritt des mobilen Endgerätes in den Versorgungsbereich einer Funkzelle des ersten Typs bzw. gemäß dem ersten Mobilfunkstandard erfolgen wird, das Zeitintervall einem Vergleich mit einem vordefinierten Zeitintervall zu unterziehen, bei Feststellung, dass das Zeitintervall kleiner oder gleich dem vordefinierten Zeitintervall ist, einen Verbindungswechsel des mobilen Endgerätes in eine Funkzelle des zweiten Typs bzw. gemäß dem zweiten Mobilfunkstandard zu unterdrücken beziehungsweise einer weiteren Einrichtung des Mobilfunknetzes, vorteilhafterweise einer an einem Handover beteiligten Einrichtung des Mobilfunknetzes, einen Befehl zu senden, welcher die entsprechende Einrichtung veranlasst, einen Verbindungswechsel des mobilen Endgerätes in eine Funkzelle des zweiten Typs bzw. gemäß dem zweiten Mobilfunkstandard zu unterdrücken. Gemäß einer weiteren vorteilhaften Ausgestaltung ist die erfindungsgemäße Einrichtung zudem ausgebildet und/oder eingerichtet, bei Wiedereintritt des mobilen Endgerätes in den Versorgungsbereich einer Funkzelle des ersten Typs bzw. gemäß dem ersten Mobilfunkstandard innerhalb des vordefinierten Zeitintervalls einen Verbindungsaufbau zwischen dem mobilen Endgerät und dieser Funkzelle zu initiieren.

Vorteilhafterweise ist die erfindungsgemäße Einrichtung ausgebildet, zur Ausführung des erfindungsgemäßen Verfahrens beziehungsweise im Rahmen der Ausführung des erfindungsgemäßen Verfahrens Daten mit weiteren Einrichtungen des Mobilfunknetzes auszutauschen. Diese Daten betreffen vorteilhafterweise erfindungsgemäße ortsbezogene Informationen hinsichtlich der Versorgungsbereiche von Funkzellen des ersten Typs bzw. gemäß einem ersten Mobilfunkstandard, Informationen hinsichtlich des Aufenthaltsortes des mobilen Endgerätes und/oder Informationen hinsichtlich der Durchführung eines Handovers.

Gemäß einer weiteren vorteilhaften Ausgestaltung der erfindungsgemäßen Einrichtung ist vorgesehen, dass die Einrichtung eine Speichereinrichtung zur Speicherung von ortsbezogenen Informationen hinsichtlich der Versorgungsbereiche von Funkzellen gemäß dem ersten Mobilfunkstandard aufweist. Vorteilhafterweise ist die Speichereinrichtung eine Datenbank beziehungsweise nach Art einer Datenbank strukturiert.

Zur Lösung der eingangs genannten Aufgabe wird mit der vorliegenden Erfindung des Weiteren ein System umfassend wenigstens eine Einrichtung eines Kommunikationsnetzes, vorzugsweise eines Netzknoten eines Mobilfunknetzes, und ein mobiles Endgerät zum Betrieb in einem Kommunikationsnetz, insbesondere in einem Mobilfunknetz vorgeschlagen, wobei die wenigstens eine Einrichtung des Mobilfunknetzes und das mobile Endgerät ausgebildet sind, untereinander Informationen auszutauschen, wobei das System zur Ausführung wenigstens eines der mit der vorliegenden Erfindung vorgeschlagenen Verfahren ausgebildet ist. Hierzu weist vorteilhafterweise das mobile Endgerät Mittel auf, welche zumindest teilweise die Ausführung eines vorgeschlagenen erfindungsgemäßen Verfahrens ermöglichen, und die Einrichtung des Mobilfunknetzes Mittel auf, welche zumindest teilweise die Ausführung eines vorgeschlagenen erfindungsgemäßen Verfahrens ermöglichen, sodass durch einen entsprechenden Informationsaustausch zwischen mobilem Endgerät und der Einrichtung des Mobilfunknetzes ein vorgeschlagenes erfindungsgemäßes Verfahren ausführbar ist. In einer vorteilhaften Ausgestaltung des Systems ist das mobile Endgerät zumindest teilweise wie das erfindungsgemäße Endgerät ausgestaltet. In einer weiteren vorteilhaften Ausgestaltung des Systems ist die Einrichtung des Mobilfunknetzes zumindest teilweise wie die erfindungsgemäße Einrichtung des Mobilfunknetzes ausgebildet.

Weitere vorteilhafte Einzelheiten, Merkmale und Ausgestaltungen der Erfindung werden nachfolgend anhand der in den Figuren der Zeichnung dargestellten Ausführungsbeispiele der Erfindung näher erläutert. Dabei zeigen:
- Fig. 1: in einer Prinzipdarstellung einen im Stand der Technik bekannten Verbindungswechsel von einer Funkzelle gemäß einem ersten Mobilfunkstandard zu einer weiteren Funkzelle desselben Mobilfunkstandards;
- Fig. 2: in einer Prinzipdarstellung einen im Stand der Technik bekannten Verbindungswechsel von einer Funkzelle gemäß einem ersten Mobilfunkstandard zu einer Funkzelle gemäß einem zweiten Mobilfunkstandard sowie einen erneuten Wechsel von der Funkzelle gemäß dem zweiten Mobilfunkstandard zu einer Funkzelle gemäß dem ersten Mobilfunkstandard;
- Fig. 3: in einer Prinzipdarstellung eine Ausführungsvariante eines erfindungsgemäßen Verfahrens, insbesondere die im Rahmen des erfindungsgemäßen Verfahrens erfolgende Unterdrückung eines Wechsels von einer Funkzelle gemäß einem ersten Mobilfunkstandard zu einer Funkzelle gemäß einem zweiten Mobilfunkstandard, sowie eine Wiederaufnahme einer Datenverbindung in einer Funkzelle gemäß dem ersten Mobilfunkstandard;
- Fig. 4: in einer Prinzipdarstellung eine im Zusammenhang mit der Ausführung eines erfindungsgemäßen Verfahrens erfolgende Auswertung hinsichtlich eines innerhalb eines vordefinierten Zeitintervalls erfolgenden Wiedereintritts in den Versorgungsbereich einer Funkzelle gemäß dem ersten Mobilfunkstandard unter Nutzung von ortsbezogenen Informationen hinsichtlich der Versorgungsbereiche von Funkzellen gemäß dem ersten Mobilfunkstandard und unter Nutzung von Informationen hinsichtlich des Aufenthaltsortes des mobilen Endgerätes;
- Fig. 5: in einer Prinzipdarstellung eine weitere im Zusammenhang mit der Ausführung eines erfindungsgemäßen Verfahrens erfolgende Auswertung hinsichtlich eines innerhalb eines vordefinierten Zeitintervalls erfolgenden Wiedereintritts in den Versorgungsbereich einer Funkzelle gemäß dem ersten Mobilfunkstandard unter Nutzung von ortsbezogenen Informationen hinsichtlich der Versorgungsbereiche von Funkzellen gemäß dem ersten Mobilfunkstandard und unter Nutzung von Informationen hinsichtlich des Aufenthaltsortes des mobilen Endgerätes;
- Fig. 6: in einer schematischen Darstellung eine Funkzelle eines Mobilfunknetzes mit unterschiedlich definierten Zellgrenzen;
- Fig. 7: in einer schematischen Darstellung eine weitere Funkzelle eines Mobilfunknetzes mit unterschiedlich definierten Zellgrenzen;
- Fig. 8: in einem Ablaufdiagramm ein Ausführungsbeispiel für ein erfindungsgemäßes Verfahren;
- Fig. 9: in einer vereinfachten Prinzipdarstellung ein Ausführungsbeispiel für ein erfindungsgemäßes mobiles Endgerät;
- Fig. 10: in einer vereinfachten Prinzipdarstellung ein Ausführungsbeispiel für eine erfindungsgemäße Einrichtung eines Mobilfunknetzes;
- Fig. 11a: in einer vereinfachten schematischen Darstellung eine Ausgestaltungsvariante der Erfindung;
- Fig. 11b: in einer vereinfachten schematischen Darstellung eine weitere Ausgestaltungsvariante der Erfindung;
- Fig. 11c: in einer vereinfachten schematischen Darstellung eine weitere Ausgestaltungsvariante der Erfindung;
- Fig.11d: in einer vereinfachten schematischen Darstellung eine weitere Ausgestaltungsvariante der Erfindung;
- Fig. 12: in einer Prinzipdarstellung ein weiteres Ausführungsbeispiel für ein erfindungsgemäßes Verfahren; und
- Fig. 13: in einem Ablaufdiagramm ein weiteres Ausführungsbeispiel für ein erfindungsgemäßes Verfahren.

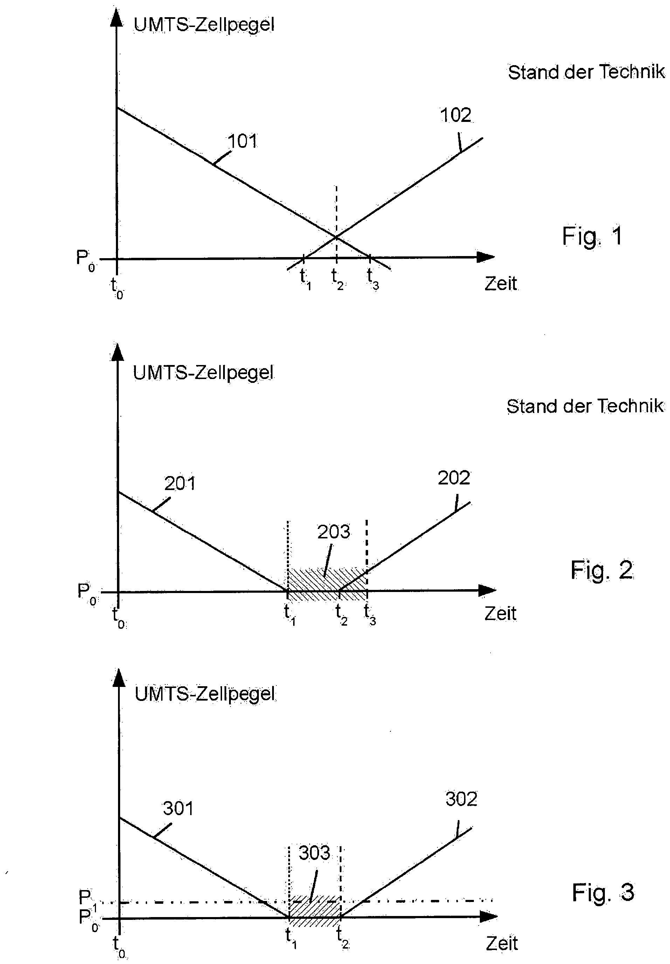

In Fig. 1 ist in einer Prinzipdarstellung ein im Stand der Technik bekannter Verbindungswechsel eines seinen Aufenthaltsort in einem Mobilfunknetz während einer Datenübertragung verändernden Mobilfunktelefons von einer Funkzelle (in der Fig. 1 nicht dargestellt) des Mobilfunknetzes, vorliegend einem Mobilfunknetz gemäß dem UMTS-Mobilfunkstandard, zu einer weiteren Funkzelle des Mobilfunknetzes (UMTS) gezeigt. Dazu ist in einem Koordinatensystem ein sich aufgrund der Änderung des Aufenthaltsortes des Mobilfunktelefons zeitlich ändernder Zellpegel 101 einer ersten Funkzelle des Mobilfunknetzes und ein sich zeitlich ändernder Zellpegel 102 einer zweiten Funkzelle des Mobilfunknetzes als Funktion der Zeit in vereinfachter Weise dargestellt. Der Zellpegel P₀ stellt dabei den Wert des Zellpegels dar, der für eine Nutzung mittels des Mobilfunktelefons nicht mehr ausreichend ist. Das heißt, dass bei einer Annäherung an einen Zellpegel P₀ einer genutzten Funkzelle die Signalqualität in Bezug auf die genutzte Funkzelle während einer bestehenden Datenverbindung einen Verbindungswechsel in eine andere Funkzelle erforderlich macht.

In Fig. 1 nutzt das Mobilfunktelefon für eine Datenübertragung zunächst, das heißt für eine Zeit kleiner t₂ die Funkzelle mit dem Zellpegel 101. Dabei misst das Mobilfunktelefon aktuell empfangbare Zellpegel, für eine Zeit kleiner t₁ also den Zellpegel 101. Ab dem Zeitpunkt t₁ empfängt das Mobilfunktelefone neben dem Zellpegel 101 der ersten Funkzelle auch den Zellpegel 102 der zweiten Funkzelle. In Abhängigkeit von der Stärke des jeweiligen Zellpegels wird dann entschieden, welche Funkzelle mittels des Mobilfunktelefons zu nutzen ist. Da, wie in Fig. 1 dargestellt, der Zellpegel 102 ab einem Zeitpunkt t₂, in Fig. 1 durch eine gestrichelte Linie hervorgehoben, stärker ist als der Zellpegel 101, wird ein Wechsel von der ersten Funkzelle mit dem Zellpegel 101 in die zweite Funkzelle mit dem Zellpegel 102 initiiert, obwohl das Signal beziehungsweise der Zellpegel 101 der ersten Funkzelle noch bis zum Zeitpunkt t₃ seitens des Mobilfunktelefons empfangbar ist. Die Datenverbindung bleibt bei dem Wechsel beziehungsweise dem Handover von der ersten Funkzelle in die zweite Funkzelle bestehen, das heißt es erfolgt keine Unterbrechung der Datenübertragung.

Häufig tritt allerdings der Fall auf, dass während einer bestehenden Datenverbindung die Signalqualität beziehungsweise der mittels eines Mobilfunktelefons empfangbare Zellpegel einer ersten Funkzelle gemäß einem ersten Mobilfunkstandard einen Wechsel in eine andere Funkzelle erforderlich macht, die Signalqualität beziehungsweise der Zellpegel weiterer Funkzellen gemäß dem ersten Mobilfunkstandard allerdings zu dem Zeitpunkt nicht ausreichend ist, um von dem Mobilfunktelefon für die Datenverbindung nutzbar zu sein. Befindet sich das Mobilfunktelefon zu einem solchen Zeitpunkt in dem Versorgungsbereich einer weiteren Funkzelle gemäß einem zweiten Mobilfunkstandard, ist gemäß dem derzeitigen Stand der Technik ein Verbindungswechsel in die Funkzelle gemäß dem zweiten Mobilfunkstandard vorgesehen. Ein solcher Verbindungswechsel während einer bestehenden Datenverbindung eines seinen Aufenthaltsort ändernden Mobilfunktelefons ist in einer Prinzipdarstellung vereinfacht in Fig. 2 dargestellt.

Wie in Fig. 1 ist auch in Fig. 2 in einer vereinfachten Darstellung in einem Koordinatensystem ein sich aufgrund der Änderung des Aufenthaltsortes des Mobilfunktelefons zeitlich ändernder Zellpegel 201 einer ersten Funkzelle des Mobilfunknetzes und ein sich zeitlich ändernder Zellpegel 202 einer zweiten Funkzelle eines Mobilfunknetzes gemäß einem ersten Mobilfunkstandard, vorliegenden eines UMTS-Mobilfunkstandards, als Funktion der Zeit dargestellt. Der Zellpegel P₀ stellt dabei den Wert des Zellpegels dar, der für eine Nutzung mittels des Mobilfunktelefons nicht mehr ausreichend ist.

In Fig. 2 nutzt das Mobilfunktelefon für eine Datenverbindung zunächst eine erste Funkzelle des UMTS-Mobilfunknetzes mit einem Zellpegel 201 und befindet sich zudem in einem in Fig. 2 nicht dargestellten Versorgungsbereich wenigstens einer weiteren Funkzelle gemäß einem zweiten Mobilfunkstandard, vorliegend einem GSM-Mobilfunkstandard. Da der Zellpegel 201 und somit die Signalqualität der ersten Funkzelle gemäß dem UMTS-Mobilfunkstandard mit zunehmender Zeit abnimmt, macht die Signalqualität in Bezug auf die genutzte Funkzelle gemäß dem UMTS-Mobilfunkstandard während der bestehenden Datenverbindung einen Verbindungswechsel in eine andere Funkzelle erforderlich. Da der Zellpegel 202 der zweiten Funkzelle gemäß dem UMTS-Mobilfunkstandard aber bis zu dem Zeitpunkt t₁ (in Fig. 2 durch die feingestrichelte Linie hervorgehoben), an dem der Zellpegel den Wert P₀ erreicht bzw. unterschreitet, auch noch unterhalb des Zellpegels P₀ liegt, kann das Mobilfunktelefon nicht in eine Funkzelle gemäß dem UMTS-Mobilfunkstandard wechseln. Stattdessen wird das Mobilfunktelefon in einen GSM-Betrieb umgeschaltet. Ein entsprechender Systemwechsel von UMTS zu GSM wird ab dem Zeitpunkt t₁ initiiert. Die bestehende Datenverbindung unter Nutzung der UMTS-Funkzelle wird dabei unterbrochen und dann bei erfolgtem Wechsel zu einer Funkzelle gemäß dem GSM-Mobilfunkstandard wieder aufgenommen. Wenn dann, wie in Fig. 2 dargestellt, ab dem Zeitpunkt t₃ (in Fig. 2 durch die gestrichelte Linie hervorgehoben), ein Signal beziehungsweise ein Zellpegel 202 einer Funkzelle gemäß einem UMTS-Mobilfunkstandard mit einem Zellpegel, der um einen gewissen Schwellwert den Zellpegel P₀ übersteigt, seitens des Mobilfunktelefons empfangbar ist, wird die Datenverbindung erneut unterbrochen, ein Verbindungswechsel von der GSM-Funkzelle zu der UMTS-Funkzelle durchgeführt und die Datenverbindung nach dem erfolgten Wechsel in die UMTS-Funkzelle mit dem Zellpegel 202 wieder aufgenommen. Das heißt, dass das Mobilfunktelefon zwischen den Zeitpunkten t₁ und t₃ (in Fig. 2 ist diese Zeitspanne 203 durch Schraffur gekennzeichnet) das UMTS-Mobilfunknetz nicht nutzt und insofern innerhalb diese Zeitspanne die Datenübertragung gegenüber der vorhergehenden Nutzung der UMTS-Funkzelle deutlich schlechter ist und stark verzögert wird. Dies ist insbesondere darauf zurückzuführen, dass in der Zeitspanne 203 bei dem Systemwechsel von der UMTS-Funkzelle zu der GSM-Funkzelle systembedingt eine Unterbrechung der Datenverbindung von üblicherweise etwa 15 bis 20 Sekunden erfolgt. Der erneute Systemwechsel von der GSM-Mobilfunkzelle zu der UMTS-Mobilfunkzelle nach Empfang eines nutzbaren UMTS-Zellpegels mittels des Mobilfunktelefons führt zu einer weiteren Unterbrechung der Datenverbindung von etwa 4 bis 7 Sekunden. Somit ist die Datenverbindung des Mobilfunktelefons insgesamt für eine Zeit von etwa 20 bis 30 Sekunden unterbrochen, wodurch die Datenübertragung stark verzögert wird. Eine weitere Verzögerung der Datenübertragung resultiert aus der langsameren Datenübertragungsgeschwindigkeit in der GSM-Funkzelle, die selbst bei Nutzung eines weiterentwickelten GPRS-Datendienstes im Allgemeinen deutlich unter der Datenübertragungsgeschwindigkeit von Datendiensten von UMTS-Mobilfunknetzen liegt.

In Fig. 3 ist in einer vereinfachten Darstellung in einem Koordinatensystem ein sich aufgrund einer Änderung des Aufenthaltsortes eines in einem Mobilfunknetz eine Datenverbindung nutzenden mobilen Endgerätes zeitlich ändernder Zellpegel 301 einer ersten Funkzelle gemäß einem ersten Mobilfunkstandard, vorliegend einem UMTS-Mobilfunkstandard, und ein sich entsprechend zeitlich ändernder Zellpegel 302 einer zweiten Funkzelle gemäß dem UMTS-Mobilfunkstandard als Funktion der Zeit dargestellt. Der Zellpegel P₀ ist dabei der Wert des Zellpegels, der für eine Nutzung mittels des Mobilfunktelefons nicht mehr ausreichend ist. Das mobile Endgerät ist dabei sowohl für einen Betrieb in dem UMTS-Mobilfunknetz als auch für einen Betrieb in einem GSM-Mobilfunknetz ausgebildet. In der Zeit zwischen den Zeitpunkten t₀ und t₁ befindet sich das mobile Endgerät in dem Versorgungsbereich einer Funkzelle des UMTS-Mobilfunknetzes mit dem Zellpegel 301, welche das mobile Endgerät für die Datenverbindung, vorliegend eine paketorientierte Datenverbindung, nutzt. Darüber hinaus befindet sich das mobile Endgerät in dem gesamten dargestellten Zeitbereich in dem Versorgungsbereich wenigstens einer weiteren, in Fig. 3 nicht dargestellten Funkzelle gemäß einem weiteren Mobilfunkstandard, vorliegend einem GSM-Mobilfunkstandard. Die Signalqualität in Bezug auf die genutzte Funkzelle des UMTS-Mobilfunknetzes macht dabei wegen des abnehmenden UMTS-Zellpegels 301 während der bestehenden Datenverbindung einen Verbindungswechsel in eine andere Funkzelle erforderlich. Da der Zellpegel 302 der weiteren Funkzelle gemäß dem UMTS-Mobilfunknetz zum Zeitpunkt t₁ (in Fig. 3 durch die feingestrichelte Linie dargestellt) noch unter dem Wert P₀ liegt und somit mittels des mobilen Endgerätes noch nicht nutzbar ist, könnte nur ein Wechsel in die Funkzelle gemäß dem GSM-Mobilfunkstandard, wie in Bezug auf Fig. 2 beschrieben, erfolgen.

Wenn die Signalqualität in Bezug auf die genutzte Funkzelle gemäß dem ersten Mobilfunkstandard während der bestehenden Datenverbindung einen Verbindungswechsel in eine anderer Funkzelle erforderlich macht, ist im Unterschied zu dem in Bezug auf Fig. 2 beschriebenen Verfahrensablauf gemäß der vorliegenden Erfindung vorteilhafterweise vorgesehen, dass eine Auswertung hinsichtlich eines innerhalb eines vordefinierten Zeitintervalls erfolgenden Wiedereintritts in den Versorgungsbereich einer Funkzelle gemäß dem UMTS-Mobilfunkstandard durchgeführt wird und bei auf der Auswertung beruhender Feststellung, dass ein Wiedereintritt in den Versorgungsbereich einer Funkzelle gemäß dem UMTS-Mobilfunkstandard innerhalb des vordefinierten Zeitintervalls erfolgen wird, und dass ein Verbindungswechsel in eine Funkzelle gemäß dem GSM-Mobilfunkstandard unterdrückt wird, damit das mobile Endgerät innerhalb des vordefinierten Zeitintervalls eine Verbindung zu einer Funkzelle gemäß dem ersten Mobilfunkstandard aufbauen kann. Das vordefinierte Zeitintervall ist dabei größer als das Zeitintervall [t₁, t₂] 303, welches in Fig. 3 durch Schraffur gekennzeichnet ist und vorliegend 15 Sekunden beträgt. Die Auswertung beginnt vorteilhafterweise wenn der UMTS-Zellpegel einen definierten Wert P₁, welcher in Fig. 3 durch die strich-punktierte Linie dargestellt ist, unterschreitet. Dieser Wert ist vorteilhafterweise seitens des mobilen Endgerätes und/oder seitens des Mobilfunknetzes einstellbar. Innerhalb des Zeitintervalls, in dem ein Verbindungsaufbau in eine Funkzelle gemäß dem GSM-Mobilfunkstandard unterdrückt wird, wird, wie in Fig. 3 dargestellt ist, zu dem Zeitpunkt t₂ eine Verbindung zu der Funkzelle des UMTS-Mobilfunknetzes mit dem Zellpegel 302 aufgebaut und die Datenübertragung fortgesetzt. In dem Zeitintervall [t₁, t₂] 303 ist die Verbindung zwischen dem Mobilfunknetz und dem mobilen Endgerät unterbrochen. Diese kurzzeitige Unterbrechung von nur wenigen Sekunden, beispielsweise 5 Sekunden, führt dabei vorteilhafterweise zu weniger Verzögerungen bei der Datenübertragung als ein in Bezug auf Fig. 2 beschriebener Wechsel in eine Funkzelle gemäß dem GSM-Mobilfunkstandard, der systembedingt bereits eine Unterbrechung der Datenverbindung von üblicherweise wenigstens 15 Sekunden nach sich zieht.

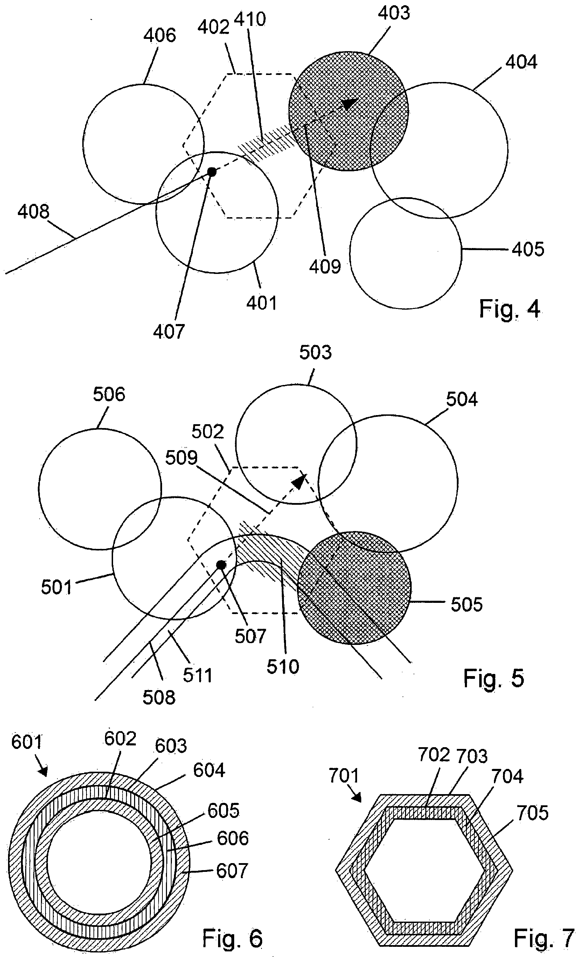

Eine weitere besonders vorteilhafte Ausgestaltungsvariante des erfindungsgemäßen Verfahrens wird unter Bezugnahme auf Fig. 4 und Fig. 5 erläutert. In Fig. 4 und Fig. 5 sind jeweils in einer Prinzipdarstellung Funkzellen gemäß einem UMTS-Mobilfunkstandard 401, 403, 404, 405, 406 beziehungsweise 501, 503, 504, 505, 506 und jeweils eine Funkzelle 402 beziehungsweise 502 gemäß einem GSM-Mobilfunkstandard dargestellt. Die Beschränkung der Darstellung auf jeweils eine Funkzelle gemäß dem GSM-Mobilfunkstandard dient der besseren Übersichtlichkeit. Insbesondere kann auch eine flächendeckende Versorgung mit Funkzellen gemäß einem GSM-Mobilfunkstandard zugrunde gelegt werden. Ebenso dient die unterschiedlich gewählte Darstellung der Funkzellen des UMTS-Mobilfunknetzes als kreisförmige Zellen und der Funkzellen des GSM-Mobilfunknetzes als wabenförmige Zellen lediglich der besseren Unterscheidbarkeit der zu unterschiedlichen Mobilfunkstandards gehörenden Funkzellen und ist nicht beschränkend. Die durch die Linien gekennzeichneten Begrenzungen der Funkzellen stellen in Fig. 4 und Fig. 5 die Zellgrenzen dar, außerhalb derer die Signale der jeweiligen Funkzelle nicht mehr für eine Datenverbindung mittels eines in einem Mobilfunknetze betreibbaren mobilen Endgerätes genutzt werden können.

Ein mobiles Endgerät, welches sowohl für einen Betrieb gemäß dem UMTS-Mobilfunkstandard als auch für einen Betrieb gemäß dem GSM-Mobilfunkstandard ausgebildet ist, ändert erfindungsgemäß seinen Aufenthaltsort während einer bestehenden Datenverbindung, beispielsweise zur Übertragung von Multimediadaten. In Bezug auf Fig. 4 wird eine Änderung des Aufenthaltsorts des mobilen Endgerätes zugrunde gelegt, weil der Nutzer des mobilen Endgerätes mit einer Bahn unterwegs ist. In Bezug auf Fig. 5 wird eine Änderung des Aufenthaltsortes des mobilen Endgerätes zugrunde gelegt, weil der Nutzer des mobilen Endgerätes mit einem PKW auf einer Straße 511 unterwegs ist. Der aktuelle Aufenthaltsort 407 beziehungsweise 507 des mobilen Endgerätes ist jeweils durch einen Punkt gekennzeichnet. Das mobile Endgerät befindet sich dabei sowohl in Fig. 4 als auch in Fig. 5 in dem Versorgungsbereich einer Funkzelle 401 beziehungsweise 501 des UMTS-Mobilfunknetzes, welche es für die Datenverbindung nutzt. In dem Versorgungsbereich einer Funkzelle kann das mobile Endgerät die Signale der Funkzelle für die Datenverbindung nutzen. Ferner befindet sich das mobile Endgerät an dem Aufenthaltsort 407 beziehungsweise 507 in dem Versorgungsbereich einer Funkzelle 402 beziehungsweise 502 gemäß dem GSM-Mobilfunknetz. Da sich das mobile Endgerät an dem jeweiligen Aufenthaltsort 407 beziehungsweise 507 nahe der Zellgrenze der jeweiligen Funkzelle 401 beziehungsweise 501 befindet, macht die Signalqualität, insbesondere hinsichtlich des zu den Zellgrenzen hin abnehmenden Pegels des genutzten Signals der entsprechenden Zelle (Zellpegel), in Bezug auf die genutzte Funkzelle 401 beziehungsweise 501 während der bestehenden Datenverbindung einen Verbindungswechsel in eine andere Funkzelle erforderlich. Eine Festlegung, wann die Signalqualität einen Verbindungswechsel in eine andere Funkzelle erforderlich macht, kann beispielsweise auf die in Zusammenhang mit Fig. 6 und Fig. 7 beschriebene Weise erfolgen.

Da sich das mobile Endgerät an dem jeweiligen Aufenthaltsort 407 beziehungsweise 507 nur in dem Versorgungsbereich der jeweiligen Funkzelle 401 beziehungsweise 501 befindet und nicht in dem Versorgungsbereich einer weiteren Funkzelle des UMTS-Mobilfunknetzes, ist ein Wechsel in eine andere Funkzelle des UMTS-Mobilfunknetzes nicht möglich. Wie in Fig. 4 beziehungsweise in Fig. 5 dargestellt, befinden sich in der Nähe der Funkzelle 401 beziehungsweise 501 aber weitere Funkzellen 403, 404, 405, 406 beziehungsweise 503, 504, 505, 506 gemäß dem UMTS-Mobilfunkstandard. Der unter Bezugnahme auf Fig. 2 beschriebene Nachteil eines Wechsels von der UMTS-Funkzelle 401 beziehungsweise 501 in die GSM-Funkzelle 402 beziehungsweise 502 wird erfindungsgemäß dadurch vermieden, dass unter Nutzung von ortsbezogenen Zellgrenzen (in Fig. 4 und Fig. 5 idealisiert als Kreise dargestellt) als ortsbezogene Information hinsichtlich der Versorgungsbereiche von Funkzellen gemäß dem UMTS-Mobilfunkstandard und unter Nutzung von Informationen hinsichtlich des Aufenthaltsortes des mobilen Endgerätes eine Auswertung hinsichtlich eines innerhalb eines seitens des Mobilfunknetzbetreibers vorgegebenen Zeitintervalls von 20 Sekunden erfolgenden Wiedereintritts in den Versorgungsbereich einer Funkzelle gemäß dem UMTS-Mobilfunkstandard durchgeführt wird. Die Informationen hinsichtlich des Aufenthaltsortes, die vorliegend mittels A-GPS (A-GPS: Assisted Global Positioning System) unter Nutzung des mobilen Endgerätes bestimmt werden, umfassen den aktuellen Aufenthaltsort 407 beziehungsweise 507, Informationen, welche Strecke 408 beziehungsweise 508 das mobile Endgerät innerhalb eines Zeitintervalls bis zu dem aktuellen Aufenthaltsort zurückgelegt hat (in Fig. 4 und Fig. 5 durch eine durchgezogene schwarze Linie dargestellt), die Richtung 409 beziehungsweise 509 in welche sich das mobile Endgerät aktuell bewegt (in Fig. 4 und Fig. 5 durch einen gestrichelten Pfeil dargestellt) und die Geschwindigkeit, mit welcher sich das mobile Endgerät bewegt beziehungsweise mit welcher das mobile Endgerät seinen Aufenthaltsort ändert.

Bei der in Fig. 4 im Zusammenhang mit der Ausführung des erfindungsgemäßen Verfahrens dargestellten Auswertung wird ausgehend von den vorgenannten Informationen bezüglich des Aufenthaltsortes des mobilen Endgerätes und unter Nutzung der Informationen hinsichtlich der ortsbezogenen Zellgrenzen der Funkzellen des UMTS-Mobilfunknetzes bestimmt, dass die Funkzelle 403 gemäß dem UMTS-Mobilfunkstandard diejenige Funkzelle des UMTS-Mobilfunknetzes ist, welche das mobile Endgerät als nächste erreichen wird.

Bei einer besonders vorteilhaften Ausgestaltung des erfindungsgemäßen Verfahrens werden neben den oben genannten Informationen bezüglich des Aufenthaltsortes zudem weitere, die Umgebung des mobilen Endgerätes betreffende Informationen, insbesondere Geoinformationen und Informationen die Verkehrsinfrastruktur betreffend, ausgewertet. So wird bei der in Fig. 5 dargestellten erfindungsgemäßen Auswertung der Verlauf der Straße 511 berücksichtigt, was zu dem Ergebnis führt, dass nicht die Funkzelle 503 als nächste Funkzelle des UMTS-Mobilfunknetzes bestimmt wird, sondern die Funkzelle 505. Vorteilhafterweise ist seitens des mobilen Endgerätes einstellbar, ob entsprechende Umgebungsinformationen, wie Geoinformationen und/oder Informationen die Verkehrsinfrastruktur betreffend, bei der Auswertung berücksichtigt werden sollen. Gemäß einer weiteren vorteilhaften Ausgestaltung sind seitens des mobilen Endgerätes durch den Nutzer auswählbare Profile vorgegeben, durch deren Auswahl der Nutzer vorteilhafterweise angeben kann, mit welcher Art von Verkehrsmittel er unterwegs ist. Vorteilhafterweise werden erfindungsgemäße Parameter, vorteilhafterweise der im Zusammenhang mit Fig. 3 beschriebene Schwellwert des Signalpegels P₁ und/oder die Länge des vordefinierten Zeitintervalls, innerhalb dessen ein Wiedereintritt in den Versorgungsbereich einer Funkzelle gemäß demselben Mobilfunkstandard erfolgen soll, in Abhängigkeit von dem ausgewählten Profil angepasst. Vorteilhafterweise ist zudem eine seitens des mobilen Endgerätes automatisch erfolgende Profilauswahl vorgesehen, welche durch Auswertung der Informationen hinsichtlich des Aufenthaltsortes des mobilen Endgerätes, vorzugsweise der Geschwindigkeit mit der das mobile Endgerät seinen Aufenthaltsort ändert, erfolgt.

Ist eine Funkzelle 403 beziehungsweise 505 als nächste Funkzelle, also quasi als Zielzelle, bestimmt, wird unter Berücksichtigung der Geschwindigkeit, mit der sich das mobile Endgerät bewegt, erfindungsgemäß in den im Zusammenhang mit Fig. 4 und Fig. 5 erläuterten Ausgestaltungsvarianten der Erfindung die Zeit bestimmt, innerhalb der ein Eintritt in die für eine weitergehende Nutzung bestimmte Funkzelle 403 beziehungsweise 505 des UMTS-Mobilfunknetzes erfolgen wird. In einem weiteren Verfahrensschritt des erfindungsgemäßen Verfahrens wird dann geprüft, ob die ermittelte Zeit innerhalb des vorgegebenen Zeitintervalls von 20 Sekunden liegt, also kürzer als 20 Sekunden ist oder maximal 20 Sekunden beträgt. In den in Fig. 4 und Fig. 5 dargestellten Ausgestaltungsvarianten beträgt die ermittelte Zeit für einen voraussichtlichen Wiedereintritt in eine Funkzelle gemäß dem UMTS-Mobilfunkstandard weniger als 20 Sekunden, sodass ein Verbindungswechsel in die Funkzelle 402 beziehungsweise 502 gemäß dem GSM-Mobilfunkstandard unterdrückt wird. Das mobile Endgerät ist dann nach Verlassen der Funkzelle 401 beziehungsweise 501 in einem in Fig. 4 und Fig. 5 durch Schraffur gekennzeichneten Aufenthaltsbereich 410 beziehungsweise 510 nicht mit dem Mobilfunknetz verbunden, sodass die Datenverbindung kurzzeitig unterbrochen ist. Sobald das mobile Endgerät in den Versorgungsbereich der Funkzelle 403 beziehungsweise 505 des UMTS-Mobilfunknetzes eintritt, wird die Datenverbindung wieder aufgenommen.

In Fig. 6 und Fig. 7 ist jeweils in einer stark vereinfachten Weise eine Funkzelle 601 beziehungsweise 701 eines Mobilfunknetzes dargestellt. Gemäß einem weiteren vorteilhaften Ausgestaltungsaspekt in Bezug auf das erfindungsgemäße Verfahren sind die Zellgrenzen der Funkzellen 601 beziehungsweise 701 für unterschiedliche in einem Mobilfunknetz betreibbare mobile Endgeräte in Abhängigkeit von der Sende- und/oder Empfangsleistung der unterschiedlichen mobilen Endgeräte in ihrer räumlichen Ausdehnung unterschiedlich definiert. So weist die Funkzelle 601 für eine Gruppe von mobilen Endgeräten A mit vergleichbarer Sende- und Empfangsleistung die Zellgrenze 602 auf. In Bezug auf eine zweite Gruppe B von mobilen Endgeräten ist die Zellgrenze 603 definiert und für mobile Endgeräte des Typs C, welche vorliegend die höchste Sende- und Empfangsleistung aufweisen, ist die Zellgrenze 604 definiert. In Bezug auf die in Fig. 7 dargestellte Funkzelle 701 gilt die Zellgrenze 702 für mobile Endgeräte, welche aufgrund nahezu identischer Sende- und Empfangsleistungen einer Gruppe D zugeordnet sind. Die Zellgrenze 703 gilt für eine weitere Gruppe E von mobilen Endgeräten, welche eine höhere Sende- und Empfangsleistung aufweisen, als die mobilen Endgeräte der Gruppe D. Durch diese Individualisierung der Zellgrenzen ist vorteilhafterweise im Rahmen der erfindungsgemäßen Auswertung hinsichtlich eines Wiedereintritts in eine Funkzelle gemäß einem ersten Mobilfunkstandard eine präzisere Abschätzung hinsichtlich der Zeitdauer bis zu dem Wiedereintritt realisierbar.

In Fig. 6 und Fig. 7 sind zudem gemäß einem weiteren vorteilhaften Ausgestaltungsaspekt der vorliegenden Erfindung jeweils durch unterschiedliche Schraffuren gekennzeichnete Bereiche 605, 606 und 607 beziehungsweise 704 und 705 definiert. Die Bereiche sind jeweils den mobilen Endgeräten beziehungsweise der Gruppe von mobilen Endgeräten zugeordnet, für die die entsprechend definierte Zellgrenze, die den Bereich begrenzt, gilt. In den jeweiligen Bereichen 605, 606 und 607 beziehungsweise 704 und 705 unterschreitet der Signalpegel einer Funkzelle einen vordefinierten Wert, sodass bei Eintritt des mobilen Endgerätes in diesen Bereich die Signalqualität in Bezug auf die mit einem mobilen Endgerät genutzte Funkzelle 601 beziehungsweise 701 einen Wechsel in eine andere Funkzelle erforderlich macht oder zumindest erforderlich erscheinen lässt und eine erfindungsgemäße Auswertung hinsichtlich eines Wiedereintritts in den Versorgungsbereich einer Funkzelle gemäß demselben Mobilfunkstandard initiiert wird.

Die in Fig. 6 und Fig. 7 dargestellten Zellgrenzen 603, 604, 605 beziehungsweise 702, 703 und Bereiche 605, 606, 607 beziehungsweise 704, 705 sind vorliegend idealisiert streng geometrisch dargestellt. Tatsächlich können die Zellgrenzen und/oder Bereiche von dieser idealisierten geometrischen Darstellung abweichen. Eine erfindungsgemäße individualisierte Zuordnung von Zellgrenzen und/oder Bereichen zu unterschiedlichen mobilen Endgeräten ist entsprechend an die tatsächlichen Zellgrenzen angepasst zu realisieren.

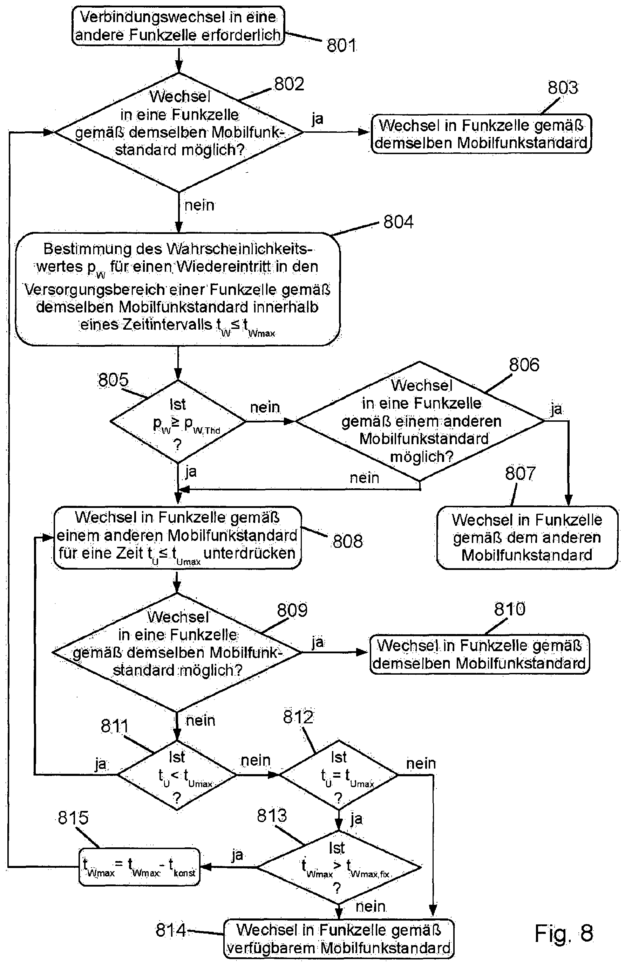

In Fig. 8 ist eine vorteilhafte Ausgestaltung eines erfindungsgemäßen Verfahrens nach Art eines Ablaufdiagramms dargestellt. Ausgangspunkt der Darstellung ist dabei, dass die Signalqualität in Bezug auf eine mit einem mobilen Endgerät genutzte Funkzelle gemäß einem ersten Mobilfunkstandard während einer bestehenden Datenverbindung einen Verbindungswechsel in eine andere Funkzelle erforderlich macht (in Fig. 8 mit 801 bezeichnet).

Das Erfordernis eines Verbindungswechsels kann dabei vorteilhafterweise durch Eintritt in einen Bereich der Funkzelle erfolgen, in welchem der Signalpegel unterhalb eines vordefinierten Wertes liegt, wie im Zusammenhang mit Fig. 6 und Fig. 7 erläutert (in Fig. 8 nicht dargestellt). Darüber hinaus ist gemäß einer weiteren vorteilhaften Ausgestaltung des erfindungsgemäßen Verfahrens vorgesehen, dass des Weiteren die Bewegungsrichtung und/oder die Bewegungsgeschwindigkeit des mobilen Endgerätes berücksichtigt wird, insbesondere um unter Berücksichtigung dieser Daten und der Signalqualität beziehungsweise der Stärke des Signalpegels in Bezug auf die genutzte Funkzelle zu ermitteln, für welche Zeitdauer eine Nutzung der aktuell genutzten Funkzelle noch möglich ist. Unterschreitet die ermittelte Zeitdauer einen vorgegebenen Wert, beispielsweise 10 Sekunden, so wird dies gemäß dieser vorteilhaften Ausgestaltung des erfindungsgemäßen Verfahrens als Kriterium für die Erforderlichkeit eines Verbindungswechsels in eine andere Funkzelle genutzt (in Fig. 8 nicht dargestellt).

Ist ein Erfordernis für einen Verbindungswechsel, vorteilhafterweise auf die zuvor beschriebene Weise, in eine andere Funkzelle festgestellt worden (in Fig. 8 mit 801 bezeichnet), wird in einem Schritt 802 zunächst geprüft, ob ein Wechsel in eine Funkzelle gemäß demselben Mobilfunkstandard möglich ist. Ist dies der Fall, so erfolgt ein Wechsel in diese Funkzelle (in Fig. 8 mit 803 bezeichnet). Ist ein Wechsel in eine Funkzelle gemäß demselben Mobilfunkstandard nicht möglich, so wird einem weiteren Schritt 804 des erfindungsgemäßen Verfahrens ein Wahrscheinlichkeitswert p_{w} bestimmt. Dieser Wahrscheinlichkeitswert p_{w} gibt die Wahrscheinlichkeit für einen Wiedereintritt in den Versorgungsbereich einer Funkzelle gemäß demselben Mobilfunkstandard innerhalb eines vordefinierten Zeitintervalls t_{w} an. Das Zeitintervall t_{w} ist erfindungsgemäß einstellbar, vorzugsweise seitens des mobilen Endgerätes und/oder seitens des Mobilfunknetzes, und weist vorteilhafterweise eine Länge auf, die zwischen 20 und 30 Sekunden liegt.

Die Wahrscheinlichkeitswertbestimmung erfolgt dabei unter Nutzung von ortsbezogenen Informationen hinsichtlich der Versorgungsbereiche, vorteilhafterweise unter Berücksichtigung von Zellgrenzen, die durch geographische Koordinaten bestimmten Bereichen zugewiesen sind, und unter Nutzung von Informationen hinsichtlich des Aufenthaltsortes des mobilen Endgerätes. Den Aufenthaltsort des mobilen Endgerätes betreffende Informationen sind dabei vorteilhafterweise geographische Koordinaten des aktuellen Aufenthaltsortes des mobilen Endgerätes, die Geschwindigkeit, mit der sich das mobile Endgerät bewegt, vorteilhafterweise gemittelt über einen definierten Zeitraum, die Richtung, in die das mobile Endgerät seinen Aufenthaltsort ändert, sowie eine Historie dieser Informationen. Anhand dieser Informationen wird eine Zeit bestimmt, die das mobile Endgerät für einen Wiedereintritt in den Versorgungsbereich einer demselben Mobilfunkstandard entsprechenden Funkzelle benötigt. Diese Zeit, in einer weiteren vorteilhaften Ausgestaltungsvariante ergänzt um einen additiven Korrekturfaktor, wird vorteilhaferweise gleichgesetzt mit der Zeit, die das mobile Endgerät entsprechend einer Berechnung benötigt, um von der Zellgrenze der aktuell genutzten Funkzelle zu der Zellgrenze einer Funkzelle gemäß demselben Mobilfunkstandard zu gelangen. Die Ermittlung des Wahrscheinlichkeitswertes p_{w} für einen Wiedereintritt in den Versorgungsbereich einer Funkzelle gemäß demselben Mobilfunkstandard innerhalb eines Zeitintervalls t_{w} hängt vorteilhafterweise davon ab, wie stark die Informationen hinsichtlich des Aufenthaltsortes des mobilen Endgerätes innerhalb eines bestimmten Zeitintervalls variieren. Bleibt die Geschwindigkeit, mit der das mobile Endgerät seinen Aufenthaltsort ändert, sowie die Richtung, in die das mobile Endgerät seinen Aufenthaltsort ändert, über ein Zeitintervall im Wesentlichen konstant, so wird der Wahrscheinlichkeitswert p_{w} höher ausfallen, als wenn die Geschwindigkeit, mit der das mobile Endgerät seinen Aufenthaltsort ändert, stark schwankt und/oder die Richtung, in die das mobile Endgerät seinen Aufenthaltsort ändert, stark variiert, wodurch eine Bestimmung einer nächsten Funkzelle, wie im Zusammenhang mit Fig. 4 und Fig. 5 beschrieben, weniger zuverlässig erfolgen kann.

In einem weiteren Verfahrensschritt 805 wird erfindungsgemäß überprüft, ob der bestimmte Wahrscheinlichkeitswert p_{w} größer oder gleich einem vorbestimmten Schwellwert p_{W,Thd} ist, also ob die Wahrscheinlichkeit für einen Wiedereintritt in den Versorgungsbereich einer Funkzelle gemäß demselben Mobilfunkstandard innerhalb des vordefinierten Zeitintervalls t_{W} einen vorbestimmten Wert übersteigt. Sollte die Auswertung ergeben, dass dies nicht der Fall ist, wird in einem Schritt 806 geprüft, ob ein Wechsel in eine Funkzelle gemäß einem anderen Mobilfunkstandard möglich ist, und bejahendenfalls in einem Schritt 807 ein Wechsel in diese Funkzelle vollzogen.

Ist der Wahrscheinlichkeitswert p_{W} dagegen größer oder gleich dem Schwellwert P_{W,Thd} oder ist ein Wechsel in eine Funkzelle gemäß einem anderen Mobilfunkstandard nicht möglich, wird in einem Verfahrensschritt 808 der Wechsel in eine Funkzelle gemäß einem anderen Mobilfunkstandard für eine Zeitdauer t_{U} unterdrückt, wobei der Wechsel in eine andere Funkzelle maximal für eine Zeitdauer t_{Umax} unterdrückt wird. In dem Zeitintervall, in dem der Wechsel in eine Funkzelle gemäß einem anderen Mobilfunkstandard unterdrückt wird, wird in einem Verfahrensschritt 809 geprüft, ob ein Wechsel in eine Funkzelle gemäß demselben Mobilfunkstandard möglich ist. Ist dies der Fall, so wird in einem Verfahrensschritt 810 ein Wechsel in diese Funkzelle initiiert. Andernfalls wird in einem Schritt 811 überprüft, ob die Zeitdauer t_{U}, für die ein Wechsel in eine Funkzelle gemäß einem anderen Mobilfunkstandard bereits unterdrückt wurde, noch kleiner ist, als die maximale Zeitdauer t_{Umax}, für die ein Wechsel in eine Funkzelle gemäß einem anderen Mobilfunkstandard maximal unterdrückt werden soll. Ist t_{U} noch kleiner als t_{Umax}, so wird der Wechsel in eine einem anderen Mobilfunkstandard entsprechende Funkzelle weiter unterdrückt (in Fig. 8 mit 808 bezeichnet) und weiterhin geprüft, ob ein Wechsel in eine demselben Mobilfunkstandard entsprechende Funkzelle möglich ist (in Fig. 8 mit 809 bezeichnet). Wenn die Zeitdauer t_{U} gleich der maximalen Zeitdauer t_{Umax} ist (in Fig. 8 mit 812 bezeichnet), also noch kein Wechsel in eine demselben Mobilfunkstandard entsprechende Funkzelle erfolgt ist, könnte erfindungsgemäß grundsätzlich ein Wechsel in eine Funkzelle gemäß einem anderen Mobilfunkstandard zugelassen werden. Da sich das mobile Endgerät einer Zellgrenze einer demselben Mobilfunkstandard entsprechenden Zellgrenze aber mit hoher Wahrscheinlichkeit bereits genähert hat, ist gemäß der in Fig. 8 beschriebenen vorteilhaften Ausgestaltungsvariante eines erfindungsgemäßen Verfahrens vorgesehen, dass erneut ein Wahrscheinlichkeitswert p_{W} für einen Wiedereintritt in den Versorgungsbereich einer Funkzelle gemäß demselben Mobilfunkstandard innerhalb eines Zeitintervalls t_{W} bestimmt wird. Um allerdings der Konsequenz Rechnung zu tragen, dass gegebenenfalls ein Wechsel in eine einem anderen Mobilfunkstandard entsprechende Funkzelle erneut unterdrückt wird, und das mobile Endgerät auf diese Weise mitunter für eine länger Zeitdauer nicht mit einem Mobilfunknetz verbunden ist, wird das Zeitintervall t_{W} in einem Verfahrensschritt 815 um die konstante Zeitdauer tₖₒₙₛₜ verringert. Die Zeitdauer tₖₒₙₛₜ beträgt vorteilhafterweise wenige Sekunden, vorteilhafterweise 5 Sekunden. Mit dem um die Zeitdauer tₖₒₙₛₜ verkürzten Zeitintervall t_{W} wird das Verfahren ab dem Verfahrensschritt 802 erneut durchgeführt. Eine erneute Durchführung des Verfahrens beginnend mit dem Verfahrensschritt 802 nach einem Unterdrücken eines Wechsels in eine Funkzelle gemäß einem anderen Mobilfunkstandard für eine Zeitdauer t_{Umax} erfolgt so lange das Zeitintervall t_{W} größer als ein vordefiniertes minimales Zeitintervall t_{Wmin} ist. In einer vorteilhaften Ausgestaltung des erfindungsgemäßen Verfahrens beträgt das minimale Zeitintervall t_{Wmin} 4 Sekunden. Eine Überprüfung, ob das Zeitintervall t_{W} größer als das minimale Zeitintervall t_{Wmin} ist, erfolgt in dem Verfahrensschritt 813. Wurde das Verfahren schon mehrmals ausgeführt, sodass das Zeitintervall t_{W} aufgrund der Reduzierung in dem Verfahrensschritt 815 nicht mehr größer ist als das minimale Zeitintervall t_{Wmin}, ist vorgesehen, dass das mobile Endgerät gemäß dem Verfahrensschritt 814 in eine Funkzelle gemäß einem verfügbaren Mobilfunkstandard wechselt.

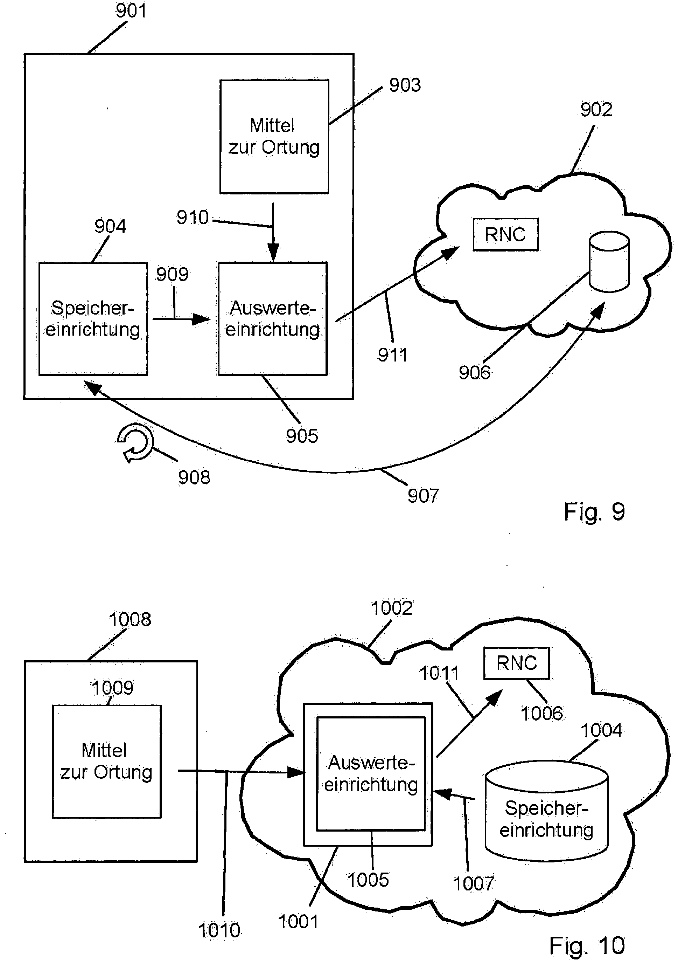

In Fig. 9 ist einer stark vereinfachten Prinzipdarstellung ein Ausführungsbeispiel für ein erfindungsgemäßes mobiles Endgerät 901 zum Betrieb in einem Mobilfunknetz und ein Mobilfunknetz 902 (schematisch als Wolke) dargestellt. Das mobile Endgerät 901 soll vorliegend ein Mobilfunktelefon sein. Von einer Darstellung üblicher Komponenten eines Mobilfunktelefons wurde aus Gründen der Übersichtlichkeit abgesehen. Das mobile Endgerät 901 ist ausgebildet, in einem Mobilfunknetz gemäß einem ersten Mobilfunkstandard und in wenigstens einem weiteren Mobilfunknetz gemäß einem weiteren Mobilfunkstandard betrieben zu werden, insbesondere in einem UMTS- und einem GSM-Mobilfunknetz. Das mobile Endgerät 901 weist Mittel 903 zur satellitengestützten Ortsbestimmung und Navigation auf, insbesondere einen GPS-Empfänger. Ferner weist das mobile Endgerät 901 eine als Flash-Speicher ausgebildete Speichereinrichtung 904 zur Speicherung von ortsbezogenen Informationen hinsichtlich der Versorgungsbereiche von Funkzellen gemäß dem ersten Mobilfunkstandard, insbesondere von dem Verlauf von Zellgrenzen von Funkzellen gemäß dem ersten Mobilfunkstandard. Des Weiteren weist das mobile Endgerät 901 einen Auswerteeinheit 905 auf, welche dazu ausgebildet ist, eine Auswertung hinsichtlich eines innerhalb eines vordefinierten Zeitintervalls erfolgenden Wiedereintritts des mobilen Endgerätes in den Versorgungsbereich einer Funkzelle gemäß einem ersten Mobilfunkstandard durchzuführen, basierend auf der Auswertung festzustellen, in welchem Zeitintervall ein Wiedereintritt des mobilen Endgerätes in den Versorgungsbereich einer Funkzelle gemäß dem ersten Mobilfunkstandard erfolgen wird, das Zeitintervall einem Vergleich mit einem vordefinierten Zeitintervall zu unterziehen, bei Feststellung, dass das Zeitintervall kleiner oder gleich dem vordefinierten Zeitintervall ist, einen Verbindungswechsel des mobilen Endgerätes in eine Funkzelle gemäß dem zweiten Mobilfunkstandard zu unterdrücken und bei Wiedereintritt des mobilen Endgerätes in den Versorgungsbereich einer Funkzelle gemäß dem ersten Mobilfunkstandard innerhalb des vordefinierten Zeitintervalls einen Verbindungsaufbaus zu dieser Funkzelle zu initiieren. Vorliegend wird der Prozessor des mobilen Endgerätes 901 als Auswerteeinrichtung 905 genutzt.

Der Speichereinrichtung 904 werden die ortsbezogenen Informationen hinsichtlich der Versorgungsbereiche von Funkzellen gemäß dem ersten Mobilfunkstandard von einer Datenbank 906 des Mobilfunknetzes 902 bereitgestellt, in Fig. 9 durch den Pfeil 907 symbolisch dargestellt. Entsprechende ortsbezogene Informationen hinsichtlich der Versorgungsbereiche von Funkzellen gemäß dem ersten Mobilfunkstandard werden in bestimmten zeitlichen Abständen zwischen dem mobilen Endgerät 901 und dem Mobilfunknetz 902 synchronisiert, was in Fig. 9 symbolisch durch den Pfeil 908 dargestellt ist. Die Speichereinrichtung 904 stellt die ortsbezogenen Informationen hinsichtlich der Versorgungsbereiche von Funkzellen gemäß dem ersten Mobilfunkstandard der Auswerteeinrichtung 905 zur Verfügung, was symbolisch durch den Pfeil 909 dargestellt ist. Des Weiteren werden unter Nutzung des GPS-Empfängers 903 der Auswerteinrichtung 905 Informationen hinsichtlich des Aufenthaltsortes des mobilen Endgerätes 901 zur Verfügung gestellt, was symbolisch durch den Pfeil 910 dargestellt ist. Das Ergebnis einer mittels der Auswerteeinheit 905 ausgeführten Auswertung nutzt das mobile Endgerät 901, um einen Verbindungswechsel in eine Funkzelle zu initiieren, insbesondere, um einen sogenannten Intersystem-Handover von einer UMTS-Funkzelle zu einer GSM-Funkzelle zu unterbinden, wenn die ausgeführte Auswertung ergeben hat, dass ein Wiedereintritt in eine UMTS-Funkzelle innerhalb eines vordefinierten Zeitintervalls erfolgen wird. Hierfür ist das mobile Endgerät ausgebildet, an das Mobilfunknetz, beispielsweise an den Radio Network Controller (RNC), einen entsprechenden Befehl zu senden (in Fig. 9 symbolisch durch den Pfeil 911 dargestellt), der einen mobilfunknetzseitig initiierten Wechsel von einer UMTS-Funkzelle in eine GSM-Funkzelle unterdrückt.

In Fig. 10 ist eine erfindungsgemäße Einrichtung 1001 eines Mobilfunknetzes 1002 in einer stark vereinfachten Prinzipdarstellung dargestellt. Die Einrichtung 1001 weist Mittel zur Ausführung wenigstens eines der mit der vorliegenden Erfindung vorgeschlagenen Verfahrens auf. Die Einrichtung 1001 ist ausgebildet, im Rahmen der Ausführung des erfindungsgemäßen Verfahrens Daten mit weiteren Einrichtungen des Mobilfunknetzes, insbesondere einer Datenbank 1004 des Mobilfunknetzes 1002 und mit sogenannten Radio Network Controllern (RNC) 1006 auszutauschen. So werden der Einrichtung 1001 von der Datenbank 1004 ortsbezogene Informationen hinsichtlich der Versorgungsbereiche von Funkzellen gemäß einem UMTS-Mobilfunkstandard zur Verfügung gestellt (in Fig. 10 symbolisch durch den Pfeil 1007 dargestellt). Darüber hinaus werden der Einrichtung 1001 vorteilhafterweise Informationen hinsichtlich der Durchführung eines Handovers bereitgestellt (in Fig. 10 nicht explizit dargestellt).

Darüber hinaus werden der Einrichtung 1001 von einem in dem Mobilfunknetz 1002 betreibbaren mobilen Endgerät 1008, welches Mittel 1009 zur Ortsbestimmung aufweist, Informationen hinsichtlich des Aufenthaltsortes des mobilen Endgerätes 1008 übertragen, was in Fig. 10 symbolisch durch den Pfeil 1010 dargestellt ist.

Ferner weist die Einrichtung 1001 des Mobilfunknetzes 1002 eine Auswerteeinheit 1005 auf, welche dazu eingerichtet ist, eine Auswertung hinsichtlich eines innerhalb eines vordefinierten Zeitintervalls erfolgenden Wiedereintritts des mobilen Endgerätes 1008 in den Versorgungsbereich einer Funkzelle gemäß dem UMTS-Mobilfunkstandard durchzuführen, basierend auf der Auswertung festzustellen, in welchem Zeitintervall ein Wiedereintritt des mobilen Endgerätes 1008 in den Versorgungsbereich einer Funkzelle gemäß dem UMTS-Mobilfunkstandard erfolgen wird, das Zeitintervall einem Vergleich mit einem vordefinierten Zeitintervall zu unterziehen, und bei Feststellung, dass das Zeitintervall kleiner oder gleich dem vordefinierten Zeitintervall ist, einen Verbindungswechsel des mobilen Endgerätes 1008 in eine Funkzelle gemäß einem anderen Mobilfunkstandard zu unterdrücken. Zum Unterdrücken eines Verbindungswechsels ist die Einrichtung 1001 dabei vorliegend ausgebildet, einer an einem Verbindungswechsel von einer UMTS-Funkzelle zu einer GSM-Funkzelle beteiligten weiteren Einrichtung des Mobilfunknetzes 1002 einen Befehl zu senden, welcher die entsprechende Einrichtung veranlasst, einen Verbindungswechsel des mobilen Endgerätes 1008 in eine Funkzelle gemäß dem GSM-Mobilfunkstandard zu unterdrücken. Das Senden des Befehls ist in Fig. 10 symbolisch durch den Pfeil 1011 dargestellt. Zudem ist die Einrichtung 1001 des Mobilfunknetzes 1002 eingerichtet, bei Wiedereintritt des mobilen Endgerätes 1008 in den Versorgungsbereich einer Funkzelle gemäß dem UMTS-Mobilfunkstandard innerhalb des vordefinierten Zeitintervalls einen Verbindungsaufbau zwischen dem mobilen Endgerät 1008 und dieser Funkzelle zu initiieren (in Fig. 10 nicht explizit dargestellt).

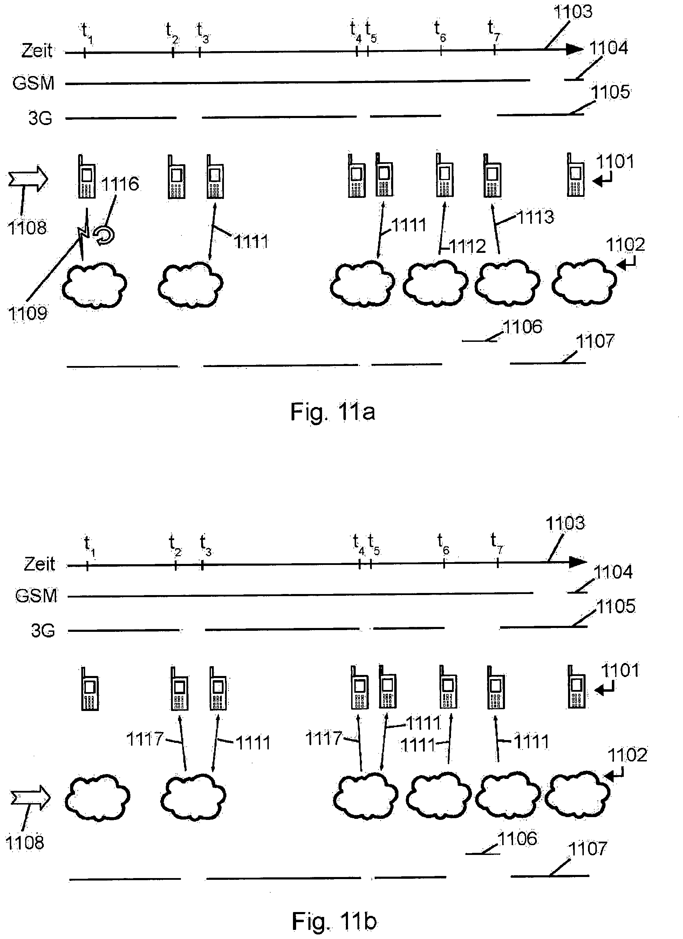

Fig. 11a bis Fig. 11d zeigen jeweils in einer vereinfachten schematischen Darstellung unterschiedliche Ausgestaltungsvarianten des erfindungsgemäßen Verfahrens. Dazu sind in Fig. 11a bis Fig. 11b ein Mobilfunktelefon 1101 und ein Mobilfunknetz 1102 zu unterschiedlichen Zeitpunkten schematisch dargestellt, insbesondere zu Zeitpunkten, zu denen eine Interaktion zwischen dem Mobilfunktelefon und dem Mobilfunknetz erfolgt. Wie erfindungsgemäß vorgesehen, nutzt das Mobilfunktelefon 1101 das Mobilfunknetz 1102 für eine Datenverbindung (in Fig. 11a bis Fig. 11b nicht explizit dargestellt), wobei das Mobilfunktelefon 1101 sowohl für einen Betrieb gemäß dem UMTS-Mobilfunkstandard als auch für einen Betrieb gemäß dem GSM-Mobilfunkstandard ausgebildet ist. Zudem ist in Fig. 11a bis Fig. 11d ein Zeitstrahl 1103 mit verschiedenen Zeitpunkten dargestellt. Da die Darstellung rein schematisch ist, lassen sich aus den Abständen zwischen den Zeitpunkten vorliegend keine tatsächlichen realen Zeiten ableiten. Die Linie 1104 unterhalb des Zeitstrahls symbolisiert die Verfügbarkeit eines GSM-Mobilfunknetzes in Bezug auf den Zeitstrahl 1103, wobei eine Unterbrechung der Linie 1104 eine Nichtverfügbarkeit des GSM-Mobilfunknetzes symbolisiert. Die weiter darunter angeordnete Linie 1105 symbolisiert entsprechend die Verfügbarkeit eines UMTS-Mobilfunknetzes in Bezug auf den Zeitstrahl 1103. Unterbrechungen der Linie 1105 symbolisieren entsprechend eine Nichtverfügbarkeit des UMTS-Mobilfunknetzes. Des Weiteren symbolisiert das Vorhandensein einer Linie 1106 in Bezug auf den Zeitstrahl 1103, wann das Mobilfunktelefon 1101 das GSM-Mobilfunknetz nutzt, und das Vorhandensein einer Linie 1107, wann das Mobilfunktelefon 1101 das UMTS-Mobilfunknetz nutzt. Ist in Bezug auf den Zeitstrahl 1103 für einen Zeitabschnitt weder eine Linie 1106 noch eine Linie 1107 vorhanden, symbolisiert dies also, dass das mobile Endgerät nicht mit dem Mobilfunknetz 1102 verbunden ist.

Der Pfeil 1108 kennzeichnet darüber hinaus, welche Komponente, also Mobilfunktelefon 1101 und/oder Mobilfunknetz 1102, im Wesentlichen an der Ausführung des erfindungsgemäßen Verfahrens beteiligt ist.

Von einer Darstellung einzelner Funkzellen des UMTS-Mobilfunknetzes beziehungsweise des GSM-Mobilfunknetzes wurde aus Gründen der besseren Übersicht abgesehen. Es versteht sich aber, dass bei einer Verfügbarkeit 1104 des GSM-Mobilfunknetzes beziehungsweise bei einer Verfügbarkeit 1105 des UMTS-Mobilfunknetzes entsprechende Funkzellen vorhanden sind, und sich das Mobilfunktelefon 1101 bei entsprechender Verfügbarkeit in dem Versorgungsbereich entsprechender Funkzellen befindet.

In Fig. 11a wird, wie durch den Pfeil 1108 angedeutet, ein erfindungsgemäßes Verfahren im Wesentlichen von dem Mobilfunktelefon 1101 durchgeführt. Zunächst erfolgt zu einem Zeitpunkt t₁ eine Übertragung 1109 (in Fig. 11a symbolisch durch einen Blitz dargestellt) von ortsbezogenen Informationen hinsichtlich der Versorgungsbereiche von UMTS-Funkzellen für ein definiertes geographisches Gebiet. Der weitere Pfeil 1116 symbolisiert dabei eine Synchronisierung von bereits seitens des Mobilfunktelefons 1101 verfügbaren ortsbezogenen Informationen hinsichtlich der Versorgungsbereiche von Funkzellen gemäß dem UMTS-Mobilfunkstandard mit entsprechend seitens des Mobilfunknetzes 1102 bereitgestellten ortsbezogenen Informationen.

Das Mobilfunktelefon 1101 befindet sich in dem Zeitabschnitt zwischen t₁ und t₂ in dem Versorgungsbereich sowohl des UMTS-Mobilfunknetzes als auch des GSM-Mobilfunknetzes, was durch die Linien 1105 beziehungsweise 1104 entsprechend symbolisch dargestellt ist. Für eine Datenverbindung nutzt das Mobilfunktelefon 1101 in diesem Zeitabschnitt das UMTS-Mobilfunknetz, was durch die Linie 1107 symbolisch dargestellt ist. Etwa zu dem Zeitpunkt t₂ macht die Signalqualität in Bezug auf die genutzte Funkzelle des UMTS-Mobilfunknetzes während der bestehenden Datenverbindung einen Verbindungswechsel in eine andere Funkzelle erforderlich. Hierdurch veranlasst führt das Mobilfunktelefon 1101 unter Nutzung zuvor empfangener ortsbezogener Informationen hinsichtlich der Versorgungsbereiche von Funkzellen gemäß dem UMTS-Mobilfunkstandard und unter Nutzung von mittels des Mobilfunktelefons 1101 erfassten Informationen hinsichtlich des Aufenthaltsortes des Mobilfunktelefons 1101 eine Auswertung hinsichtlich eines innerhalb eines vordefinierten Zeitintervalls erfolgenden Wiedereintritts in den Versorgungsbereich 1105 einer Funkzelle gemäß dem UMTS-Mobilfunkstandard durch. Das vordefinierte Zeitintervall ist dabei länger als der durch die Zeitpunkte t₂ und t₃ definierte Zeitabschnitt. Die seitens des Mobilfunktelefons 1101 durchgeführte Auswertung führt zu der Feststellung, dass ein Wiedereintritt in den Versorgungsbereich 1105 einer Funkzelle gemäß dem UMTS-Mobilfunkstandard innerhalb des vordefinierten Zeitintervalls erfolgen wird. Das Mobilfunktelefon 1101 unterdrückt einen Verbindungswechsel in eine Funkzelle gemäß dem GSM-Mobilfunkstandard. Sobald das UMTS-Mobilfunknetz nicht mehr verfügbar ist, bricht daher die Datenverbindung ab und das Mobilfunktelefon 1101 ist in dem durch die Zeitpunkte t₂ und t₃ definierten Zeitabschnitt nicht mit dem Mobilfunknetz 1102 verbunden.

Sobald das UMTS-Mobilfunknetz wieder verfügbar ist, erfolgt eine Cell-Reselection 1111, das heißt es wird wieder eine Verbindung zwischen dem Mobilfunktelefon 1101 und dem Mobilfunknetz 1102 aufgebaut und die Datenverbindung wieder hergestellt.

Der beschriebene Vorgang wiederholt sich in Bezug auf den durch die Zeitpunkte t₄ und t₅ definierten Zeitabschnitt.

Auch zu dem Zeitpunkt t₆, das heißt kurze Zeit zuvor, erfolgt seitens des Mobilfunktelefons 1101 eine erfindungsgemäße Auswertung. Hierbei führt die Auswertung zu der Feststellung, dass ein Wiedereintritt in den Versorgungsbereich 1105 einer Funkzelle gemäß dem UMTS-Mobilfunknetz nicht innerhalb des vordefinierten Zeitintervalls erfolgen wird. Eine erfindungsgemäße Unterdrückung eines Verbindungswechsels initiiert durch das Mobilfunktelefon 1101 erfolgt daher nicht. Daher wird zu beziehungsweise kurz nach dem Zeitpunkt t₆ seitens des Mobilfunktelefons 1101 ein Wechsel des Mobilfunksystems 1112 initiiert, wodurch ein Verbindungswechsel von einer UMTS-Funkzelle zu eine GSM-Funkzelle, wie im Zusammenhang mit Fig. 2 beschrieben, erfolgt. Ab dem Zeitpunkt t₇ ist das UMTS-Mobilfunknetz wieder verfügbar (1105), sodass das Mobilfunktelefon 1101 erneut einen Wechsel des Mobilfunksystems 1113 initiiert, wobei ein Verbindungswechsel von einer GSM-Funkzelle zu einer UMTS-Funkzelle, wie ebenfalls im Zusammenhang mit Fig. 2 beschrieben, erfolgt.

In Fig. 11b wird, wie durch den Pfeil 1108 angedeutet, ein erfindungsgemäßes Verfahren seitens des Mobilfunknetzes 1102 ausgeführt. Das Mobilfunknetz 1102 greift dazu auf eine ortsbezogene Informationen hinsichtlich der Versorgungsbereiche von Funkzellen gemäß dem UMTS-Mobilfunkstandard bereitstellende Datenbank zu (in Fig. 11b nicht explizit dargestellt). Informationen hinsichtlich des Aufenthaltsortes des Mobilfunktelefons 1101 ermittelt das Mobilfunknetz 1102 vorteilhafterweise durch eine Auswertung der Richtung und der Geschwindigkeit von regulären Funkzellenwechseln innerhalb des UMTS-Mobilfunknetzes. Vorteilhafterweise ist hierbei eine Bereitstellung von entsprechenden aufenthaltsortbezogenen Informationen seitens des Mobilfunktelefons 1101 entbehrlich, sodass das erfindungsgemäße Verfahren vorteilhafterweise auch bei Verwendung von mobilen Endgeräten, welche nicht über Mittel zur Aufenthaltsortbestimmung verfügen, ausführbar ist.

Das Mobilfunktelefon 1101 befindet sich gemäß der Darstellung in Fig. 11b in dem Zeitabschnitt zwischen den Zeitpunkten t₁ und t₂ in dem Versorgungsbereich sowohl des UMTS-Mobilfunknetzes als auch des GSM-Mobilfunknetzes, was durch die Linien 1105 beziehungsweise 1104 entsprechend symbolisch dargestellt ist. Für eine Datenverbindung nutzt das Mobilfunktelefon 1101 in diesem Zeitabschnitt das UMTS-Mobilfunknetz, was durch die Linie 1107 symbolisch dargestellt ist. Etwa zu dem Zeitpunkt t₂ macht die Signalqualität in Bezug auf die genutzte Funkzelle des UMTS-Mobilfunknetzes während der bestehenden Datenverbindung einen Verbindungswechsel in eine andere Funkzelle erforderlich, was dem Mobilfunknetz 1102 vorteilhafterweise von dem beteiligten Node B (in Fig. 11b nicht explizit dargestellt) mitgeteilt wird. Hierdurch veranlasst führt das Mobilfunknetz 1102 beziehungsweise eine Einrichtung des Mobilfunknetzes 1102 unter Nutzung der ortsbezogenen Informationen hinsichtlich der Versorgungsbereiche von Funkzellen gemäß dem UMTS-Mobilfunkstandard und unter Nutzung der ermittelten Informationen hinsichtlich des Aufenthaltsortes des Mobilfunktelefons 1101 eine Auswertung hinsichtlich eines innerhalb eines vordefinierten Zeitintervalls erfolgenden Wiedereintritts in den Versorgungsbereich 1105 einer Funkzelle gemäß dem UMTS-Mobilfunkstandard durch. Das vordefinierte Zeitintervall ist dabei länger als der durch die Zeitpunkte t₂ und t₃ definierte Zeitabschnitt. Die seitens des Mobilfunknetzes 1102 durchgeführte Auswertung führt zu der Feststellung, dass ein Wiedereintritt in den Versorgungsbereich 1105 einer Funkzelle gemäß dem UMTS-Mobilfunkstandard innerhalb des vordefinierten Zeitintervalls erfolgen wird. Das Mobilfunknetz 1102 initiiert daher keinen Verbindungswechsel in eine Funkzelle gemäß dem GSM-Mobilfunkstandard bzw. sendet daher einen Befehl an das Mobilfunktelefon 1101, keinen Verbindungswechsel in eine Funkzelle gemäß dem GSM-Mobilfunkstandard durchzuführen. Sobald das UMTS-Mobilfunknetz nicht mehr verfügbar ist, bricht daher die Datenverbindung ab und das Mobilfunktelefon 1101 ist in dem durch die Zeitpunkte t₂ und t₃ definierten Zeitabschnitt nicht mit dem Mobilfunknetz 1102 verbunden.

Sobald das UMTS-Mobilfunknetz wieder verfügbar ist (1105), erfolgt eine Cell-Reselection 1111, das heißt es wird wieder eine Verbindung zwischen dem Mobilfunktelefon 1101 und dem Mobilfunknetz 1102 aufgebaut und die Datenverbindung wieder hergestellt.

Der beschriebene Vorgang wiederholt sich in Bezug auf den durch die Zeitpunkte 4 und t₅ definierten Zeitabschnitt.

Auch wenige Sekunden vor dem Zeitpunkt t₆ erfolgt seitens des Mobilfunknetzes 1102 eine erfindungsgemäße Auswertung. Hierbei führt die Auswertung zu der Feststellung, dass ein Wiedereintritt in den Versorgungsbereich 1105 einer Funkzelle gemäß dem UMTS-Mobilfunknetz nicht innerhalb des vordefinierten Zeitintervalls erfolgen wird. Eine erfindungsgemäße Unterdrückung eines Verbindungswechsels erfolgt daher nicht. Daher wird etwa zu dem Zeitpunkt t₆ seitens des Mobilfunktelefons 1101 eine Cell-Reselection 1111 initiiert (Intersystem-Handover), wodurch ein Verbindungswechsel von einer UMTS-Funkzelle zu eine GSM-Funkzelle, wie im Zusammenhang mit Fig. 2 beschrieben, erfolgt. Ab dem Zeitpunkt t₇ ist das UMTS-Mobilfunknetz wieder verfügbar (1105), sodass das Mobilfunktelefon 1101 erneut eine Cell-Reselection 1111 initiiert (Intersystem-Handover), wobei ein Verbindungswechsel von einer GSM-Funkzelle zu einer UMTS-Funkzelle, wie ebenfalls im Zusammenhang mit Fig. 2 beschrieben, erfolgt.

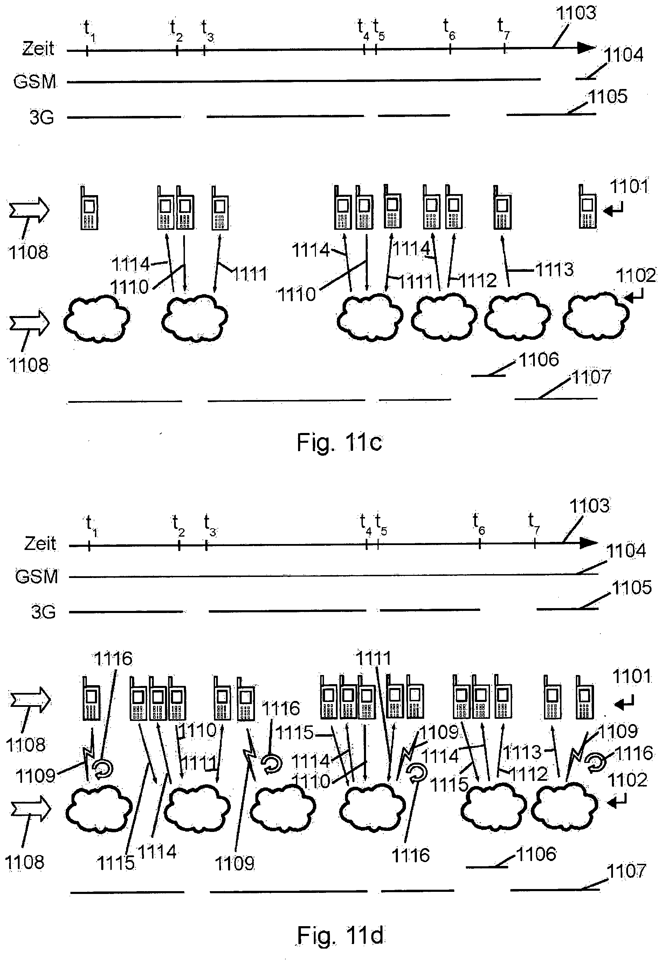

In Fig. 11c wird, wie durch die Pfeile 1108 angedeutet, ein erfindungsgemäßes Verfahren sowohl unter Verwendung des Mobilfunktelefons 1101 als auch seitens des Mobilfunknetzes 1102 ausgeführt, wobei das Mobilfunktelefon 1101 und das Mobilfunknetz 1102 quasi ein System zur Ausführung eines erfindungsgemäßen Verfahrens bilden. Bei der in Fig. 11c dargestellten Ausgestaltung wird die erfindungsgemäße Auswertung hinsichtlich eines innerhalb eines vordefinierten Zeitintervalls erfolgenden Wiedereintritts in den Versorgungsbereich einer Funkzelle gemäß dem UMTS-Mobilfunkstandard, wie im Zusammenhang mit Fig. 11b erläutert, seitens des Mobilfunknetzes 1102 beziehungsweise seitens einer Einrichtung des Mobilfunknetzes 1102 ausgeführt. Im Unterschied zu der im Zusammenhang mit Fig. 11c erläuterten Ausgestaltungsvariante, wird das Ergebnis der Auswertung an das Mobilfunktelefon 1101 übertragen. In Abhängigkeit von dem Ergebnis der Auswertung sendet das Mobilfunktelefon 1101 eine Befehl, symbolisch durch den Pfeil 1110 dargestellt, an das Mobilfunknetz 1102. Durch den Empfang des Befehls seitens des Mobilfunknetzes 1102 beziehungsweise seitens einer Einrichtung des Mobilfunknetzes 1102 wird verhindert, dass das Mobilfunknetz 1102 einen Verbindungswechsel in eine andere Funkzelle initiiert. Ein entsprechender Befehl 1110 wird in Fig. 11c etwa zu den Zeitpunkten t₂ und t₄ an das Mobilfunknetz 1102 gesendet. Zu dem Zeitpunkt t₆ wird kein Befehl an das Mobilfunknetz 1102 gesendet, da die mobilfunknetzseitige Auswertung ergeben hat, dass ein Wiedereintritt in den Versorgungsbereich 1105 des UMTS-Mobilfunknetzes nicht innerhalb des vordefinierten Zeitintervalls erfolgen wird. Dementsprechend initiiert das Mobilfunknetz 1102 wenige Sekunden nach dem Zeitpunkt t₆ eine Cell-Reselection (Intersystem-Handover) 1112.

Auch in Fig. 11d wird, wie durch die Pfeile 1108 angedeutet, ein erfindungsgemäßes Verfahren sowohl unter Verwendung des Mobilfunktelefons 1101 als auch unter Verwendung des Mobilfunknetzes 1102 beziehungsweise einer Einrichtung des Mobilfunknetzes 1102 ausgeführt, wobei das Mobilfunktelefon 1101 und das Mobilfunknetz 1102 zur Ausführung des erfindungsgemäßen Verfahrens als System zusammenwirken.

Gemäß dieser in Fig. 11d dargestellten erfindungsgemäßen Ausgestaltungsvariante ist im Unterschied zu der Ausgestaltung gemäß Fig. 11c vorgesehen, dass das Mobilfunktelefon 1101 Informationen hinsichtlich der Verfügbarkeit des UMTS-Mobilfunknetzes erfasst, insbesondere hinsichtlich ortsbezogener Zellgrenzen des UMTS-Mobilfunknetzes. Diese erfassten Informationen (in Fig. 11d nicht explizit dargestellt) werden insbesondere nach einer erfolgten Cell-Reselection 1111 zwischen einer Speichereinrichtung des Mobilfunktelefons 1101 und einer entsprechende ortsbezogene Informationen hinsichtlich der Versorgungsbereiche von Funkzellen gemäß dem UMTS-Mobilfunkstandard bereitstellenden Datenbank (in Fig. 11d nicht explizit dargestellt) des Mobilfunknetzes 1102 ausgetauscht beziehungsweise synchronisiert, was durch den Pfeil 1116 symbolisiert wird. Die erfassten Informationen werden seitens der Datenbank gespeichert beziehungsweise für eine Anpassung bereits vorhandener ortsbezogender Informationen hinsichtlich der Versorgungsbereiche von Funkzellen gemäß dem UMTS-Mobilfunknetz genutzt.

Abweichungen in Bezug auf seitens des Mobilfunktelefons 1101 erfasste ortsbezogene Informationen hinsichtlich der Versorgungsbereiche von Funkzellen gemäß dem UMTS-Mobilfunkstandard und seitens der Datenbank des Mobilfunknetzes 1102 vorgehaltenen ortsbezogenen Informationen hinsichtlich der Versorgungsbereiche von Funkzellen gemäß dem UMTS-Mobilfunkstandard werden zumindest teilweise automatisch bei der seitens des Mobilfunknetzes 1102 erfolgenden Auswertung sowie optional bei der Definition des Zeitintervalls, innerhalb dessen ein Wiedereintritt in den Versorgungsbereich der Funkzelle gemäß dem ersten Mobilfunkstandard erfolgen soll, berücksichtigt. Das Mobilfunknetz 1102 bedient sich hierzu vorteilhafterweise sogenannter selbstlernender Systeme.

Ein weiterer Unterschied der Ausgestaltung gemäß Fig. 11d im Vergleich zu der Ausgestaltung gemäß Fig. 11c besteht darin, dass die Informationen hinsichtlich des Aufenthaltsortes bei der Ausgestaltung gemäß Fig. 11d seitens des Mobilfunktelefons 1101 ermittelt werden und zumindest dann an das Mobilfunknetz 1102 übertragen werden (in Fig. 11d durch den Pfeil 1115 dargestellt), wenn seitens des Mobilfunktelefons 1101 eine Abnahme der Signalqualität in Bezug auf die genutzte Funkzelle registriert wird, die darauf hindeutet, dass während der bestehenden Datenverbindung ein Verbindungswechsel in eine andere Funkzelle erforderlich sein wird. Das Mobilfunknetz 1102 nutzt dabei für die erfindungsgemäße Auswertung, wie im Zusammenhang mit Fig. 8 beschrieben, dann die seitens des Mobilfunktelefons 1101 bereitgestellten Informationen hinsichtlich des Aufenthaltsortes des Mobilfunktelefons 1101.

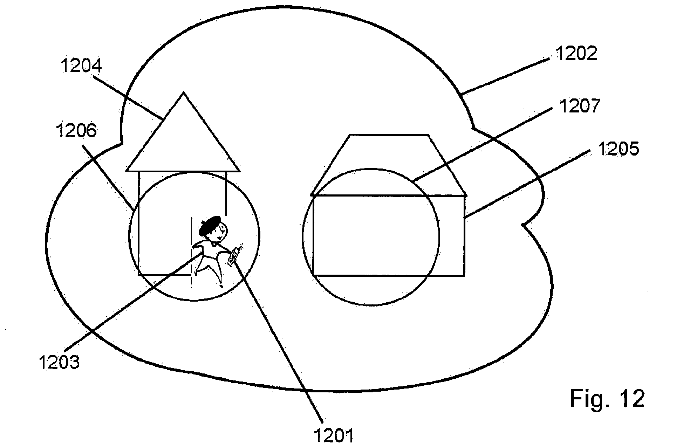

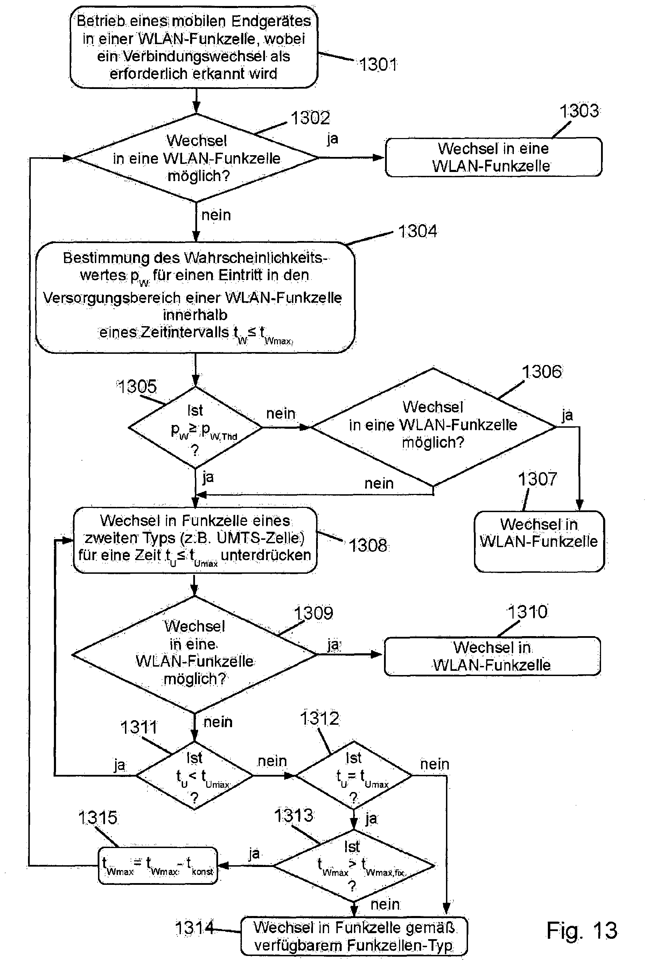

Unter Bezugnahme auf Fig. 12 und Fig. 13 wird ein weiteres Ausführungsbeispiel für ein erfindungsgemäßes Verfahren zum Betrieb eines in wenigstens einem Kommunikationsnetz betreibbaren mobilen Endgerätes für einen Verbindungswechsel in einem Kommunikationsnetz, wobei Funkzellen eines ersten Typs und Funkzellen eines zweiten Typs von wenigstens einem Kommunikationsnetz ausgebildet werden näher erläutert. Das Verfahren weist insbesondere die folgenden Schritte auf:
- Auswerten einer Information zum Aufenthaltsort des mobilen Endgerätes in einem Versorgungsbereich einer Funkzelle des ersten Typs hinsichtlich einer innerhalb eines vordefinierten Zeitintervalls zu erwartenden Eintritts des mobilen Endgerätes in den Versorgungsbereich einer Funkzelle des ersten Typs und
- Unterdrücken eines Verbindungswechsels des mobilen Endgerätes in eine Funkzelle des zweiten Typs, falls, basierend auf dem Ergebnis der Auswertung, der Eintritt des mobilen Endgerätes in den Versorgungsbereich des Funkzelle des ersten Typs innerhalb des vordefinierten Zeitintervalls zu erwarten ist.

Das mobile Endgerät 1201 ist vorliegend ein Mobilfunktelefon, welches sowohl in einem Mobilfunknetz 1202 als auch in lokalen Funknetzen 1206 und 1207 betreibbar ist. Insbesondere ist das mobile Endgerät 1201 in einem Mobilfunknetz gemäß einem GSM-, UMTS- und/oder LTE-Mobilfunkstandard betreibbar, sowie in WLANs, insbesondere WLANs gemäß einem Standard der IEEE 802.11-Familie.

Die in Fig. 12 dargestellten Gebäude 1204 und 1205 befinden sich in dem Versorgungsbereich von UMTS-Funkzellen des Mobilfunknetzes 1202 (die Funkzellen sind in Fig. 12 nicht explizit dargestellt). Das Mobilfunknetz 1202 bildet insofern Funkzellen gemäß einem UMTS-Mobilfunkstandard als Funkzellen eines ersten Typs aus. Darüber hinaus befindet sich sowohl in dem Gebäude 1204 als auch in dem Gebäude 1205 jeweils eine in der Figur nicht dargestellte Einrichtung, welche jeweils ein WLAN 1206 bzw. 1207 als Kommunikationsnetz ausbildet. Das jeweilige WLAN 1206 bzw. 1207 stellt dabei als WLAN-Funkzelle eine Funkzelle eines zweiten Typs dar. In dem Gebäude 1204, welches vorliegend das Haus des Nutzers 1203 ist, kann das mobile Endgerät 1201 grundsätzlich eine Datenverbindung über eine UMTS-Funkzelle oder aber über die WLAN-Funkzelle 1206 nutzen.

Eine Datenverbindung in einer WLAN-Funkzelle 1206 bzw. 1207 stellt dabei vorliegend eine größere Brandbreite bereit als eine Datenverbindung in einer UMTS-Funkzelle. Darüber hinaus ist vorliegend die Nutzung einer Datenverbindung in einer WLAN-Funkzelle 1206 oder 1207 für den Nutzer 1203 kostengünstiger. Aus diesen Gründen nutzt das mobile Endgerät 1201 in dem Haus 1204 des Nutzers 1203 die WLAN-Funkzelle 1206 für eine Datenverbindung. Die in Fig. 12 dargestellten Begrenzungslinien der Funkzellen 1206 bzw. 1207 stellen vorliegend die Zellgrenzen der Funkzellen dar und weisen somit symbolisch auf die Grenzen des Sende-/Empfangsbereichs des jeweiligen WLAN-Netzes 1206 bzw. 1207 hin.

Gemäß dem in Fig. 12 dargestellten Ausführungsbeispiel ist vorgesehen, dass das mobile Endgerät 1201 die WLAN-Funkzelle 1206 nutzt, um Daten, beispielsweise Video-Daten, aus dem Internet auf das mobile Endgerät 1201 zu laden. Während der Nutzung der Datenverbindung beabsichtigt der Nutzer 1203 in das zwei Gehminuten entfernte Straßencafe 1205 zu gehen. Dazu verlässt der Nutzer 1203 das Haus 1204. Obwohl sich der Nutzer dabei zunächst noch in dem Sende-/Empfangsbereich des WLAN-Netzes 1206 befindet, erkennt das mobile Endgerät 1201 durch Auswerten einer Information zum Aufenthaltsort des mobilen Endgerätes 1201, dass ein Verbindungswechsel in eine andere Funkzelle erforderlich sein wird. Hierdurch wird eine Auswertung initiiert, wobei unter Berücksichtigung einer Information zum Aufenthaltsort des mobilen Endgerätes 1201 in den Versorgungsbereich der WLAN-Funkzelle 1206 sowie unter Berücksichtigung ortsbezogener Informationen hinsichtlich weiterer WLAN-Funkzellen eine Prognose erstellt wird, ob innerhalb eines von dem Nutzer 1203 eingestellten Zeitintervalls von drei Minuten ein Eintritt des mobilen Endgerätes 1201 in den Versorgungsbereich einer weiteren WLAN-Funkzelle 1207 erfolgen wird. Unter Berücksichtigung der Bewegungsrichtung des Nutzers 1203 bzw. des mobilen Endgerätes 1201 sowie dessen Bewegungsgeschwindigkeit ermittelt das mobile Endgerät 1201, ob innerhalb des durch den Nutzer 1203 vordefinierten Zeitintervalls von drei Minuten das mobile Endgerät 1201 in den Versorgungsbereich einer WLAN-Funkzelle eintreten wird. Basierend auf den der Auswertung zugrunde liegenden Parametern kommt das mobile Endgerät 1201 bzw. eine entsprechende Auswerteeinrichtung des mobilen Endgerätes 1201 zu dem Ergebnis, dass sich das mobile Endgerät 1201 in einem Zeitintervall, welches kleiner als drei Minuten ist, in der WLAN-Funkzelle 1207 des Straßencafes 1205 befinden sollte. Aufgrund dessen unterdrückt das mobile Endgerät 1201 bzw. eine Unterdrückungseinrichtung des mobilen Endgerätes 1201 einen Verbindungswechsel in eine UMTS-Funkzelle des Mobilfunknetzes 1202 bei bzw. nach Verlassen des Versorgungsbereiches der WLAN-Funkzelle 1206. Sobald sich der Nutzer 1203 innerhalb des Zeitintervalls von drei Minuten in dem Versorgungsbereich der WLAN-Funkzelle 1206 befindet, nutzt das mobile Endgerät 1201 die WLAN-Funkzelle 1207 für eine Datenverbindung und lädt die weiteren Video-Daten aus dem Internet auf das mobile Endgerät 1201.

Ein Ausführungsbeispiel für den prinzipiellen erfindungsgemäßen Verfahrensablauf ist in Fig. 13 dargestellt. Ausgangspunkt kann beispielsweise das in Fig. 12 dargestellte Verlassen des Hauses 1204 durch den Nutzer 1203 mit seinem mobilen Endgerät 1201 sein (in Fig. 13 durch das Bezugszeichen 1301 dargestellt). Hat das mobile Endgerät die Erforderlichkeit für einen Verbindungswechsel in eine andere Funkzelle erkannt, so wird es zunächst prüfen, ob ein Wechsel in eine andere WLAN-Funkzelle für einen Datentransfer möglich ist (Verfahrensschritt 1302). Wäre dies der Fall, würde das mobile Endgerät einen Wechsel in diese WLAN-Funkzelle veranlassen (Verfahrensschritt 1303). Anderenfalls, wie beispielsweise bei dem in Figur 12 dargestellten Ausführungsbeispiel der Fall, ist vorgesehen, dass eine Auswerteeinrichtung des mobilen Endgerätes einen Wahrscheinlichkeitswert p_{W} für einen Eintritt in den Versorgungsbereich einer WLAN-Funkzelle innerhalb eines Zeitintervalls t_{W} ≤ t_{Wmax} erfolgt (Verfahrensschritt 1304). In dem mit Bezugnahme auf Fig. 12 dargestellten Ausführungsbeispiel beträgt das vordefinierte Zeitintervall t_{Wmax} drei Minuten. Unter weiterer Bezugnahme auf Fig. 12 wird das Zeitinterwall t_{W} weniger als zwei Minuten betragen, da die Gehzeit zwischen dem Haus 1204 des Nutzers 1203 und dem Straßencafe 1205 zwei Minuten beträgt, wobei die Distanz zwischen den Zellgrenzen der WLAN-Funkzellen 1206 und 1207 geringer ist, als die Distanz zwischen den Gebäuden 1204 und 1205. Da das Zeitintervall t_{W} somit wesentlich kleiner ist als das Zeitintervall t_{Wmax}, wird der errechnete Wahrscheinlichkeitswert p_{W} deutlich über dem Schwellwert p_{W,Thd} liegen. Ein entsprechender Abgleich der Wahrscheinlichkeitswerte p_{W} mit p_{WThd} in dem Verfahrensschritt 1305 wird daher dazu führen, dass gemäß dem Verfahrensschritt 1308 ein Wechsel in eine UMTS-Funkzelle des Mobilfunknetzes 1202 für eine Zeit t_{U}, welche kleiner als eine vordefinierte weitere Zeit t_{Umax} ist, unterdrückt wird. t_{Umax} beträgt vorliegend 210 Sekunden. Während der Zeit t_{U} < t_{Umax} wird in einem Verfahrensschritt 1309 so lange geprüft, ob ein Wechsel in eine WLAN-Funkzelle möglich ist, bis die Zeit t_{U} die vordefinierte Zeit t_{Umax} übersteigt. Dies wird in einem Verfahrensschritt 1311 geprüft. Gemäß dem in Zusammenhang mit Fig. 12 dargestellten Ausführungsbeispiel ist jedoch vorgesehen, dass ein Wechsel in eine WLAN-Funkzelle 1207 bereits nach weniger als zwei Minuten möglich ist. Aus diesem Grund wird gemäß Verfahrensschritt 1310 ein Wechsel in die WLAN-Funkzelle 1207 erfolgen. Wäre ein entsprechender Wechsel in eine WLAN-Funkzelle nicht innerhalb der Zeit t_{U} < t_{Umax} möglich, würden zumindest einige der weiter dargestellten Verfahrensschritte 1312 bis 1315 analog zu den Verfahrensschritten 812 bis 815, welche im Zusammenhang mit Fig. 8 erläutert wurden, ausgeführt.

Die in den Figuren dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- 101: Zellpegel der ersten Funkzelle des UMTS-Mobilfunknetzes
- 102: Zellpegel der zweiten Funkzelle des UMTS-Mobilfunknetzes
- 201: Zellpegel der ersten Funkzelle des UMTS-Mobilfunknetzes
- 202: Zellpegel der zweiten Funkzelle des UMTS-Mobilfunknetzes
- 203: Zeitspanne mit schlechterer Datenübertragung
- 301: Zellpegel der ersten Funkzelle des UMTS-Mobilfunknetzes
- 302: Zellpegel der zweiten Funkzelle des UMTS-Mobilfunknetzes
- 303: Zeitspanne ohne Verbindung zum Mobilfunknetz
- 401: von mobilem Endgerät genutzte Funkzelle des UMTS-Mobilfunknetzes
- 402: Funkzelle des GSM-Mobilfunknetzes
- 403: für eine weitergehende Nutzung ermittelte Funkzelle des UMTS-Mobilfunknetzes
- 404: weitere Funkzelle des UMTS-Mobilfunknetzes
- 405: weitere Funkzelle des UMTS-Mobilfunknetzes
- 406: weitere Funkzelle des UMTS-Mobilfunknetzes
- 407: Aufenthaltsort des mobilen Endgerätes
- 408: zurückgelegte Wegstrecke des mobilen Endgerätes
- 409: Bewegungsrichtung des mobilen Endgerätes
- 410: Bereich, in dem das mobile Endgerät nicht mit dem Mobilfunknetz verbunden ist
- 501: von mobilem Endgerät genutzte Funkzelle des UMTS-Mobilfunknetzes
- 502: Funkzelle des GSM-Mobilfunknetzes
- 503: Funkzelle des UMTS-Mobilfunknetzes (Zielzelle)
- 504: weitere Funkzelle des UMTS-Mobilfunknetzes
- 505: für eine weitergehende Nutzung ermittelte weitere Funkzelle des UMTS-Mobilfunknetzes
- 506: weitere Funkzelle des UMTS-Mobilfunknetzes
- 507: Aufenthaltsort des mobilen Endgerätes
- 508: zurückgelegte Wegstrecke des mobilen Endgerätes
- 509: Bewegungsrichtung des mobilen Endgerätes
- 510: Bereich, in dem das mobile Endgerät nicht mit dem Mobilfunknetz verbunden ist
- 511: Straße
- 601: Funkzelle eines Mobilfunknetzes
- 602: Zellgrenze für mobile Endgeräte A
- 603: Zellgrenze für mobile Endgeräte B
- 604: Zellgrenze für mobile Endgeräte C
- 605: Bereich für mobile Endgeräte A, in dem der Signalpegel der Zelle (601) einen definierten Wert unterschritten hat
- 606: Bereich für mobile Endgeräte B, in dem der Signalpegel der Zelle (601) einen definierten Wert unterschritten hat
- 607: Bereich für mobile Endgeräte C, in dem der Signalpegel der Zelle (601) einen definierten Wert unterschritten hat,
- 701: Funkzelle eines Mobilfunknetzes
- 702: Zellgrenze für mobile Endgeräte D
- 703: Zellgrenze für mobile Endgeräte E
- 704: Bereich für mobile Endgeräte D, in dem der Signalpegel der Zelle (701) einen definierten Wert unterschritten hat
- 705: Bereich für mobile Endgeräte E, in dem der Signalpegel der Zelle (701) einen definierten Wert unterschritten hat
- 801-815: zeigen Verfahrensschritte eines Ausführungsbeispiels des erfindungsgemäßen Verfahrens
- 901: mobiles Endgerät
- 902: Mobilfunknetz
- 903: Mittel zur Ortsbestimmung und Naviagtion
- 904: Speichereinrichtung
- 905: Auswerteeinrichtung
- 906: Datenbank (des Mobilfunknetzes 902)
- 907: Synchronisierung von ortsbezogenen Informationen hinsichtlich der Versorgungsbereiche von Funkzellen gemäß dem ersten Mobilfunkstandard
- 908: Synchronisierung von ortsbezogenen Informationen hinsichtlich der Versorgungsbereiche von Funkzellen gemäß dem ersten Mobilfunkstandard
- 909: Bereitstellung von ortsbezogenen Informationen hinsichtlich der Versorgungsbereiche von Funkzellen gemäß dem ersten Mobilfunkstandard von der Speichereinrichtung an die Auswerteeinrichtung
- 910: Bereitstellung von Informationen hinsichtlich des Aufenthaltsortes des mobilen Endgerätes (901) an die Auswerteeinrichtung
- 911: Senden eines Befehls von dem mobilen Endgerät 901 an das Mobilfunknetz 902
- 1001: Einrichtung (des Mobilfunknetzes 1002)
- 1002: Mobilfunknetz
- 1004: Datenbank (des Mobilfunknetzes 1002)
- 1005: Auswerteeinrichtung
- 1006: Radio Network Controller
- 1007: Bereitstellung von ortsbezogenen Informationen hinsichtlich der Versorgungsbereiche von Funkzellen gemäß dem UMTS-Mobilfunkstandard
- 1008: mobiles Endgerät
- 1009: Mittel zur Ortsbestimmung
- 1010: Bereitstellung von Informationen hinsichtlich des Aufenthaltsortes des mobilen Endgerätes
- 1011: Senden eines Befehls von der Einrichtung 1001 an eine weitere Einrichtung des Mobilfunknetzes 1002
- 1101: Mobilfunktelefon
- 1102: Mobilfunknetz
- 1103: Zeitstrahl
- 1104: Verfügbarkeit des GSM-Mobilfunknetzes
- 1105: Verfügbarkeit des UMTS-Mobilfunknetzes
- 1106: Nutzung des GSM-Mobilfunknetzes
- 1107: Nutzung des UMTS-Mobilfunknetzes
- 1108: an der Ausführung des Verfahrens beteiligt
- 1109: Übertragung von ortsbezogenen Informationen hinsichtlich der Versorgungsbereiche von Funkzellen gemäß dem UMTS-Mobilfunknetz
- 1110: Befehl zur Unterdrückung eines Wechsels in eine Funkzelle des GSM-Mobilfunknetzes
- 1111: Cell Reselection
- 1112: Intersystem Handover (Celll-Reselection)
- 1113: Intersystem Handover (Cell-Reselection)
- 1114: Übermittlung des Ergebnisses der Auswertung
- 1115: Übermittlung von Informationen hinsichtlich des Aufenthaltsortes des Mobilfunktelefons 1101
- 1116: Synchronisierung/Anpassung von ortsbezogenen Informationen hinsichtlich der Versorgungsbereiche von Funkzellen gemäß dem UMTS-Mobilfunkstandard
- 1117: Befehl, keinen Verbindungswechsel in eine Funkzelle gemäß dem GSM-Mobilfunkstandard durchzuführen
- 1201: mobiles Endgerät
- 1202: Mobilfunknetz
- 1203: Nutzer des mobilen Endgerätes (1201)
- 1204: Gebäude (Haus des Nutzers)
- 1205: Gebäude (Straßencafe)
- 1206: WLAN-Funkzelle
- 1207: WLAN Funkzelle
- 1301-1315: zeigen Verfahrensschritte eines Ausführungsbeispiels des erfindungsgemäßen Verfahrens

## Patentansprüche

1. Verfahren zum Betrieb eines in wenigstens einem Kommunikationsnetz (902, 1002, 1102, 1202) betreibbaren mobilen Endgerätes (901, 1008, 1101, 1201) für einen Verbindungswechsel in einem Kommunikationsnetz (902, 1002, 1102, 1202), wobei Funkzellen (601, 701) eines ersten Typs und Funkzellen (1206, 1207) eines zweiten Typs von dem wenigstens einen Kommunikationsnetz (902, 1002, 1102, 1202) ausgebildet werden, wobei es sich bei den Funkzellen (601, 701, 1206, 1207) des ersten und des zweiten Typs um Funkzellen gemäß dem GSM-, UMTS-, CDMA2000-, LTE-Mobilfunkstandard, um WLAN- oder Hot-Spot-Funkzellen handelt, mit folgenden Schritten:
- Auswerten einer Information zum Aufenthaltsort des mobilen Endgerätes (901, 1008, 1101, 1201) in einem Versorgungsbereich (1104, 1105) einer Funkzelle (601, 701) des ersten Typs hinsichtlich eines innerhalb eines vordefinierten Zeitintervalls zu erwartenden Eintritts des mobilen Endgerätes (901, 1008, 1101, 1201) in den Versorgungsbereich (1104, 1105) einer Funkzelle (601, 701) des ersten Typs, wobei das Auswerten teilweise seitens des mobilen Endgerätes (901, 1008, 1101, 1201) und teilweise seitens des Kommunikationsnetzes (902, 1002, 1102, 1202) erfolgt;
**gekennzeichnet durch**
- Unterdrücken eines Verbindungswechsels des mobilen Endgerätes (901, 1008, 1101, 1201) in eine Funkzelle (1206, 1207) des zweiten Typs, falls, basierend auf dem Ergebnis der Auswertung, der Eintritt des mobilen Endgerätes (901, 1008, 1101, 1201) in den Versorgungsbereich (1104, 1105) der Funkzelle (601, 701) des ersten Typs innerhalb des vordefinierten Zeitintervalls zu erwarten ist, wobei das Unterdrücken seitens des mobilen Endgerätes (901, 1008, 1101, 1201) oder seitens einer Einrichtung des Kommunikationsnetzes (902, 1002, 1102, 1202) erfolgt, wobei die Zeitdauer des vordefinierten Zeitintervalls geringer ist, als das für einen Verbindungswechsel von einer Funkzelle (601, 701) des ersten Typs zu einer Funkzelle (1206, 1207) des zweiten Typs benötigte Zeitintervall.

2. Verfahren nach Anspruch 1, **dadurch gekennzeichnet, dass** die Unterdrückung des Verbindungswechsels in eine Funkzelle (1206, 1207) des zweitens Typs seitens des mobilen Endgerätes (901, 1008, 1101, 1201) initiiert wird.

3. Verfahren nach Anspruch 1 oder Anspruch 2, **dadurch gekennzeichnet, dass** die Zeitdauer des vordefinierten Zeitintervalls zwischen 10 und 30 Sekunden, zwischen 5 und 40 Sekunden oder zwischen 1 und 60 Sekunden liegt.

4. Verfahren nach einem der Ansprüche 1 bis 3, **dadurch gekennzeichnet, dass** im Rahmen der Auswertung ein Wahrscheinlichkeitswert für den Eintritt in den Versorgungsbereich (1104, 1105) einer Funkzelle (601, 701) des ersten Typs bestimmt wird, der bestimmte Wahrscheinlichkeitswert einem Vergleich mit einem vordefinierten Grenzwert unterzogen wird und bei Überschreiten des Grenzwertes ein Verbindungswechsel in eine Funkzelle (1206, 1207) des zweiten Typs unterdrückt wird, damit das mobile Endgerät (901, 1008, 1101, 1201) innerhalb des vordefinierten Zeitintervalls eine Verbindung zu einer Funkzelle (601, 701) des ersten Typs aufbauen kann.

5. Verfahren nach einem der Ansprüche 1 bis 4, **dadurch gekennzeichnet, dass** die Unterdrückung eines Verbindungswechsels in eine Funkzelle (1206, 1207) des zweiten Typs für ein vordefiniertes weiteres Zeitintervall erfolgt.

6. Verfahren nach einem der Ansprüche 1 bis 5, **dadurch gekennzeichnet, dass** eine Datenverbindung in einer Funkzelle (601, 701) des ersten Typs eine größere Bandbreite bereitstellt als eine Datenverbindung in einer Funkzelle (1206, 1207) des zweiten Typs.

7. Verfahren nach einem der Ansprüche 1 bis 6, **dadurch gekennzeichnet, dass** die Auswertung unter Nutzung von ortsbezogenen Informationen hinsichtlich der Versorgungsbereiche (1104, 1105) von Funkzellen (601, 701) des ersten Typs durchgeführt wird, wobei die ortsbezogenen Informationen hinsichtlich der Versorgungsbereiche (1104, 1105) von Funkzellen (601, 701) des ersten Typs Informationen hinsichtlich ortsbezogener Zellgrenzender Funkzellen (601, 701) des ersten Typs umfassen.

8. Verfahren nach Anspruch 7, **dadurch gekennzeichnet, dass** die ortsbezogenen Informationen hinsichtlich der Versorgungsbereiche (1104, 1105) von Funkzellen (601, 701) des ersten Typs zumindest teilweise seitens einer Speichereinrichtung des wenigstens einen Kommunikationsnetzes (902, 1002, 1102, 1202) und seitens einer Speichereinrichtung des mobilen Endgerätes (901, 1008, 1101, 1201) bereitgestellt werden.

9. Verfahren nach Anspruch 7 oder Anspruch 8, **dadurch gekennzeichnet, dass** einem Aufenthaltsbereich eines mobilen Endgerätes (901, 1008, 1101, 1201) zugeordnete Informationen bezüglich eines Eintritts in den Versorgungsbereich (1104, 1105) einer Funkzelle (601, 701) des ersten Typs seitens des mobilen Endgerätes (901, 1008, 1101, 1201) und seitens des wenigstens einen Kommunikationsnetzes (902, 1002, 1102, 1202) als weitere ortsbezogene Informationen hinsichtlich der Versorgungsbereiche (1104, 1105) von Funkzellen (601, 701) des ersten Typs erfasst werden.

10. Verfahren nach Anspruch 9, **dadurch gekennzeichnet, dass** die erfassten Informationen einem Aufenthaltsbereich zugeordnete Informationen hinsichtlich der Signalqualität einer Funkzelle (601, 701) des ersten Typs umfassen.

11. Verfahren nach Anspruch 9 oder Anspruch 10, **dadurch gekennzeichnet, dass** die erfassten Informationen den seitens der Speichereinrichtung des wenigstens einen Kommunikationsnetzes (902, 1002, 1102, 1202) und/oder der Speichereinrichtung des mobilen Endgerätes (901, 1008, 1101, 1201) bereitgestellten ortsbezogenen Informationen hinsichtlich der Versorgungsbereiche (1104, 1105) von Funkzellen (601, 701) des ersten Typs hinzugefügt werden oder bereits vorhandene ortsbezogene Informationen hinsichtlich des Versorgungsbereichs (1104, 1105) von Funkzellen (601, 701) des ersten Typs unter Berücksichtigung der erfassten Informationen angepasst werden.

12. Verfahren nach einem der Ansprüche 7 bis 11, **dadurch gekennzeichnet, dass** Änderungen in Bezug auf ortsbezogene Informationen hinsichtlich der Versorgungsbereiche (1104, 1105) von Funkzellen (601, 701) des ersten Typs zumindest teilweise automatisch bei der Auswertung und/oder der Definition des Zeitintervalls berücksichtigt werden.

13. Verfahren nach einem der Ansprüche 7 bis 12, **dadurch gekennzeichnet, dass** zumindest die ortsbezogenen Informationen hinsichtlich der Versorgungsbereiche (1104, 1105) von Funkzellen (601, 701) des ersten Typs zwischen dem wenigstens einen Kommunikationsnetz (902, 1002, 1102, 1202) und dem mobilen Endgerät (901, 1008, 1101, 1201) synchronisiert werden.

14. Verfahren nach einem der Ansprüche 1 bis 13, **dadurch gekennzeichnet, dass** die Information bezüglich des Aufenthaltsortes des mobilen Endgerätes (901, 1008, 1101, 1201) zumindest Informationen hinsichtlich des aktuellen Aufenthaltsortes des mobilen Endgerätes (901, 1008, 1101, 1201), hinsichtlich der aktuellen Richtung, in welche das mobile Endgerät (901, 1008, 1101, 1201) seinen Aufenthaltsort ändert, hinsichtlich der aktuellen Geschwindigkeit, mit welcher das mobile Endgerät (901, 1008, 1101, 1201) seinen Aufenthaltsort ändert und/oder zeitlich zurückliegende Informationen hinsichtlich des Aufenthaltsortes, der Richtung und/oder der Geschwindigkeit umfassen.

15. Mobiles Endgerät (901, 1008, 1101, 1201) zum Betrieb in wenigstens einem Kommunikationsnetz (902, 1002, 1102, 1202), vorzugsweise einem Mobilfunknetz, wobei Funkzellen (601, 701) eines ersten Typs und Funkzellen (1206, 1207) eines zweiten Typs von dem wenigstens einen Kommunikationsnetz (902, 1002, 1102, 1202) ausgebildet werden, wobei es sich bei den Funkzellen (601, 701; 1206, 1207) des ersten und des zweiten Typs um Funkzellen gemäß dem GSM-, UMTS-, CDMA2000-, LTE-Mobilfunkstandard, um WLAN- oder Hot-Spot-Funkzellen handelt, umfassend eine Auswerteeinrichtung zur Auswertung einer Information bezüglich des Aufenthaltsortes des mobilen Endgerätes (901, 1008, 1101, 1201) in einem Versorgungsbereich (1104, 1105) einer Funkzelle (601, 701) des ersten Typs hinsichtlich eines innerhalb eines vordefinierten Zeitintervalls zu erwartenden Eintritts des mobilen Endgerätes (901, 1008, 1101, 1201) in den Versorgungsbereich (1104, 1105) einer Funkzelle (601, 701) des ersten Typs, **gekennzeichnet durch**
eine Unterdrückungseinrichtung zum Unterdrücken eines Verbindungswechsels des mobilen Endgerätes (901, 1008, 1101, 1201) in eine Funkzelle (1206, 1207) des zweiten Typs, falls, basierend auf dem Ergebnis der Auswertung, der Eintritt des mobilen Endgerätes (901, 1008, 1101, 1201) in den Versorgungsbereich (1104, 1105) der Funkzelle (601, 701) des ersten Typs innerhalb des vordefinierten Zeitintervalls zu erwarten ist, wobei die Zeitdauer des vordefinierten Zeitintervalls geringer ist, als das für einen Verbindungswechsel von einer Funkzelle (601, 701) des ersten Typs zu einer Funkzelle (1206, 1207) des zweiten Typs benötigte Zeitintervall.

16. Einrichtung in einem Kommunikationsnetz (902, 1002, 1102, 1202), insbesondere Netzknoten in einem Mobilfunknetz, wobei von dem Kommunikationsnetz (902, 1002, 1102, 1202) und/oder von wenigstens einem weiteren Kommunikationsnetz (902, 1002, 1102, 1202) Funkzellen (601, 701) eines ersten Typs und Funkzellen (1206, 1207) eines zweiten Typs ausgebildet werden, wobei es sich bei den Funkzellen (601, 701; 1206, 1207) des ersten und des zweiten Typs um Funkzellen gemäß dem GSM-, UMTS-, CDMA2000-, LTE-Mobilfunkstandard, um WLAN- oder Hot-Spot-Funkzellen handelt, umfassend
eine Auswerteeinrichtung zur Auswertung einer Information bezüglich des Aufenthaltsortes des mobilen Endgerätes (901, 1008, 1101, 1201) in einem Versorgungsbereich (1104, 1105) einer Funkzelle (601, 701) des ersten Typs hinsichtlich eines innerhalb eines vordefinierten Zeitintervalls zu erwartenden Eintritts des mobilen Endgerätes (901, 1008, 1101, 1201) in den Versorgungsbereich (1104, 1105) einer Funkzelle (601, 701) des ersten Typs, **gekennzeichnet durch**
eine Unterdrückungseinrichtung zum Unterdrücken eines Verbindungswechsels des mobilen Endgerätes (901, 1008, 1101, 1201) in eine Funkzelle (1206, 1207) des zweiten Typs, falls, basierend auf dem Ergebnis der Auswertung, der Eintritt des mobilen Endgerätes (901, 1008, 1101, 1201) in den Versorgungsbereich (1104, 1105) der Funkzelle des ersten Typs innerhalb des vordefinierten Zeitintervalls zu erwarten ist, wobei die Zeitdauer des vordefinierten Zeitintervalls geringer ist, als das für einen Verbindungswechsel von einer Funkzelle (601, 701) des ersten Typs zu einer Funkzelle (1206, 1207) des zweiten Typs benötigte Zeitintervall.

17. System umfassend wenigstens eine Einrichtung eines Kommunikationsnetzes (902, 1002, 1102, 1202), insbesondere Netzknoten eines Mobilfunknetzes, und ein mobiles Endgerät (901, 1008, 1101, 1201) zum Betrieb in einem Kommunikationsnetz (902, 1002, 1102, 1202), insbesondere in einem Mobilfunknetz, wobei die wenigstens eine Einrichtung des Kommunikationsnetzes (902, 1002, 1102, 1202) und das mobile Endgerät (901, 1008, 1101, 1201) ausgebildet sind, untereinander Informationen auszutauschen, **dadurch gekennzeichnet, dass** das System zur Ausführung eines Verfahrens gemäß einem der Ansprüche 1 bis 14 ausgebildet ist.

## Claims

1. A method for operating a mobile terminal (901, 1008, 1101, 1201) that can be operated in at least one communication network (902, 1002, 1102, 1202) for switching a connection in a communication network (902, 1002, 1102, 1202), wherein radio cells (601, 701) of a first type and radio cells (1206, 1207) of a second type are formed by the at least one communication network (902, 1002, 1102, 1202), wherein the radio cells (601, 701, 1206, 1207) of the first and the second type are radio cells according to the GSM, UMTS, CDMA2000, LTE mobile radio standard, WLAN or hot spot radio cells, comprising the following steps:
- evaluating an information item with respect to the local position of the mobile terminal (901, 1008, 1101, 1201) in a service area (1104, 1105) of a radio cell (601, 701) of the first type with respect to the entry of the mobile terminal (901, 1008, 1101, 1201) into the service area (1104, 1105) of a radio cell (601, 701) of the first type, which entry is to be expected within a predefined time interval, wherein the evaluation is partially carried out by the mobile terminal (901, 1008, 1101, 1201) and partially by the communication network (902, 1002, 1102, 1202);
**characterized by**
- suppressing the switching of a connection of the mobile terminal (901, 1008, 1101, 1201) into a radio cell (1206, 1207) of the second type, if, based upon the result of the evaluation, the entry of the mobile terminal (901, 1008, 1101, 1201) into the service area (1104, 1105) of the radio cell (601, 701) of the first type is to be expected within the predefined time interval, wherein the suppression is carried out by means of the mobile terminal (901, 1008, 1101, 1201) or by means of a device of the communication network (902, 1002, 1102, 1202), wherein the duration of the predefined time interval is shorter than the time interval required for the switching of a connection from a radio cell (601, 701) of the first type to a radio cell (1206, 1207) of the second type.

2. A method according to claim 1, **characterized in that** the suppression of the switching of a connection into a radio cell (1206, 1207) of the second type is initiated by means of the mobile terminal (901, 1008, 1101, 1201).

3. A method according to claim 1 or claim 2, **characterized in that** the duration of the predefined time interval is comprised between 10 and 30 seconds, between 5 and 40 seconds or between 1 and 60 seconds.

4. A method according to one of the claims 1 to 3, **characterized in that** within the scope of the evaluation a probability value with respect to the entry into the service area (1104, 1105) of a radio cell (601, 701) of the first type will be determined, the determined probability value will be subjected to a comparison with a predefined limit value and in case of exceeding the limit value a switching of the connection into a radio cell (1206, 1207) of the second type will be suppressed, such that the mobile terminal (901, 1008, 1101, 1201) will be enabled to establish a connection to a radio cell (601, 701) of the first type within the predefined time interval.

5. A method according to one of the claims 1 to 4, **characterized in that** the suppression of a switching of a connection into a radio cell (1206, 1207) of the second type will be realized for another predefined time interval.

6. A method according to one of the claims 1 to 5, **characterized in that** a data connection in a radio cell (601, 701) of the first type provides a wider bandwidth than a data connection in a radio cell (1206, 1207) of the second type.

7. A method according to one of the claims 1 to 6, **characterized in that** the evaluation is carried out using location-related information with respect to the service areas (1104, 1105) of radio cells (601, 701) of the first type, wherein the location-related information with respect to the service areas (1104, 1105) of radio cells (601, 701) of the first type comprise information with respect to location-related cell bordering radio cells (601, 701) of the first type.

8. A method according to claim 7, **characterized in that** the location-related information with respect to the service areas (1104, 1105) of radio cells (601, 701) of the first type are provided at least partially by a storage device of the at least one communication network (902, 1002, 1102, 1202) and by a storage device of the mobile terminal (901, 1008, 1101, 1201).

9. A method according to claim 7 or claim 8, **characterized in that** information, which is assigned to a local position of a mobile terminal (901, 1008, 1101, 1201), with respect to an entry into the service area (1104, 1105) of a radio cell (601, 701) of the first type will be gathered by the mobile terminal (901, 1008, 1101, 1201) and by the at least one communication network (902, 1002, 1102, 1202) as other location-related information with respect to the service areas (1104, 1105) of radio cells (601, 701) of the first type.

10. A method according to claim 9, **characterized in that** the gathered information comprises information assigned to a stay zone with respect to the signal quality of a radio cell (601, 701) of the first type.

11. A method according to claim 9 or claim 10, **characterized in that** the gathered information is added to the location-related information with respect to the service areas (1104, 1105) of radio cells (601, 701) of the first type that is provided by the storage device of the at least one communication network (902, 1002, 1102, 1202) and/or by the storage device of the mobile terminal (901, 1008, 1101, 1201) or already existent location-related information with respect to the service area (1104, 1105) of radio cells (601, 701) of the first type is adapted in consideration of the gathered information.

12. A method according to one of the claims 7 to 11, **characterized in that** modifications concerning location-related information with respect to the service areas (1104, 1105) of radio cells (601, 701) of the first type are taken into account in an at least partially automatic manner during the evaluation and/or the definition of the time interval.

13. A method according to one of the claims 7 to 12, **characterized in that** at least the location-related information with respect to the service areas (1104, 1105) of radio cells (601, 701) of the first type will be synchronised between the at least one communication network (902, 1002, 1102, 1202) and the mobile terminal (901, 1008, 1101, 1201).

14. A method according to one of the claims 1 to 13, **characterized in that** the information with respect to the local position of the mobile terminal (901, 1008, 1101, 1201) at least comprises information with respect to the current local position of the mobile terminal (901, 1008, 1101, 1201), with respect to the current direction into which the mobile terminal (901, 1008, 1101, 1201) changes the local position thereof, with respect to the current velocity with which the mobile terminal (901, 1008, 1101, 1201) changes the local position thereof and/or past information with respect the local position, the direction and/or the velocity.

15. A mobile terminal (901, 1008, 1101, 1201) for being operated in at least one communication network (902, 1002, 1102, 1202), preferably a mobile radio network, wherein radio cells (601, 701) of a first type and radio cells (1206, 1207) of a second type are formed by the at least one communication network (902, 1002, 1102, 1202), wherein the radio cells (601, 701, 1206, 1207) of the first and the second type are radio cells according to the GSM, UMTS, CDMA2000, LTE mobile radio standard, WLAN or hot spot radio cells,
comprising an evaluation device for evaluating an information item with respect to the local position of the mobile terminal (901, 1008, 1101, 1201) in a service area (1104, 1105) of a radio cell (601, 701) of the first type with respect to the entry of the mobile terminal (901, 1008, 1101, 1201) into the service area (1104, 1105) of a radio cell (601, 701) of the first type, which entry is to be expected within a predefined time interval, **characterized by** a suppression device for suppressing a switching of a connection of the mobile terminal (901, 1008, 1101, 1201) into a radio cell (1206, 1207) of the second type, if, based upon the result of the evaluation, the entry of the mobile terminal (901, 1008, 1101, 1201) into the service area (1104, 1105) of the radio cell (601, 701) of the first type is to be expected within the predefined time interval, wherein the duration of the predefined time interval is shorter than the time interval required for the switching of a connection from a radio cell (601, 701) of the first type to a radio cell (1206, 1207) of the second type.

16. A device in a communication network (902, 1002, 1102, 1202), in particular a network node in a mobile radio network, wherein radio cells (601, 701) of a first type and radio cells (1206, 1207) of a second type are formed by the communication network (902, 1002, 1102, 1202) and/or by at least one other communication network (902, 1002, 1102, 1202), wherein the radio cells (601, 701, 1206, 1207) of the first and the second type are radio cells according to the GSM, UMTS, CDMA2000, LTE mobile radio standard, WLAN or hot spot radio cells, comprising
an evaluation device for evaluating an information item with respect to the local position of the mobile terminal (901, 1008, 1101, 1201) in a service area (1104, 1105) of a radio cell (601, 701) of the first type with respect to the entry of the mobile terminal (901, 1008, 1101, 1201) into the service area (1104, 1105) of a radio cell (601, 701) of the first type, which entry is to be expected within a predefined time interval, **characterized by** a suppression device for suppressing a switching of a connection of the mobile terminal (901, 1008, 1101, 1201) into a radio cell (1206, 1207) of the second type, if, based upon the result of the evaluation, the entry of the mobile terminal (901, 1008, 1101, 1201) into the service area (1104, 1105) of the radio cell (601, 701) of the first type is to be expected within the predefined time interval, wherein the duration of the predefined time interval is shorter than the time interval required for the switching of a connection from a radio cell (601, 701) of the first type to a radio cell (1206, 1207) of the second type.

17. A system comprising at least one device of a communication network (902, 1002, 1102, 1202), in particular a network node in a mobile radio network, and a mobile terminal (901, 1008, 1101, 1201) for being operated in a communication network (902, 1002, 1102, 1202), in particular a mobile radio network, wherein the at least one device of the communication network (902, 1002, 1102, 1202) and the mobile terminal (901, 1008, 1101, 1201) are designed for exchanging information with each other, **characterized in that** the system is configured for carrying out a method according to one of the claims 1 to 14.

## Revendications

1. Procédé de fonctionnement d'un terminal mobile (901, 1008, 1101, 1201) fonctionnant dans au moins un réseau de communication (902, 1002, 1102, 1202) pour changer la connexion dans un réseau de communication (902, 1002, 1102, 1202), dans lequel des cellules radio (601, 701) d'un premier type et des cellules radio (1206, 1207) d'un deuxième type sont formées par l'au moins un réseau de communication (902, 1002, 1102, 1202), les cellules radio (601, 701, 1206, 1207) du premier et du deuxième type étant des cellules radio selon le standard radio mobile GSM, UMTS, CDMA2000 ou LTE, ou des cellules radio Wi-Fi ou hot spot, le procédé comprenant les étapes suivantes de:
- évaluer une information par rapport à la position locale du terminal mobile (901, 1008, 1101, 1201) dans une zone de service (1104, 1105) d'une cellule radio (601, 701) du premier type par rapport à une entrée du terminal mobile (901, 1008, 1101, 1201) dans la zone de service (1104, 1105) d'une cellule radio (601, 701) du premier type, laquelle entrée est à attendre dans un intervalle de temps prédéfini, dans lequel l'évaluation est partiellement effectuée par moyen du terminal mobile (901, 1008, 1101, 1201) et partiellement par moyen du réseau de communication (902, 1002, 1102, 1202);
**caractérisé par**
- la suppression d'un changement de connexion du terminal mobile (901, 1008, 1101, 1201) vers une cellule radio (1206, 1207) du deuxième type, si, sur la base du résultat de l'évaluation, l'entrée du terminal mobile (901, 1008, 1101, 1201) dans la zone de service (1104, 1105) de la cellule radio (601, 701) du premier type est à attendre dans l'intervalle de temps prédéfini, dans lequel la suppression est effectuée par le terminal mobile (901, 1008, 1101, 1201) ou par un dispositif de réseau de communication (902, 1002, 1102, 1202), la durée de l'intervalle de temps prédéfini étant plus courte que l'intervalle de temps nécessaire pour le changement de connexion d'une cellule radio (601, 701) du premier type vers une cellule radio (1206, 1207) du deuxième type.

2. Procédé selon la revendication 1, **caractérisé en ce que** la suppression du changement de connexion vers une cellule radio (1206, 1207) du deuxième type est initiée par le terminal mobile (901, 1008, 1101, 1201).

3. Procédé selon la revendication 1 ou la revendication 2, **caractérisé en ce que** la durée de l'intervalle de temps prédéfini est comprise entre 10 et 30 secondes, entre 5 et 40 secondes ou entre 1 et 60 secondes.

4. Procédé selon l'une des revendications 1 à 3, **caractérisé en ce que** dans le cadre de l'évaluation une valeur de probabilité par rapport à l'entrée dans la zone de service (1104, 1105) d'une cellule radio (601, 701) du premier type est déterminée, la valeur de probabilité déterminée est soumise à une comparaison avec une valeur limite prédéfinie et en cas d'un dépassement de la valeur limite, un changement de connexion vers une cellule radio (1206, 1207) du deuxième type sera supprimé, de sorte que le terminal mobile (901, 1008, 1101, 1201) peut établir une connexion à une cellule radio (601, 701) du premier type pendant l'intervalle de temps prédéfini.

5. Procédé selon l'une des revendications 1 à 4, **caractérisé en ce que** la suppression d'un changement de connexion vers une cellule radio (1206, 1207) du deuxième type est effectuée pour un autre intervalle de temps prédéfini.

6. Procédé selon l'une des revendications 1 à 5, **caractérisé en ce qu'**une connexion de données dans une cellule radio (601, 701) du premier type fournit une plus grande largeur de bande qu'une connexion de donnés dans une cellule radio (1206, 1207) du deuxième type.

7. Procédé selon l'une des revendications 1 à 6, **caractérisé en ce que** l'évaluation est effectuée en utilisant des informations spécifiques au lieu par rapport aux zones de service (1104, 1105) de cellules radio (601, 701) du premier type, les informations spécifiques au lieu par rapport aux zones de service (1104, 1105) de cellules radio (601, 701) du premier type comprenant des informations par rapport à des cellules radio (601, 701) du premier type qui sont spécifiques au lieu et adjacentes à la limite cellulaire.

8. Procédé selon la revendication 7, **caractérisé en ce que** les informations spécifiques au lieu par rapport aux zones de service (1104, 1105) de cellules radio (601, 701) du premier type sont au moins partiellement mises à disposition par un dispositif de stockage de l'au moins un réseau de communication (902, 1002, 1102, 1202) et par un dispositif de stockage du terminal mobile (901, 1008, 1101, 1201).

9. Procédé selon la revendication 7 ou la revendication 8, **caractérisé en ce que** des informations attribuées à une zone de séjour d'un terminal mobile (901, 1008, 1101, 1201) par rapport à une entrée dans la zone de service (1104, 1105) d'une cellule radio (601, 701) du premier type sont saisies par le terminal mobile (901, 1008, 1101, 1201) et par l'au moins un réseau de communication (902, 1002, 1102, 1202) comme d'autres informations spécifiques au lieu par rapport aux zones de service (1104, 1105) de cellules radio (601, 701) du premier type.

10. Procédé selon la revendication 9, **caractérisé en ce que** les informations saisies comprennent des informations attribuées à une zone de séjour par rapport à la qualité de signal d'une cellule radio (601, 701) du premier type.

11. Procédé selon la revendication 9 ou la revendication 10, **caractérisé en ce que** les informations saisies sont ajoutées aux informations spécifiques au lieu par rapport aux zones de service (1104, 1105) de cellules radio (601, 701) du premier type, qui sont fournies par le dispositif de stockage de l'au moins un réseau de communication (902, 1002, 1102, 1202) et/ou par le dispositif de stockage du terminal mobile (901, 1008, 1101, 1201) ou des informations spécifiques au lieu par rapport aux zones de service (1104, 1105) de cellules radio (601, 701) du premier type, qui sont déjà existantes, sont adaptées en tenant compte des informations saisies.

12. Procédé selon l'une des revendications 7 à 11, **caractérisé en ce que** des modifications concernant des informations spécifiques au lieu par rapport aux zones de service (1104, 1105) de cellules radio (601, 701) du premier type sont considérées de manière au moins partiellement automatique pendant l'évaluation et/ou pendant la définition de l'intervalle de temps.

13. Procédé selon l'une des revendications 7 à 12, **caractérisé en ce qu'**au moins les informations spécifiques au lieu par rapport aux zones de service (1104, 1105) de cellules radio (601, 701) du premier type sont synchronisées entre l'au moins un réseau de communication (902, 1002, 1102, 1202) et le terminal mobile (901, 1008, 1101, 1201).

14. Procédé selon l'une des revendications 1 à 13, **caractérisé en ce que** les informations par rapport à la position locale du terminal mobile (901, 1008, 1101, 1201) comprennent au moins des informations par rapport à la position locale actuelle du terminal mobile (901, 1008, 1101, 1201), par rapport à la direction actuelle, dans laquelle le terminal mobile (901, 1008, 1101, 1201) change sa position locale, par rapport à la vélocité actuelle, avec laquelle le terminal mobile (901, 1008, 1101, 1201) change sa position locale et/ou des informations précédentes temporellement par rapport à la position locale, à la direction et/ou à la vélocité.

15. Terminal mobile (901, 1008, 1101, 1201) fonctionnant dans au moins un réseau de communication (902, 1002, 1102, 1202), de préférence un réseau radio mobile, dans lequel des cellules radio (601, 701) d'un premier type et des cellules radio (1206, 1207) d'un deuxième type sont formées par l'au moins un réseau de communication (902, 1002, 1102, 1202), les cellules radio (601, 701, 1206, 1207) du premier et du deuxième type étant des cellules radio selon le standard radio mobile GSM, UMTS, CDMA2000 ou LTE, ou des cellules radio Wi-Fi ou hot spot,
comprenant un dispositif d'évaluation pour évaluer une information par rapport à la position locale du terminal mobile (901, 1008, 1101, 1201) dans une zone de service (1104, 1105) d'une cellule radio (601, 701) du premier type par rapport à une entrée du terminal mobile (901, 1008, 1101, 1201) dans la zone de service (1104, 1105) d'une cellule radio (601, 701) du premier type, laquelle entrée est à attendre dans un intervalle de temps prédéfini, **caractérisé par**
un dispositif de suppression pour supprimer un changement de connexion du terminal mobile (901, 1008, 1101, 1201) vers une cellule radio (1206, 1207) du deuxième type, si, sur la base du résultat de l'évaluation, l'entrée du terminal mobile (901, 1008, 1101, 1201) dans la zone de service (1104, 1105) de la cellule radio (601, 701) du premier type est à attendre dans l'intervalle de temps prédéfini, la durée de l'intervalle de temps prédéfini étant plus courte que l'intervalle de temps nécessaire pour le changement de connexion d'une cellule radio (601, 701) du premier type vers une cellule radio (1206, 1207) du deuxième type.

16. Dispositif dans un réseau de communication (902, 1002, 1102, 1202), notamment un noeud de réseau dans un réseau radio mobile, dans lequel des cellules radio (601, 701) d'un premier type et des cellules radio (1206, 1207) d'un deuxième type sont formées par le réseau de communication (902, 1002, 1102, 1202) et/ou par au moins un autre réseau de communication (902, 1002, 1102, 1202), les cellules radio (601, 701, 1206, 1207) du premier et du deuxième type étant des cellules radio selon le standard radio mobile GSM, UMTS, CDMA2000 ou LTE, ou des cellules radio Wi-Fi ou hot spot, comprenant
un dispositif d'évaluation pour évaluer une information par rapport à la position locale du terminal mobile (901, 1008, 1101, 1201) dans une zone de service (1104, 1105) d'une cellule radio (601, 701) du premier type par rapport à une entrée du terminal mobile (901, 1008, 1101, 1201) dans la zone de service (1104, 1105) d'une cellule radio (601, 701) du premier type, laquelle entrée est à attendre dans un intervalle de temps prédéfini, **caractérisé par**
un dispositif de suppression pour supprimer un changement de connexion du terminal mobile (901, 1008, 1101, 1201) vers une cellule radio (1206, 1207) du deuxième type, si, sur la base du résultat de l'évaluation, l'entrée du terminal mobile (901, 1008, 1101, 1201) dans la zone de service (1104, 1105) de la cellule radio (601, 701) du premier type est à attendre dans l'intervalle de temps prédéfini, la durée de l'intervalle de temps prédéfini étant plus courte que l'intervalle de temps nécessaire pour le changement de connexion d'une cellule radio (601, 701) du premier type vers une cellule radio (1206, 1207) du deuxième type.

17. Système comprenant au moins un dispositif d'un réseau de communication (902, 1002, 1102, 1202), notamment un noeud de réseau d'un réseau radio mobile, et un terminal mobile (901, 1008, 1101, 1201) fonctionnant dans un réseau de communication (902, 1002, 1102, 1202), notamment dans un réseau radio mobile, dans lequel l'au moins un dispositif du réseau de communication (902, 1002, 1102, 1202) et le terminal mobile (901, 1008, 1101, 1201) sont configurés pour échanger des informations entre eux, **caractérisé en ce que** le système est configuré pour effectuer un procédé selon l'une des revendications 1 à 14.
